# EUROPÄISCHE PATENTANMELDUNG

(11) **EP 2 232 995 A1**
(43) Veröffentlichungstag der Anmeldung: **29.09.2010**
(21) Anmeldenummer: 09156103.5
(22) Anmeldetag: 25.03.2009
(51) Int. Cl.: A01N 43/40, A01N 43/78, A01P 7/04, A01P 21/00

(54) **Verfahren zur verbesserten Nutzung des Produktionspotentials transgener Pflanzen**

(71) Anmelder: Bayer CropScience AG, 40789 Monheim (DE)
(72) Erfinder: Jeschke, Peter, Dr., 51467 Bergisch Gladbach (DE); Velten, Robert, Dr., 40764 Langenfeld (DE); Hungenberg, Heike, 40764 Langenfeld (DE); Thielert, Wolfgang, Dr., 51519 Odenthal (DE)

(57) **Zusammenfassung**

Die Erfindung betrifft ein Verfahren zur Verbesserung der Nutzung des Produktionspotentials einer transgenen Pflanze, in dem die Pflanze mit einer wirksamen Menge mindestens einer Enaminocarbonylverbindung der Formel (I) 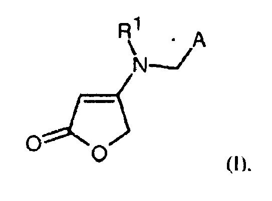 worin
R¹ und A die in der Beschreibung angegebenen Bedeutungen haben,
behandelt wird.

## Beschreibung

Die Erfindung betrifft ein Verfahren zur Verbesserung der Nutzung des Produktionspotentials transgener Pflanzen durch die Bekämpfung von Schädlingen und/oder die Verbesserung der Pflanzengesundheit und/oder die Verbesserung der abiotischen Stressresistenz dadurch, dass man transgene Pflanzen mit mindestens einer Enaminocarbonylverbindung behandelt.

Der Anteil transgener Pflanzen in der Landwirtschaft ist in den letzten Jahren deutlich gestiegen, wenn auch regionale Unterschiede derzeit noch erkennbar sind. So hat sich beispielsweise der Anteil an transgenem Mais in den USA seit 2001 von 26% auf 52% verdoppelt, während transgener Mais in Deutschland bisher kaum eine praktische Rolle gespielt hat. In anderen europäischen Ländern, beispielsweise in Spanien, liegt der Anteil an transgenem Mais aber bereits bei etwa 12%.

Transgene Pflanzen werden vor allem eingesetzt, um das Produktionspotential der jeweiligen Pflanzensorte bei möglichst geringem Einsatz von Produktionsmitteln möglichst günstig zu nutzen. Die genetische Veränderung der Pflanzen zielt dazu vor allem darauf ab, in den Pflanzen eine Resistenz gegen bestimmte Schädlinge oder Schadorganismen, phytopathogene Pilze und/oder Mikroorganismen oder aber auch Herbizide sowie gegen abiotischen Stress (beispielsweise Dürre, Hitze oder erhöhte Salzgehalte) zu erzeugen. Ebenso kann eine Pflanze genetisch modifiziert werden, um bestimmte Qualitäts- oder Produktmerkmale, wie z.B. den Gehalt an ausgewählten Vitaminen oder Ölen, zu erhöhen oder bestimmte Fasereigenschaften zu verbessern.

Eine Herbizidresistenz bzw. -toleranz kann beispielsweise durch den Einbau von Genen in die Nutzpflanze zur Expression von Enzymen zur Detoxifikation bestimmter Herbizide erreicht werden, so dass diese Pflanzen selbst in Gegenwart dieser Herbizide zur Bekämpfung von Unkräutern und Ungräsern möglichst ungehindert wachsen können. Als Beispiele seien Baumwoll-Sorten bzw. MaisSorten genannt, die den herbiziden Wirkstoff Glyphosate (Roundup^{®}), (Roundup Ready^{®}, Monsanto) oder die Herbizide Glufosinate (LibertyLink^{®}) oder Oxynil tolerieren.

In jüngerer Zeit wurden zudem Nutzpflanzen entwickelt, die zwei oder mehrere genetische Veränderungen enthalten ("stacked transgenic plants" oder mehrfach-transgene Kulturen). So hat beispielsweise die Firma Monsanto mehrfach-transgene Maissorten entwickelt, die gegen den Maiszünsler (*Ostrinia nubilalis*) und den Western corn rootworm (*Diabrotica virgifera*) resistent sind. Ebenso sind Mais- oder Baumwollkulturen bekannt, die sowohl gegen den Western corn rootworm bzw. den Baumwollkapselwurm resistent sind als auch das Herbizid Roundup^{®} tolerieren.

Es hat sich nunmehr gezeigt, dass sich die Nutzung des Produktionspotentials transgener Nutzpflanzen noch weiter dadurch verbessern läßt, dass man Schädlinge bekämpft und/oder die Pflanzengesundheit erhöht, und zwar dadurch, dass man eine transgene Pflanzen mit einer wirksamen Menge mindestens einer Verbindung der Formel (I) 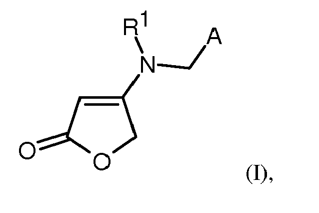 in welcher
- A: für Pyrid-2-yl oder Pyrid-4-yl steht oder für Pyrid-3-yl, welches gegebenenfalls in 6-Position substituiert ist durch Fluor, Chlor, Brom, Methyl, Trifluormethyl oder Trifluormethoxy oder für Pyridazin-3-yl, welches gegebenenfalls in 6-Position substituiert ist durch Chlor oder Methyl oder für Pyrazin-3-yl oder für 2-Chlor-pyrazin-5-yl oder für 1,3-Thiazol-5-yl, welches gegebenenfalls in 2-Position substituiert ist durch Chlor oder Methyl, oder
- A: für einen Rest Pyrimidinyl, Pyrazolyl, Thiophenyl, Oxazolyl, Isoxazolyl, 1,2,4-Oxadiazolyl, Isothiazolyl, 1,2,4-Triazolyl oder 1,2,5-Thiadiazolyl steht, welcher gegebenenfalls durch Fluor, Chlor, Brom, Cyano, Nitro, C₁-C₄-Alkyl (welches gegebenenfalls durch Fluor und/oder Chlor substituiert ist), C₁-C₃-Alkylthio (welches gegebenenfalls durch Fluor und/oder Chlor substituiert ist), oder C₁-C₃-Alkylsulfonyl (welches gegebenenfalls durch Fluor und/oder Chlor substituiert ist), substituiert ist,
oder
- A: für einen Rest 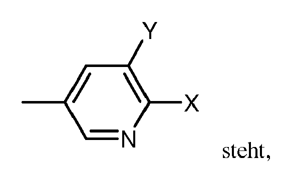 in welchem
X für Halogen, Alkyl oder Halogenalkyl steht
Y für Halogen, Alkyl, Halogenalkyl, Halogenalkoxy, Azido oder Cyan steht und
- R¹: für Alkyl, Halogenalkyl, Alkenyl, Halogenalkenyl, Alkinyl, Cycloalkyl, Cycloalkylalkyl, Halogencycloalkyl, Alkoxy, Alkoxyalkyl, oder Halogencycloalkylalkyl steht,
behandelt.

Gegenstand der vorliegenden Erfindung ist auch ein Verfahren zur Verbesserung der Nutzung des Produktionspotentials transgener Pflanzen durch Behandlung der transgenen Pflanze mit mindestens einer Verbindung der Formel (I), wobei die transgene Pflanze
a) aus der Reihe der in Tabelle A: A-1 bis A-133 aufgelisteten Pflanzen stammt oder
b) aus der Reihe der in Tabelle B: B-1 bis B-85 aufgelisteten Pflanzen stammt oder
c) aus der Reihe der in Tabelle E: E-1 bis E-50 aufgelisteten Pflanzen stammt oder
d) ein oder mehrere transgene Event(s) aus der Reihe der in Tabelle A von A-1 bis A-133 oder Tabelle B von B-1 bis B-85 oder Tabelle D von D-1 bis D-48 aufgelisteten transgenen Events umfasst oder
e) ein Merkmal, das auf einem oder mehreren transgenen Event(s) wie in Tabelle C von C-1 bis C-12 aufgelistet basiert, umfasst.

Im Folgenden sind bevorzugte Untergruppen für die Verbindungen der oben erwähnten Formel (I) aufgeführt. In einer bevorzugten Ausführungsform der Erfindung steht
- A: für den Rest 6-Fluor-pyrid-3-yl, 6-Chlor-pyrid-3-yl, 6-Brom-pyrid-3-yl, 6-Chlor-1,4-pyridazin-3-yl, 2-Chlor-1,3-thiazol-5-yl, 2-Chlor-pyrimidin-5-yl, 5-Fluor-6-chlor-pyrid-3-yl, 5,6-Dichlor-pyrid-3-yl, 5-Brom-6-chlor-pyrid-3-yl, 5-Fluor-6-brom-pyrid-3-yl, 5-Chlor-6-brom-pyrid-3-yl, 5,6-Dibrom-pyrid-3-yl, 5-Methyl-6-chlor-pyrid-3-yl, 5-Chlor-6-iod-pyrid-3-yl oder 5-Difluormethyl-6-chlor-pyrid-3-yl und
- R¹: für Methyl, Methoxy, Ethyl, Propyl, Vinyl, Allyl, Propargyl, Cyclopropyl, 2-Fluor-ethyl, 2,2-Difluor-ethyl oder 2-Fluor-cyclopropyl.

In einer besonders bevorzugten Ausführungsform der Erfindung steht
- A: für den Rest 6-Fluor-pyrid-3-yl, 6-Chlor-pyrid-3-yl, 6-Brom-pyrid-3-yl, 5-Fluor-6-chlor-pyrid-3-yl, 2-Chlor-1,3-thiazol-5-yl oder 5,6-Dichlor-pyrid-3-yl und
- R¹: für Methyl, Cyclopropyl, Methoxy, 2-Fluorethyl oder 2,2-Difluor-ethyl.

In einer ganz besonders bevorzugten Ausführungsform der Erfindung ist die Verbindung der Formel (I) ausgewählt aus der Gruppe bestehend aus den Verbindungen der Formeln (I-1), (I-2), (I-3), (I-4), (I-s), (I-6), (I-7), (I-8), (I-9) und (I-10):
- Verbindung (I-1), 4-{[(6-Brompyrid-3-yl)methyl](2-fluorethyl)amino}furan-2(5H)-on, besitzt die Formel 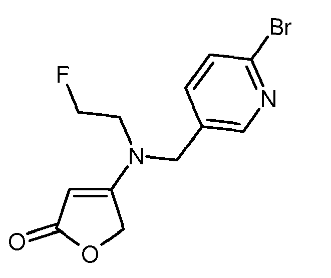 und ist bekannt aus der internationalen Patentanmeldung WO 2007/115644.
- Verbindung (I-2), 4-{[(6-Fluorpyrid-3-yl)methyl](2,2-difluorethyl)amino}furan 2(5H)-on, besitzt die Formel 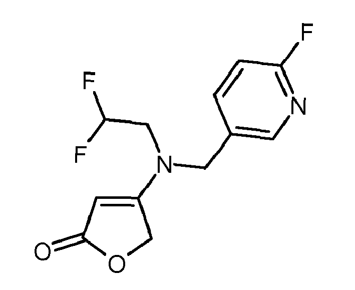 und ist bekannt aus der internationalen Patentanmeldung WO 2007/115644.
- Verbindung (I-3), 4-{[(2-Chlor-1,3-thiazol-5-yl)methyl](2-fluorethyl)amino}furan-2(5H)-on, besitzt die Formel 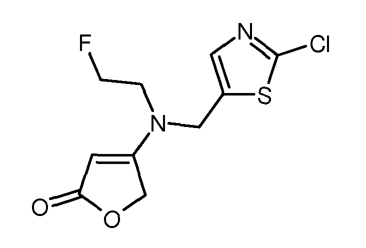 und ist bekannt aus der internationalen Patentanmeldung WO 2007/115644.
- Verbindung (I-4), 4-{[(6-Chlorpyrid-3-yl)methyl](2-fluorethyl)amino}furan-2(5H)-on, besitzt die Formel 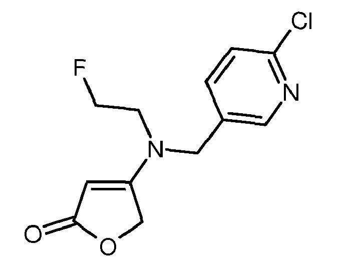 und ist bekannt aus der internationalen Patentanmeldung WO 2007/115644.
- Verbindung (I-5), 4-{[(6-Chlorpyrid-3-yl)methyl](2,2-difluorethyl)amino}furan 2(5H)-on, besitzt die Formel 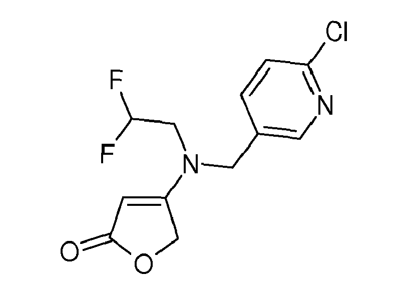 und ist bekannt aus der internationalen Patentanmeldung WO 2007/115644.
- Verbindung (I-6), 4-{[(6-Chlor-5-fluorpyrid-3-yl)methyl](methyl)amino}furan-2(5H)-on, besitzt die Formel 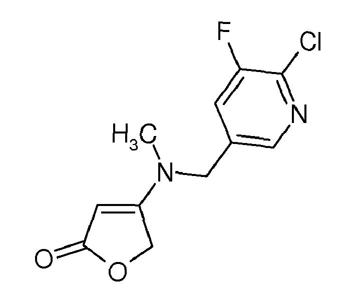 und ist bekannt aus der internationalen Patentanmeldung WO 2007/115643.
- Verbindung (I-7), 4-{[(5,6-Dichlorpyrid-3-yl)methyl](2-fluorethyl)amino}furan-2(5H)-on, besitzt die Formel 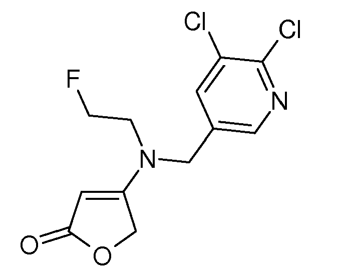 und ist bekannt aus der internationalen Patentanmeldung WO 2007/115646.
- Verbindung (I-8), 4-{[(6-Chlor-5-fluorpyrid-3-yl)methyl](cyclopropyl)amino}furan-2(5H)-on, besitzt die Formel 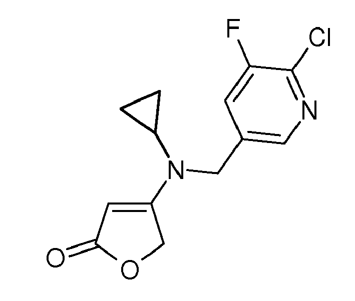 und ist bekannt aus der internationalen Patentanmeldung WO 2007/115643.
- Verbindung (I-9), 4-{[(6-Chlorpyrid-3-yl)methyl](cyclopropyl)amino}furan-2(5H)-on, besitzt die Formel 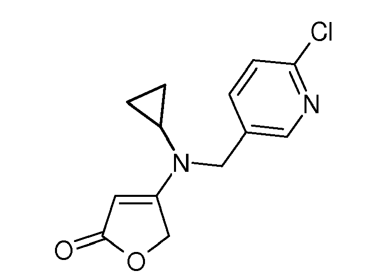 und ist bekannt aus EP 0 539 588.
- Verbindung (I-10), 4-{[(6-Chlorpyrid-3-yl)methyl](methyl)amino}furan-2(5H)-on, besitzt die Formel 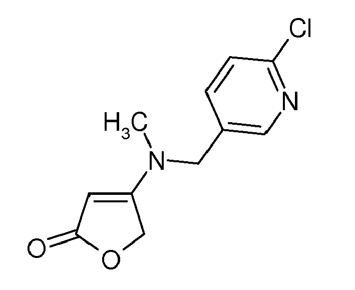 und ist bekannt aus EP 0 539 588.

In der am meisten bevorzugten Ausführungsform ist die Verbindung der Formel (I) die Verbindung der Formel (I-5).

Dabei schließt der Begriff "Behandlung" alle Maßnahmen ein, die zu einem Kontakt zwischen diesem Wirkstoff und mindestens einem Pflanzenteil führen. Unter "Pflanzenteilen" sollen alle oberirdischen und unterirdischen Teile und Organe der Pflanzen, wie Sproß, Blatt, Blüte und Wurzel verstanden werden, wobei beispielhaft Blätter, Nadeln, Stengel, Stämme, Blüten, Fruchtkörper, Früchte und Saatgut sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Saatgut.

Erfindungsgemäß steht der Ausdruck "Pathogen" für alle Organismen, die Schäden an Pflanzen oder einem beliebigen Pflanzenteil verursachen.

Erfindungsgemäß umfaßt der Ausdruck "Pestizid" Insektizide und/oder Acarizide und/oder Nematizide und/oder Fungizide und/oder Herbizide und/oder Bakterizide und/oder antivirale Agentien, insbesondere Insektizide und/oder Nematizide und/oder Acarizide und/oder Fungizide.

Erfindungsgemäß steht der Ausdruck "Schädlinge" für alle Aschelminthes- und Panarthropoda-Organismen, die Schäden an Pflanzen oder einem beliebigen Pflanzenteil verursachen. Beispiele sind Nematoda, Arthopoda, Hexapoda und Arachnida.

Erfindungsgemäß steht der Ausdruck "insektizid" für die Aktivität einer Verbindung bei der Bekämpfung von unerwünschten Insekten, Acari oder Nematoden, oder bei der Verringerung des Schadens von Pflanzen oder Pflanzenteilen durch Schädlinge.

Erfindungsgemäß steht der Ausdruck "Pilze" für alle pilzlichen Organismen und Chromista-Organismen.

Erfindungsgemäß steht der Ausdruck "phytopathogene Pilze" für alle pilzlichen Organismen und Chromista-Organismen, die Schäden an Pflanzen oder einem beliebigen Pflanzenteil verursachen. Beispiele für pilzliche taxonomische Gruppen sind Ascomycota, Basidiomycota, Chytridiomycota, Deuteromycota, Glomeromycota, Microsporidia, Zygomycota, sowie anamorphe Pilze. Beispiele für Chromista sind Oomycota.

Erfindungsgemäß steht der Ausdruck "Mikroorganismen" für alle bakteriellen Organismen und Protozoa-Organismen. Beispiele sind Plasmodiophoromycetes.

Erfindungsgemäß steht der Ausdruck "Viren" für alle Viren, die Schäden an Pflanzen oder einem beliebigen Pflanzenteil verursachen. Beispiele sind DNA-Viren, RNA-Viren und DNA und RNA reverstranskribierende Viren sowie subvirale Agentien.

Erfindungsgemäß können alle Pflanzen und Pflanzenteile behandelt werden. Unter Pflanzen versteht man alle Pflanzen und Pflanzenpopulationen wie erwünschte und unerwünschte wilde Pflanzen, Sorten und Pflanzenvarietäten (egal, ob diese durch Pflanzensortenschutzrechte oder Pflanzenzüchterrecht geschützt werden können oder nicht). Sorten und Pflanzenvarietäten können Pflanzen sein, die mit traditionellen Vermehrungs- und Züchtungsmethoden erhalten werden, welche durch eine oder mehrere biotechnologische Methoden, wie zum Beispiel die Verwendung von Doppelhaploiden, Protoplastenfusion, zufälliger und gerichteter Mutagenese, molekularen oder genetischen Markern, oder durch Bioengineering-Methoden und gentechnische Methoden oder markerunterstützte Züchtungsmethoden, zum Beispiel SMART-Züchtung ("Selection with Markers and Advanced Reproductive Technologies") unterstützt oder ergänzt werden können. Unter Pflanzenteilen versteht man alle oberirdischen und unterirdischen Teile und Organe der Pflanzen wie Sproß, Blatt, Blüte und Wurzel, wobei beispielhaft Blätter, Nadeln, Stängel, Stämme, Blüten, Fruchtkörper, Früchte und Saatgut sowie Wurzeln, Knollen und Rhizome aufgeführt werden. Erntegut und vegetatives und generatives Vermehrungsmaterial, zum Beispiel Stecklinge, Knollen, Rhizome, Ableger und Saatgut, zählen ebenfalls zu den Pflanzenteilen.

Unter den Pflanzen, die nach dem erfindungsgemäßen Verfahren geschützt werden können, sind zu nennen: Hauptfeldfruchtarten wie Mais, Sojabohne, Baumwolle, Brassica-Ölsaaten wie *Brassica napus* (z.B. Canola), *Brassica rapa, B. juncea* (z.B. Senf) und *Brassica carinata,* Reis, Weizen, Zuckerrübe, Zuckerrohr, Hafer, Roggen, Gerste, Hirse, Triticale, Flax, Rebe; *Solanaceae sp.* (zum Beispiel Tomaten, Kartoffeln, Paprika, Aubergine), *Liliaceae sp., Compositiae sp.* (zum Beispiel Salat, Artichoke und Cichorum - darunter Wurzel Cichorie, Endivie oder Gemeine Wegwarte), *Umbelliferae sp.* (zum Beispiel Karotte, Petersilie, Stauden- und Wurzelsellerie), *Cucurbitaceae sp.* (zum Beispiel Gurke - darunter Einlegegurke, Sommerkürbis, Wassermelone, Kürbisse und Melonen), *Alliaceae sp.* (zum Beispiel Zwiebel und Lauch), *Cruciferae sp.* (zum Beispiel Weißkohl, Rotkohl, Brokkoli, Blumenkohl, Rosenkohl, Pakchoi, Kohlrabi, Radieschen/Rettich, Meerrettich, Kresse, Chinakohl), *Leguminosae sp.* (zum Beispiel Erdnüsse, Erbsen und Bohnen - wie Stangenbohnen und Dicke Bohnen), *Chenopodiaceae sp.* (zum Beispiel Mangold, Beißkohl, Spinat, Rote Rüben), *Malvaceae* (zum Beispiel Okra), *Asparagaceae* (zum Beispiel Spargel); sowie genetisch modifizierte Homologe dieser Kulturpflanzen. Besonders bevorzugt handelt es sich bei der transgenen Pflanze, die mit dem erfindungsgemäßen Verfahren behandelt wird, um eine Gemüse-, Mais-, Soja-, Baumwoll-, Tabak-, Reis-, Zuckerrüben-, Raps- oder Kartoffelpflanze.

Das erfindungsgemäße Behandlungsverfahren kann bei der Behandlung von genetisch modifizierten Organismen (GMOs), z.B. Pflanzen oder Samen, verwendet werden. Bei genetisch modifizierten Pflanzen (oder transgenen Pflanzen) handelt es sich um Pflanzen, bei denen ein heterologes Gen stabil in das Genom eingebaut wurde. Der Ausdruck "heterologes Gen" bedeutet im wesentlichen ein Gen, das außerhalb der Pflanze bereitgestellt oder assembliert wird und das, wenn es in das Zellkerngenom, das Chloroplastengenom oder das Mitochondriengenom eingeführt wird, der transformierten Pflanze neue oder verbesserte agronomische oder sonstige Merkmale verleiht, und zwar dadurch, dass es ein Protein oder Polypeptid von Interesse exprimiert oder dass es ein anderes Gen, das in der Pflanze vorliegt, bzw. andere Gene, die in der Pflanze vorliegen, herunterreguliert oder abschaltet (zum Beispiel mittels Antisense-Technologie, Cosuppressionstechnologie oder RNA-Interferenz-Technologie (RNAi-Technologie)). Ein heterologes Gen, das sich in dem Genom befindet, wird auch als Transgen bezeichnet. Ein Transgen, das durch seine bestimmte Lage in dem Pflanzengenom definiert ist, wird Transformations-Event oder transgenes Event genannt.

In Abhängigkeit von den Pflanzenarten oder Pflanzensorten, ihrem Standort und ihren Wachstumsbedingungen (Böden, Klima, Vegetationsperiode, Ernährung) kann die erfindungsgemäße Behandlung auch zu überadditiven ("synergistischen") Effekten führen. So sind zum Beispiel die folgenden Effekte möglich, die über die eigentlich zu erwartenden Effekte hinausgehen: verringerte Aufwandmengen und/oder erweitertes Wirkungsspektrum und/oder erhöhte Wirksamkeit der Wirkstoffe und Zusammensetzungen, die erfindungsgemäß eingesetzt werden können, besseres Pflanzenwachstum, erhöhte Toleranz gegenüber hohen oder niedrigen Temperaturen, erhöhte Toleranz gegenüber Trockenheit oder Wasser- oder Bodensalzgehalt, erhöhte Blühleistung, Ernteerleichterung, Reifebeschleunigung, höhere Erträge, größere Früchte, größere Pflanzenhöhe, intensivere grüne Farbe des Blatts, frühere Blüte, höhere Qualität und/oder höherer Nährwert der Ernteprodukte, höhere Zuckerkonzentration in den Früchten, bessere Lagerfähigkeit und/oder Verarbeitbarkeit der Ernteprodukte.

In gewissen Aufwandmengen können die erfindungsgemäßen Wirkstoffkombinationen auch eine stärkende Wirkung auf Pflanzen ausüben. Gegenstand der vorliegenden Erfindung ist somit auch ein Verfahren zur Verbesserung der Pflanzengesundheit, indem man die oben definierten transgenen Pflanzen mit Verbindungen der Formel (I) behandelt. Gegenstand der vorliegenden Erfindung ist auch ein Verfahren zur Verbesserung der abiotischen Stressresistenz, indem man die oben definierten transgenen Pflanzen mit Verbindungen der Formel (I) behandelt. Die erfindungsgemäßen Wirkstoffkombinationen eignen sich daher für die Mobilisierung des pflanzlichen Abwehrsystems gegen Angriff durch unerwünschte Mikroorganismen. Dies kann gegebenenfalls einer der Gründe für die erhöhte Wirksamkeit der erfindungsgemäßen Kombinationen sein, zum Beispiel gegen Pilze. Pflanzenstärkende (resistenzinduzierende) Substanzen sollen im vorliegenden Zusammenhang auch solche Substanzen oder Substanzkombinationen bedeuten, die fähig sind, das pflanzliche Abwehrsystem so zu stimulieren, dass die behandelten Pflanzen, wenn sie im Anschluß daran mit unerwünschten Mikroorganismen inokkuliert werden, einen beträchtlichen Resistenzgrad gegen diese Mikroorganismen aufweisen. Im vorliegenden Fall versteht man unter unerwünschten Mikroorganismen phytopathogene Pilze, Bakterien und Viren. Die erfindungsgemäßen Substanzen lassen sich daher zum Schutz von Pflanzen gegen Angriff durch die oben erwähnten Pathogene innerhalb eines gewissen Zeitraums nach der Behandlung einsetzen. Der Zeitraum, über den eine Schutzwirkung erzielt wird, erstreckt sich im allgemeinen von 1 bis 10 Tagen, vorzugsweise 1 bis 7 Tagen, nach der Behandlung der Pflanzen mit den Wirkstoffen.

Zu Pflanzen und Pflanzensorten, die vorzugsweise erfindungsgemäß behandelt werden, zählen alle Pflanzen, die über Erbgut verfügen, das diesen Pflanzen besonders vorteilhafte, nützliche Merkmale verleiht (egal, ob dies durch Züchtung und/oder Biotechnologie erzielt wurde).

Pflanzen und Pflanzensorten, die ebenfalls vorzugsweise erfindungsgemäß behandelt werden, sind gegen einen oder mehrere biotische Streßfaktoren resistent, d. h. diese Pflanzen weisen eine verbesserte Abwehr gegen tierische und mikrobielle Schädlinge wie Nematoden, Insekten, Milben, phytopathogene Pilze, Bakterien, Viren und/oder Viroide auf.

Pflanzen und Pflanzensorten, die ebenfalls erfindungsgemäß behandelt werden können, sind solche Pflanzen, die gegen einen oder mehrere abiotische Streßfaktoren resistent sind. Zu den abiotischen Streßbedingungen können zum Beispiel Dürre, Kälte- und Hitzebedingungen, osmotischer Streß, Staunässe, erhöhter Bodensalzgehalt, erhöhtes Ausgesetztsein an Mineralien, Ozonbedingungen, Starklichtbedingungen, beschränkte Verfügbarkeit von Stickstoffnährstoffen, beschränkte Verfügbarkeit von Phosphornährstoffen oder Vermeidung von Schatten zählen.

Pflanzen und Pflanzensorten, die ebenfalls erfindungsgemäß behandelt werden können, sind solche Pflanzen, die durch erhöhte Ertragseigenschaften gekennzeichnet sind. Ein erhöhter Ertrag kann bei diesen Pflanzen z. B. auf verbesserter Pflanzenphysiologie, verbessertem Pflanzenwuchs und verbesserter Pflanzenentwicklung, wie Wasserverwertungseffizienz, Wasserhalteeffizienz, verbesserter Stickstoffverwertung, erhöhter Kohlenstoffassimilation, verbesserter Photosynthese, verstärkter Keimkraft und beschleunigter Abreife beruhen. Der Ertrag kann weiterhin durch eine verbesserte Pflanzenarchitektur (unter Streß- und nicht-Streß-Bedingungen) beeinflußt werden, darunter frühe Blüte, Kontrolle der Blüte für die Produktion von Hybridsaatgut, Keimpflanzenwüchsigkeit, Pflanzengröße, Internodienzahl und -abstand, Wurzelwachstum, Samengröße, Fruchtgröße, Schotengröße, Schoten- oder Ährenzahl, Anzahl der Samen pro Schote oder Ähre, Samenmasse, verstärkte Samenfüllung, verringerter Samenausfall, verringertes Schotenplatzen sowie Standfestigkeit. Zu weiteren Ertragsmerkmalen zählen Samenzusammensetzung wie Kohlenhydratgehalt, Proteingehalt, Ölgehalt und Ölzusammensetzung, Nährwert, Verringerung der nährwidrigen Verbindungen, verbesserte Verarbeitbarkeit und verbesserte Lagerfähigkeit.

Beispiele für Pflanzen mit den obengenannten Merkmalen sind in Tabelle A, B, D und E aufgelistet, die jedoch nicht allumfassend sind.

Pflanzen, die erfindungsgemäß behandelt werden können, sind Hybridpflanzen, die bereits die Eigenschaften der Heterosis bzw. des Hybrideffekts exprimieren, was im allgemeinen zu höherem Ertrag, höherer Wüchsigkeit, besserer Gesundheit und besserer Resistenz gegen biotische und abiotische Streßfaktoren führt. Solche Pflanzen werden typischerweise dadurch erzeugt, dass man eine ingezüchtete pollensterile Elternlinie (den weiblichen Kreuzungspartner) mit einer anderen ingezüchteten pollenfertilen Elternlinie (dem männlichen Kreuzungspartner) kreuzt. Das Hybridsaatgut wird typischerweise von den pollensterilen Pflanzen geerntet und an Vermehrer verkauft. Pollensterile Pflanzen können manchmal (z. B. beim Mais) durch Entfahnen, d. h. mechanisches Entfernen der männlichen Geschlechtsorgane (bzw. der männlichen Blüten), produziert werden; es ist jedoch üblicher, dass die Pollensterilität auf genetischen Determinanten im Pflanzengenom beruht. In diesem Fall, insbesondere dann, wenn es sich bei dem gewünschten Produkt, das man von den Hybridpflanzen ernten will, um die Samen handelt, ist es üblicherweise günstig, sicherzustellen, dass die Pollenfertilität in Hybridpflanzen völlig restoriert wird. Dies kann erreicht werden, indem sichergestellt wird, dass die männlichen Kreuzungspartner entsprechende Fertilitätsrestorergene besitzen, die in der Lage sind, die Pollenfertilität in Hybridpflanzen, die die genetischen Determinanten, die für die Pollensterilität verantwortlich sind, enthalten, zu restorieren. Genetische Determinanten für Pollensterilität können im Cytoplasma lokalisiert sein. Beispiele für cytoplasmatische Pollensterilität (CMS) wurden zum Beispiel für Brassica-Arten beschrieben (WO 92/05251, WO 95/09910, WO 98/27806, WO 2005/002324, WO 2006/021972 und US 6,229,072). Genetische Determinanten für Pollensterilität können jedoch auch im Zellkerngenom lokalisiert sein. Pollensterile Pflanzen können auch mit Methoden der pflanzlichen Biotechnologie, wie Gentechnik, erhalten werden. Ein besonders günstiges Mittel zur Erzeugung von pollensterilen Pflanzen ist in WO 89/10396 beschrieben, wobei zum Beispiel eine Ribonuklease wie eine Barnase selektiv in den Tapetumzellen in den Staubblättern exprimiert wird. Die Fertilität kann dann durch Expression eines Ribonukleasehemmers wie Barstar in den Tapetumzellen restoriert werden (z. B. WO 91/02069).

Pflanzen oder Pflanzensorten (die mit Methoden der Pflanzenbiotechnologie, wie der Gentechnik, erhalten werden), die erfindungsgemäß behandelt werden können, sind herbizidtolerante Pflanzen, d. h. Pflanzen, die gegenüber einem oder mehreren vorgegebenen Herbiziden tolerant gemacht worden sind. Solche Pflanzen können entweder durch genetische Transformation oder durch Selektion von Pflanzen, die eine Mutation enthalten, die solch eine Herbizidtoleranz verleiht, erhalten werden.

Herbizidresistente Pflanzen sind zum Beispiel Glyphosate-tolerante Pflanzen, d. h. Pflanzen, die gegenüber dem Herbizid Glyphosate oder dessen Salzen tolerant gemacht worden sind. Pflanzen können auf verschiedene Weisen Glyphosate-tolerant gemacht werden. So können zum Beispiel Glyphosate-tolerante Pflanzen durch Transformation der Pflanze mit einem Gen, das für das Enzym 5-Enolpyruvylshikimat-3-phosphatsynthase (EPSPS) kodiert, erhalten werden. Beispiele für solche EPSPS-Gene sind das AroA-Gen (Mutante CT7) des Bakterium *Salmonella typhimurium* (Comai et al., Science (1983), 221, 370-371), das CP4-Gen des Bakteriums *Agrobacterium sp.* (Barry et al., Curr. Topics Plant Physiol. (1992), 7, 139-145), die Gene, die für eine EPSPS aus der Petunie (Shah et al., Science (1986), 233, 478-481), für eine EPSPS aus der Tomate (Gasser et al., J. Biol. Chem. (1988), 263, 4280-4289) oder für eine EPSPS aus Eleusine (WO 01/66704) kodieren. Es kann sich auch um eine mutierte EPSPS handeln, wie sie zum Beispiel in EP-A 0837944, WO 00/66746, WO 00/66747 oder WO 02/26995 beschrieben ist. Glyphosate-tolerante Pflanzen können auch dadurch erhalten werden, dass man ein Gen exprimiert, das für ein Glyphosate-Oxidoreduktase-Enzym, wie es in US-Patenten Nr. 5,776,760 und 5,463,175 beschrieben ist, kodiert. Glyphosate-tolerante Pflanzen können auch dadurch erhalten werden, dass man ein Gen exprimiert, das für ein Glyphosateacetyltransferase-Enzym, wie es in z. B. WO 02/036782, WO 03/092360, WO 2005/012515 und WO 2007/024782 beschrieben ist, kodiert. Glyphosate-tolerante Pflanzen können auch dadurch erhalten werden, dass man Pflanzen, die natürlich vorkommende Mutationen der oben erwähnten Gene, wie sie zum Beispiel in WO 01/024615 oder WO 03/013226 beschrieben sind, enthalten, selektiert.

Sonstige herbizidresistente Pflanzen sind zum Beispiel Pflanzen, die gegenüber Herbiziden, die das Enzym Glutaminsynthase hemmen, wie Bialaphos, Phosphinothricin oder Glufosinate, tolerant gemacht worden sind. Solche Pflanzen können dadurch erhalten werden, dass man ein Enzym exprimiert, das das Herbizid oder eine Mutante des Enzyms Glutaminsynthase, das gegenüber Hemmung resistent ist, entgiftet. Solch ein wirksames entgiftendes Enzym ist zum Beispiel ein Enzym, das für eine Phosphinotricin-acetyltransferase kodiert (wie zum Beispiel das bar- oder pat-Protein aus Streptomyces-Arten). Pflanzen, die eine exogene Phosphinothricin-acetyltransferase exprimieren, sind zum Beispiel in den US-Patenten Nr. 5,561,236; 5,648,477; 5,646,024; 5,273,894; 5,637,489; 5,276,268; 5,739,082; 5,908,810 und 7,112,665 beschrieben.

Weitere herbizidtolerante Pflanzen sind auch Pflanzen, die gegenüber den Herbiziden, die das Enzym Hydroxyphenylpyruvatdioxygenase (HPPD) hemmen, tolerant gemacht worden sind. Bei den Hydroxyphenylpyruvatdioxygenasen handelt es sich um Enzyme, die die Reaktion, in der para-Hydroxyphenylpyruvat (HPP) zu Homogentisat umgesetzt wird, katalysieren. Pflanzen, die gegenüber HPPD-Hemmern tolerant sind, können mit einem Gen, das für ein natürlich vorkommendes resistentes HPPD-Enzym kodiert, oder einem Gen, das für ein mutiertes HPPD-Enzym gemäß WO 96/38567, WO 99/24585 und WO 99/24586 kodiert, transformiert werden. Eine Toleranz gegenüber HPPD-Hemmern kann auch dadurch erzielt werden, dass man Pflanzen mit Genen transformiert, die für gewisse Enzyme kodieren, die die Bildung von Homogentisat trotz Hemmung des nativen HPPD-Enzyms durch den HPPD-Hemmer ermöglichen. Solche Pflanzen und Gene sind in WO 99/34008 und WO 02/36787 beschrieben. Die Toleranz von Pflanzen gegenüber HPPD-Hemmern kann auch dadurch verbessert werden, dass man Pflanzen zusätzlich zu einem Gen, das für ein HPPD-tolerantes Enzym kodiert, mit einem Gen transformiert, das für ein Prephenatdehydrogenase-Enzym kodiert, wie dies in WO 2004/024928 beschrieben ist.

Noch weitere herbizidresistente Pflanzen sind Pflanzen, die gegenüber Acetolactatsynthase (ALS)-Hemmern tolerant gemacht worden sind. Zu bekannten ALS-Hemmern zählen zum Beispiel Sulfonylharnstoff, Imidazolinon, Triazolopyrimidine, Pyrimidinyloxy(thio)benzoate und/oder Sulfonylaminocarbonyltriazolinon-Herbizide. Es ist bekannt, dass verschiedene Mutationen im Enzym ALS (auch als Acetohydroxysäure-Synthase, AHAS, bekannt) eine Toleranz gegenüber unterschiedlichen Herbiziden bzw. Gruppen von Herbiziden verleihen, wie dies zum Beispiel bei Tranel und Wright, Weed Science (2002), 50, 700-712, jedoch auch in den US-Patenten Nr. 5,605,011, 5,378,824, 5,141,870 und 5,013,659, beschrieben ist. Die Herstellung von Sulfonylharnstoff-toleranten Pflanzen und Imidazolinon-toleranten Pflanzen ist in den US-Patenten Nr. 5,605,011; 5,013,659; 5,141,870; 5,767,361; 5,731,180; 5,304,732; 4,761,373; 5,331,107; 5,928,937; und 5,378,824; sowie in der internationalen Veröffentlichung WO 96/33270 beschrieben. Weitere Imidazolinon-tolerante Pflanzen sind auch in z. B. WO 2004/040012, WO 2004/106529, WO 2005/020673, WO 2005/093093, WO 2006/007373, WO 2006/015376, WO 2006/024351 und WO 2006/060634 beschrieben. Weitere Sulfonylharnstoff- und Imidazolinontolerante Pflanzen sind auch in z.B. WO 07/024782 beschrieben.

Weitere Pflanzen, die gegenüber Imidazolinon und/oder Sulfonylharnstoff tolerant sind, können durch induzierte Mutagenese, Selektion in Zellkulturen in Gegenwart des Herbizids oder durch Mutationszüchtung erhalten werden, wie dies zum Beispiel für die Sojabohne in dem US-Patent Nr. 5,084,082, für Reis in WO 97/41218, für die Zuckerrübe in dem US-Patent Nr. 5,773,702 und WO 99/057965, für Salat in dem US-Patent 5,198,599 oder für die Sonnenblume in WO 01/065922 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind insektenresistente transgene Pflanzen, d.h. Pflanzen, die gegen Befall mit gewissen Zielinsekten resistent gemacht wurden. Solche Pflanzen können durch genetische Transformation oder durch Selektion von Pflanzen, die eine Mutation enthalten, die solch eine Insektenresistenz verleiht, erhalten werden.

Der Begriff "insektenresistente transgene Pflanze" umfaßt im vorliegenden Zusammenhang jegliche Pflanze, die mindestens ein Transgen enthält, das eine Kodiersequenz umfaßt, die für folgendes kodiert:
1) ein insektizides Kristallprotein aus *Bacillus thuringiensis* oder einen insektiziden Teil davon, wie die insektiziden Kristallproteine, die von Crickmore et al., Microbiology and Molecular Biology Reviews (1998), 62, 807-813, von Crickmore et al. (2005) in der Bacillus thuringiensis-Toxinnomenklatur aktualisiert, online bei: http://www.lifesci.sussex.ac.uk/Home/Neil_Crickmore/Bt/), zusammengestellt wurden, oder insektizide Teile davon, z.B. Proteine der Cry-Proteinklassen Cry1Ab, Cry1Ac, Cry1B, Cry1C, Cry1D, Cry1F, Cry2Ab, Cry3Aa oder Cry3Bb oder insektizide Teile davon (z.B. EP-A 1999141 und WO 2007/107302); oder
2) ein Kristallprotein aus *Bacillus thuringiensis* oder einen Teil davon, der in Gegenwart eines zweiten, anderen Kristallproteins als *Bacillus thuringiensis* oder eines Teils davon insektizid wirkt, wie das binäre Toxin, das aus den Kristallproteinen Cry34 und Cry35 (Moellenbeck et al., Nat. Biotechnol. (2001), 19, 668-72; Schnepf et al., Applied Environm. Microbiol. (2006), 71, 1765-1774) besteht, oder das binäre Toxin, das aus dem Cry1A- oder Cry1F-Protein und dem Cry2Aa- oder Cry2Ab- oder Cry2Ae-Protein besteht (US-Patentanmeldung Nr. 12/214,022 und EP-Anmeldung Nr. 08010791.5) besteht; oder
3) ein insektizides Hybridprotein, das Teile von zwei unterschiedlichen insektiziden Kristallproteinen aus *Bacillus thuringiensis* umfaßt, wie zum Beispiel ein Hybrid aus den Proteinen von 1) oben oder ein Hybrid aus den Proteinen von 2) oben, z. B. das Protein CrylA.105, das von dem Mais-Event MON89034 produziert wird (WO 2007/027777); oder
4) ein Protein gemäß einem der Punkte 1) bis 3) oben, wobei einige, insbesondere 1 bis 10, Aminosäuren durch eine andere Aminosäure ersetzt wurden, um eine höhere insektizide Wirksamkeit gegenüber einer Zielinsektenart zu erzielen und/oder um das Spektrum der betroffenen Zielinsektenarten zu erweitern und/oder wegen Veränderungen, die in die Kodier-DNA während der Klonierung oder Transformation induziert wurden, wie das Protein Cry3Bb1 in Mais-Events MON863 oder MON88017 oder das Protein Cry3A im Mais-Event MIR604; oder
5) ein insektizides sezerniertes Protein aus *Bacillus thuringiensis* oder *Bacillus cereus* oder einen insektiziden Teil davon, wie die vegetativ wirkenden insektiziden Proteine (vegetative insecticidal proteins, VIP), die unter http://www.lifesci.sussex.ac.uk/Home/Neil_Crickmore/Bt/vip.html angeführt sind, z. B. Proteine der Proteinklasse VIP3Aa; oder
6) ein sezerniertes Protein aus *Bacillus thuringiensis* oder *Bacillus cereus,* das in Gegenwart eines zweiten sezernierten Proteins aus *Bacillus thuringiensis* oder *B. cereus* insektizid wirkt, wie das binäre Toxin, das aus den Proteinen VIPIA und VIP2A besteht (WO 94/21795) oder
7) ein insektizides Hybridprotein, das Teile von verschiedenen sezernierten Proteinen von *Bacillus thuringiensis* oder *Bacillus cereus* umfaßt, wie ein Hybrid der Proteine von 1) oder ein Hybrid der Proteine von 2) oben; oder
8) ein Protein gemäß einem der Punkte 5) bis 7) oben, in dem einige, insbesondere 1 bis 10, Aminosäuren durch eine andere Aminosäure ersetzt wurden, um eine höhere insektizide Wirksamkeit gegenüber einer Zielinsektenart zu erzielen und/oder um das Spektrum der betroffenen Zielinsektenart zu erweitern und/oder wegen Veränderungen, die in die Kodier-DNA während der Klonierung oder Transformation eingeführt wurden (wobei die Kodierung für ein insektizides Protein erhalten bleibt), wie das Protein VIP3Aa im Baumwoll-Event COT 102; oder
9) ein sezerniertes Protein aus *Bacillus thuringiensis* oder *Bacillus cereus,* das in Gegenwart eines Kristallproteins aus *Bacillus thuringiensis* insektizid wirkt, wie das binäre Toxin, das aus VIP3 und Cry1A oder Cry1F besteht (US-Patentanmeldungen Nr. 61/126083 und 61/195019), oder das binäre Toxin, das aus dem Protein VIP3 und den Proteinen Cry2Aa oder Cry2Ab oder Cry2Ae besteht (US-Patentanmeldung Nr. 12/214,022 und EP-Anmeldung Nr. 08010791.5); oder
10) ein Protein gemäß 9) oben, in dem einige, insbesondere 1 bis 10, Aminosäuren durch eine andere Aminosäure ersetzt wurden, um eine höhere insektizide Wirksamkeit gegenüber einer Zielinsektenart zu erzielen, und/oder um das Spektrum der betroffenen Zielinsektenart zu erweitern, und/oder wegen Veränderungen, die in die Kodier-DNA während der Klonierung oder Transformation eingeführt wurden (wobei die Codierung für eine insektizides Protein erhalten bleibt).

Natürlich zählt zu den insektenresistenten transgenen Pflanzen im vorliegenden Zusammenhang auch jegliche Pflanze, die eine Kombination von Genen umfaßt, die für die Proteine von einer der oben genannten Klassen 1 bis 10 kodieren. In einer Ausführungsform enthält eine insektenresistente Pflanze mehr als ein Transgen, das für ein Protein nach einer der oben genannten Klassen 1 bis 10 kodiert, um das Spektrum der betroffenen Zielinsektenarten zu erweitern wenn verschiedene Proteine, die auf verschiedene Zielinsektenarten abzielen, verwendet werden, oder um die Entwicklung einer Resistenz der Insekten gegen die Pflanzen dadurch hinauszuzögern, dass man verschiedene Proteine einsetzt, die für dieselbe Zielinsektenart insektizid sind, jedoch eine unterschiedliche Wirkungsweise, wie Bindung an unterschiedliche Rezeptorbindungsstellen im Insekt, aufweisen.

Eine "insektenresistente transgene Pflanze" beinhaltet im vorliegenden Zusammenhang weiterhin jegliche Pflanze, die mindestens ein Transgen enthält, welches eine Sequenz umfasst, die bei Expression eine doppelsträngige RNA produziert, welche bei Aufnahme durch ein Pflanzenschädlingsinsekt das Wachstum dieses Schädlingsinsekts hemmt, wie dies z.B. in WO 2007/080126 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind gegenüber abiotischen Streßfaktoren tolerant. Solche Pflanzen können durch genetische Transformation oder durch Selektion von Pflanzen, die eine Mutation enthalten, die solch eine Streßresistenz verleiht, erhalten werden. Zu besonders nützlichen Pflanzen mit Streßtoleranz zählen folgende:
1) Pflanzen, die ein Transgen enthalten, das die Expression und/oder Aktivität des Gens für die Poly(ADP-ribose)polymerase (PARP) in den Pflanzenzellen oder Pflanzen zu reduzieren vermag, wie dies in WO 00/04173, WO/2006/045633 oder in der EP-Anmeldung Nr. 04077984.5 oder in der EP-Anmeldung Nr. 06009836.5 beschrieben ist.
2) Pflanzen, die ein streßtoleranzförderndes Transgen enthalten, das die Expression und/oder Aktivität der für PARG kodierenden Gene der Pflanzen oder Pflanzenzellen zu reduzieren vermag, wie dies z.B. in WO 2004/090140 beschrieben ist;
3) Pflanzen, die ein streßtoleranzförderndes Transgen enthalten, das für ein in Pflanzen funktionelles Enzym des Nicotinamidadenindinukleotid-Salvage-Biosynthesewegs kodiert, darunter Nicotinamidase, Nicotinatphosphoribosyltransferase, Nicotinsäuremononukleotidadenyltransferase, Nicotinamidadenindinukleotidsynthetase oder Nicotinamidphosphoribosyltransferase, wie dies z. B. in der EP-Anmeldung Nr. 04077624.7, WO 2006/133827, PCT/EP07/002433, EP-A 1 999 263 oder WO 2007/107326 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, weisen eine veränderte Menge, Qualität und/oder Lagerfähigkeit des Ernteprodukts und/oder veränderte Eigenschaften von bestimmten Bestandteilen des Ernteprodukts auf, wie zum Beispiel:
1) Transgene Pflanzen, die eine modifizierte Stärke synthetisieren, die bezüglich ihrer chemisch-physikalischen Eigenschaften, insbesondere des Amylosegehalts oder des Amylose/Amylopektin-Verhältnisses, des Verzweigungsgrads, der durchschnittlichen Kettenlänge, der Verteilung der Seitenketten, des Viskositätsverhaltens, der Gelfestigkeit, der Stärkekorngröße und/oder Stärkekornmorphologie im Vergleich mit der synthetisierten Stärke in Wildtyppflanzenzellen oder -pflanzen verändert ist, so dass sich diese modifizierte Stärke besser für bestimmte Anwendungen eignet. Diese transgenen Pflanzen, die eine modifizierte Stärke synthetisieren, sind zum Beispiel in EP-A 0571427, WO 95/04826, EP-A 0719338, WO 96/15248, WO 96/19581, WO 96/27674, WO 97/11188, WO 97/26362, WO 97/32985, WO 97/42328, WO 97/44472, WO 97/45545, WO 98/27212, WO 98/40503, WO 99/58688, WO 99/58690, WO 99/58654, WO 00/08184, WO 00/08185, WO 00/08175, WO 00/28052, WO 00/77229, WO 01/12782, WO 01/12826, WO 02/101059, WO 03/071860, WO 2004/056999, WO 2005/030942, WO 2005/030941, WO 2005/095632, WO 2005/095617, WO 2005/095619, WO 2005/095618, WO 2005/123927, WO 2006/018319, WO 2006/103107, WO 2006/108702, WO 2007/009823, WO 00/22140, WO 2006/063862, WO 2006/072603, WO 02/034923, EP-Anmeldung Nr. 06090134.5, EP-Anmeldung Nr. 06090228.5, EP-Anmeldung Nr. 06090227.7, EP-Anmeldung Nr. 07090007.1, EP-Anmeldung Nr. 07090009.7, WO 01/14569, WO 02/79410, WO 03/33540, WO 2004/078983, WO 01/19975, WO 95/26407, WO 96/34968, WO 98/20145, WO 99/12950, WO 99/66050, WO 99/53072, US 6,734,341, WO 00/11192, WO 98/22604, WO 98/32326, WO 01/98509, WO 01/98509, WO 2005/002359, US 5,824,790, US 6,013,861, WO 94/04693, WO 94/09144, WO 94/11520, WO 95/35026 bzw. WO 97/20936 beschrieben.
2) Transgene Pflanzen, die Nichtstärkekohlenhydratpolymere synthetisieren, oder Nichtstärkekohlenhydratpolymere, deren Eigenschaften im Vergleich zu Wildtyppflanzen ohne genetische Modifikation verändert sind. Beispiele sind Pflanzen, die Polyfructose, insbesondere des Inulin- und Levantyps, produzieren, wie dies in EP-A 0663956, WO 96/01904, WO 96/21023, WO 98/39460 und WO 99/24593 beschrieben ist, Pflanzen, die alpha-1,4-Glucane produzieren, wie dies in WO 95/31553, US 2002031826, US 6,284,479, US 5,712,107, WO 97/47806, WO 97/47807, WO 97/47808 und WO 00/14249 beschrieben ist, Pflanzen, die alpha-1,6-verzweigte alpha-1,4-Glucane produzieren, wie dies in WO 00/73422 beschrieben ist, und Pflanzen, die Alternan produzieren, wie dies in WO 00/47727, WO 00/73422, EP-Anmeldung Nr. 06077301.7, US 5,908,975 und EP-A 0728213 beschrieben ist.
3) Transgene Pflanzen, die Hyaluronan produzieren, wie dies zum Beispiel in WO 2006/032538, WO 2007/039314, WO 2007/039315, WO 2007/039316, JP 2006304779 und WO 2005/012529 beschrieben ist.
4) Transgene Pflanzen oder Hybridpflanzen, wie Zwiebeln mit Merkmalen wie 'hoher Gehalt an löslichen Feststoffen', milde (low pungency, ist gleich LP) und/oder 'Langzeitlagerung' (long storage, ist gleich LS), wie dies in den US-Patentanmeldungen Nr. 12/020,360 und 61/054,026 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind Pflanzen wie Baumwollpflanzen mit veränderten Fasereigenschaften. Solche Pflanzen können durch genetische Transformation oder durch Selektion von Pflanzen, die eine Mutation enthalten, die solche veränderten Fasereigenschaften verleiht, erhalten werden; dazu zählen:
a) Pflanzen wie Baumwollpflanzen, die eine veränderte Form von Cellulosesynthasegenen enthalten, wie dies in WO 98/00549 beschrieben ist,
b) Pflanzen wie Baumwollpflanzen, die eine veränderte Form von rsw2- oder rsw3-homologen Nukleinsäuren enthalten, wie dies in WO 2004/053219 beschrieben ist;
c) Pflanzen wie Baumwollpflanzen mit einer erhöhten Expression der Saccharosephosphatsynthase, wie dies in WO 01/17333 beschrieben ist;
d) Pflanzen wie Baumwollpflanzen mit einer erhöhten Expression der Saccharosesynthase, wie dies in WO 02/45485 beschrieben ist;
e) Pflanzen wie Baumwollpflanzen bei denen der Zeitpunkt der Durchlaßsteuerung der Plasmodesmen an der Basis der Faserzelle verändert ist, z. B. durch Herunterregulieren der faserselektiven β-1,3-Glucanase, wie dies in WO 2005/017157, oder wie in der EP-Anmeldung Nr. 08075514.3 oder in der US-Patentanmeldung Nr. 61/128,938 beschrieben ist;
f) Pflanzen wie Baumwollpflanzen mit Fasern mit veränderter Reaktivität, z. B. durch Expression des N-Acetylglucosamintransferasegens, darunter auch nodC, und von Chitinsynthasegenen, wie dies in WO 2006/136351 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind Pflanzen wie Raps oder verwandte Brassica-Pflanzen mit veränderten Eigenschaften der Ölzusammensetzung. Solche Pflanzen können durch genetische Transformation oder durch Selektion von Pflanzen, die eine Mutation enthalten, die solche veränderten Öleigenschaften verleiht, erhalten werden; dazu zählen:
a) Pflanzen wie Rapspflanzen, die Öl mit einem hohen Ölsäuregehalt produzieren, wie dies zum Beispiel in US 5,969,169, US 5,840,946 oder US 6,323,392 oder US 6,063, 947 beschrieben ist;
b) Pflanzen wie Rapspflanzen, die Öl mit einem niedrigen Linolensäuregehalt produzieren, wie dies in US 6,270,828, US 6,169,190 oder US 5,965,755 beschrieben ist.
c) Pflanzen wie Rapspflanzen, die Öl mit einem niedrigen gesättigten Fettsäuregehalt produzieren, wie dies z. B. in US 5,434,283 beschrieben ist.

Pflanzen oder Pflanzensorten (die nach Methoden der pflanzlichen Biotechnologie, wie der Gentechnik, erhalten wurden), die ebenfalls erfindungsgemäß behandelt werden können, sind Pflanzen wie Raps oder verwandte Brassica-Pflanzen mit veränderten Samenstreuungseigenschaften. Solche Pflanzen können durch genetische Transformation oder durch Selektion von Pflanzen, die eine Mutation enthalten, die solche veränderten Samenstreuungseigenschaften verleihen, erhalten werden; dazu zählen Rapspflanzen mit verzögerter oder verringerter Samenstreuung, wie dies in der US-Patentanmeldung Nr. 61/135,230 und der EP-Anmeldung Nr. 08075648.9 beschrieben ist.

Besonders nützliche transgene Pflanzen, die erfindungsgemäß behandelt werden können, sind Pflanzen, die Transformations-Events, oder Kombination von Transformations-Events, enthalten und für die Anmeldungen in den Vereinigten Staaten von Amerika beim Animal and Plant Health Inspection Service (APHIS) des United States Department of Agriculture (USDA) auf Deregulierung vorliegen, egal, ob solche Anträge genehmigt wurden oder noch bearbeitet werden. Diese Information ist jeder Zeit leicht von APHIS erhältlich, (4700 River Road Riverdale, MD 20737, USA) zum Beispiel auf der Website (URL http://www.aphis,usda.gov/brs/not_reg.html). Zum Einreichdatum der vorliegenden Anmeldung handelte es sich bei den Anträgen auf Deregulierung, die bei APHIS bearbeitet wurden oder von APHIS genehmigt wurden, um diejenigen, die in Tabelle B aufgelistet sind, wobei diese Tabelle die folgende Information enthält:
- Antrag: Identifikationsnummer des Antrags. Technische Beschreibungen der Transformations-Events finden sich in den einzelnen Antragsdokumenten, die von APHIS durch Bezug auf diese Antragsnummer erhältlich sind, zum Beispiel auf der APHIS-Website. Die Beschreibungen werden in den folgenden Text hiermit durch Bezugnahme aufgenommen.
- Erweiterung eines Antrags: Bezugnahme auf einen früheren Antrag, für den eine Erweiterung beantragt wird.
- Institution: Name des Antragstellers.
- Gegenstand der Regulation: die jeweilige Pflanzenart.
- Transgener Phänotyp: das den Pflanzen durch das Transformations-Event vermittelte Merkmal.
- Transformations-Event oder Linie: Name des bzw. der Events (manchmal auch als Linie(n) bezeichnet), für das Deregulation beantragt wird.
- APHIS-Dokumente: verschiedene von APHIS in Bezug auf den Antrag veröffentlichte Dokumente, die von APHIS erhältlich sind.

Zusätzliche besonders nützliche Pflanzen, die einzelne Transformations-Events oder eine Kombination von Transformations-Events enthalten, sind zum Beispiel in den Datenbanken von verschiedenen nationalen oder regionalen Behörden angeführt (siehe zum Beispiel http://gmoinfo.jrc.it/gmp_browse.aspx und hltp://www.agbios,com/adase.php).

Zu weiteren besonderen transgenen Pflanzen zählen Pflanzen, die ein Transgen in einer agronomisch neutralen oder vorteilhaften Stellung enthalten, wie dies in beliebigen Patentveröffentlichungen, die in Tabelle C aufgelistet sind, beschrieben ist.

Bei einer besonders bevorzugten Variante wird das erfindungsgemäße Verfahren für die Behandlung von transgenen Gemüse-, Mais-, Sojabohnen-, Baumwoll-, Tabak-, Reis-, Kartoffel-, Raps- und Zuckerrübensorten verwendet. Hierbei handelt es sich vorzugsweise um Pflanzen, die Bt-Toxine enthalten.

Bei den Gemüsepflanzen oder -sorten handelt es sich zum Beispiel um die folgenden Nutzpflanzen:
**○** Kartoffeln: vorzugsweise Stärkekartoffeln, Süßkartoffeln und Speisekartoffeln;
**○** Wurzelgemüse: vorzugsweise Karotten, Kohlrüben (Speiserüben, Stoppelrüben (*Brassica rapa* var. rapa), Frühjahrsrüben, Herbstrüben (Brassica *campestris* ssp. Rapifera), *Brassica rapa* L.ssp. rapa f. teltowiensis) Schwarzwurzeln, Topinambur, Wurzelpetersilie, Pastinake, Rettich und Meerrettich;
○ Knollengemüse: vorzugsweise Kohlrabi, Rote Beete, Knollensellerie, Radieschen;
○ Zwiebelgemüse: vorzugsweise Frühlingszwiebeln, Lauch und Zwiebeln (Steck- und Samenzwiebeln);
**○** Kohlgemüse: vorzugsweise Kopfkohl (Weißkohl, Rotkohl, Blattkohl, Wirsingkohl), Blumenkohl, Brokkoli, Grünkohl, Markstammkohl, Meerkohl und Rosenkohl;
**○** Fruchtgemüse: vorzugsweise Tomaten, (Freiland-, Rispen-, Fleisch-, Gewächshaus-, Cocktail-, Industrie- und Frischmarkt-Tomaten), Melonen, Eierfrüchte, Auberginen, Paprika (Gemüse- und Gewürzpaprika, Spanischer Pfeffer), Peperoni, Kürbisse, Zucchini und Gurken (Freiland-, Gewächs-, Schlangen- und Einlegegurken);
**○** Gemüsehülsenfrüchte: vorzugsweise Buschbohnen (als Schwertbohnen, Perlbohnen, Flageoletbohnen, Wachsbohnen, Trockenkochbohnen mit grün- und gelbhülsigen Sorten), Stangenbohnen (als Schwertbohnen, Perlbohnen, Flageoletbohnen, Wachsbohnen mit grün-, blau- und gelbhülsigen Sorten), Dicke Bohnen (Ackerbohnen, Puffbohnen, Sorten mit weiß und schwarz gefleckten Blüten), Erbsen (Plattererbsen, Kichererbsen, Markererbsen, Schalerbsen, Zuckererbsen, Palerbsen, Sorten mit hell und dunkelgrünem Frischkorn) und Linsen;
**○** Blatt- und Stielgemüse: vorzugsweise Chinakohl, Kopfsalat, Pflücksalat, Feldsalat, Eisbergsalat, Romanasalat, Eichblattsalat, Endivien, Radicchio, Lollo rosso-Salat, Rucolo-Salat, Chicoree, Spinat, Mangold (Blatt- und Stielmangold) und Petersilie;
**○** Sonstige Gemüse: vorzugsweise Spargel, Rhabarber, Schnittlauch, Artischocken, Minzarten, Sonnenblumen, Knollenfenchel, Dill, Gartenkresse, Senf, Mohn, Erdnuß, Sesam und Salatzichorien.

Bevorzugte Ausführungsformen der Erfindung sind diejenigen Behandlungen mit einer Verbindung der Formel (I)1, bei denen die transgene Pflanze:
a) aus der Reihe der in Tabelle A: A-1 bis A-133 aufgelisteten Pflanzen stammt oder
b) aus der Reihe der in Tabelle B: B-1 bis B-85 aufgelisteten Pflanzen stammt oder
c) aus der Reihe der in Tabelle E: E-1 bis E-50 aufgelisteten Pflanzen stammt oder
d) ein oder mehrere transgene Event(s) aus der Reihe der in Tabelle A von A-1 bis A-133 oder Tabelle B von B-1 bis B-85 oder Tabelle D von D-1 bis D-48 aufgelisteten transgenen Events umfasst oder
e) ein Merkmal, das auf einem oder mehreren transgenen Event(s) wie in Tabelle C von C-1 bis C-12 aufgelistet basiert, umfasst.

Gemäß einer ganz besonders bevorzugten Ausführungsform der vorliegenden Erfindung ist die Verbindung der Formel (I) ausgewählt aus der Gruppe bestehend aus den Verbindungen der Formeln (I-1), (I-2), (I-3), (I-4), (I-5), (I-6), (I-7), (I-8), (I-9) und (I-10).

In einer bevorzugten Ausführungsform der Erfindung werden die transgenen Pflanzen mit einer Verbindung der Formel (I) behandelt, um eine synergistische Verstärkung
(i) der pestiziden Wirksamkeit und/oder
(ii) des Aktivitätsspektrums gegen Schädlinge und/oder phytopathogene Pilze und/oder Mikroorganismen
zu erreichen.

In einer weiteren bevorzugten Ausführungsform der vorliegenden Erfindung werden die transgenen Pflanzen mit einer Verbindung der Formel (I) behandelt, wobei als Angriffspunkt Stämme der tierischen Schädlinge dienen, die gegenüber den transgenen Events, die der Pflanze eine Resistenz gegen die Wildtyp-Stämme oder sensitiven Stämme des genannten tierischen Schädlings verleihen, zumindest teilweise resistent oder tolerant sind. Gemäß einer ganz besonders bevorzugten Ausführungsform der vorliegenden Erfindung ist die Verbindung der Formel (I) ausgewählt aus der Gruppe bestehend aus den Verbindungen der Formeln (I-1), (I-2), (I-3), (I-4), (I-5), (I-6), (I-7), (I-8), (I-9) und (I-10).

Die Verfahren zur Bestimmung der Resistenz von Schädlingen gegen Wirkstoffe sind dem Durchschnittsfachmann gut bekannt. Solche Verfahren finden sich zum Beispiel auf der Website des "Insecticide Resistance Action Committee" unter http://www.irac-online.org oder der Website des "Fungicide Resistance Action Committee" unter http://www.frac-online.org

Bei einer weiteren bevorzugten Ausführungsform der Erfindung führt die Behandlung einer transgenen Pflanze mit einer Verbindung der Formel (I) zu einem erhöhten Ertrag der transgenen Pflanze, wobei die transgene Pflanze:
a) aus der Reihe der in Tabelle A: A-1 bis A-133 aufgelisteten Pflanzen stammt oder
b) aus der Reihe der in Tabelle B: B-1 bis B-85 aufgelisteten Pflanzen stammt oder
c) aus der Reihe der in Tabelle E: E-1 bis E-50 aufgelisteten Pflanzen stammt oder
d) ein oder mehrere transgene Event(s) aus der Reihe der in Tabelle A von A-1 bis A-133 oder Tabelle B von B-1 bis B-85 oder Tabelle D von D-1 bis D-48 aufgelisteten transgenen Events umfasst oder
e) ein Merkmal, das auf einem oder mehreren transgenen Event(s) wie in Tabelle C von C-1 bis C-12 aufgelistet basiert, umfasst.

Erfindungsgemäß können die mit einer Verbindung der Formel (I) zu behandelnden Pflanzen auch Kombinationen von transgenen Events oder Merkmalen, die in den Tabellen A, B, C, D und E beschrieben sind, enthalten.

### Tabelle A:

Nicht allumfassende Liste von transgenen Pflanzen und Events für die Nacharbeitung der Erfindung. Quelle: AgBios-Datenbank (AGBIOS, P.O. Box 475, 106 St. John St. Merrickville, Ontario KOG1N0, CANADA) zugänglich unter: http://www.agbios.com/dbase.php.

| **Nr.** | **Transgenes Event** | **Unternehmen** | **Beschreibung** | **Kulturpflanze** |
|---|---|---|---|---|
| A-1 | ASR368 | Scotts Seeds | Glyphosate -Toleranz, die durch Insertieren eines modifizierten, für die 5-Enolpyruvylshikimat-3-phosphatsynthase (EPSPS) codierenden Gens aus Agrobacterium tumefaciens, Kreuzungspartner B99061, erhalten wurde. | *Agrostis stolonifera Weißen Straußgras* |
| A-2 | H7-1 | Monsanto Company | Zuckerrübe mit Toleranz für das Herbizid Glyphosate; Erzeugung durch Insertieren eines Gens für das Enzym 5-Enolypyruvylshikimat-3-phosphatsynthase (EPSPS) aus dem Agrobacterium tumefaciens Stamm CP4 . | *Beta vulgaris* (*Zuckerrübe*) |
| A-3 | T120-7 | Bayer Crop-Science (Aventis Crop-Science (AgrEvo)) | Einführen des Gens für die PPT-Acetyltransferase (PAT) aus Streptomyces viridochromogenes, einem aeroben Bodenbakterium. Die Wirkung der PPT besteht normalerweise darin, die Glutaminsynthetase zu hemmen, was zu einer tödlichen Akkumulation von Ammoniak führt. Die acetylierte PPT ist inaktiv. | *Beta vulgaris* (*Zuckerrübe)* |
| A-4 | GTSB77 | Novartis Seeds; Monsanto Company | Zuckerrübe mit Toleranz für das Herbizid Glyphosate; Erzeugung durch Insertieren eines Gens für das Enzym 5-Enolypyruvylshikimat-3-phosphatsynthase (EPSPS) aus dem Agrobacterium tumefaciens-Stamm CP4. | *Beta vulgaris* (*Zuckerrübe*) |
| A-5 | 23-18-17, 23-198 | Monsanto Company (früher Calgene) | Canola-Raps mit hohem Laurinsäure- (12:0) und Myristinsäure- (14:0)-Gehalt; Erzeugung durch Insertieren eines Gens für Thioesterase aus dem Kalifornischen Lorbeer (Umbellularia californica). | *Brassica napus* (Argentinischer Canola-Raps) |
| A-6 | 45A37, 46A40 | Pioneer Hi-Bred International Inc. | Canola-Raps mit hohem Ölsäure- und niedrigem Linolensäuregehalt ; Erzeugung durch eine Kombination von chemischer Mutagenese für die Selektion auf eine Fettsäuredesaturase-Mutante mit erhöhtem Ölsäuregehalt und traditionelle Rückkreuzung zur Einführung des Merkmals niedriger Linolensäuregehalt. | *Brassica napus* (Argentinischer Canola-Raps) |
| A-7 | 46A12, 46A16 | Pioneer Hi-Bred International Inc. | Kombination von chemischer Mutagenese zur Erzeugung des Merkmals hoher Ölsäuregehalt und traditioneller Züchtung mit eingetragenen Canola-Rapssorten. | *Brassica napus* (Argentinischer Canola-Raps) |
| A-8 | GT200 | Monsanto Company | Canola-Raps mit Toleranz für das Herbizid Glyphosate; Erzeugung durch Insertieren von Genen für die Enzyme 5-Enolypyruvylshikimat-3-phosphatsynthase (EPSPS) aus dem Agrobacterium tumefaciens-Stamm CP4 und Glyphosate-Oxidase aus Ochrobactrum anthropi. | *Brassica napus* (Argentinischer Canola-Raps) |
| A-9 | GT73, RT73 | Monsanto Company | Canola-Raps mit Toleranz für das Herbizid Glyphosate; Erzeugung durch Insertieren von Genen für die Enzyme 5-Enolypyruvylshikimat-3-phosphatsynthase (EPSPS) aus dem Agrobacterium tumefaciens-Stamm CP4 und Glyphosate-Oxidase aus Ochrobactrum anthropi. | *Brassica napus* (Argentinischer Canola-Raps) |
| A-10 | HCN10 | Aventis CropScience | Einführen des Gens für die PPT-Acetyltransferase (PAT) aus Streptomyces viridochromogenes, einem aeroben Bodenbakterium. Die Wirkung der PPT besteht normalerweise darin, die Glutaminsynthetase zu hemmen, was zu einer tödlichen Akkumulation von Ammoniak führt. Die acetylierte PPT ist inaktiv. | *Brassica napus* (Argentinischer Canola-Raps) |
| A-11 | HCN92 | Bayer Crop-Science (Aventis Crop-Science (AgrEvo)) | Einführen des Gens für die PPT-Acetyltransferase (PAT) aus Streptomyces viridochromogenes, einem aeroben Bodenbakterium. Die Wirkung der PPT besteht normalerweise darin, die Glutaminsynthetase zu hemmen, was zu einer tödlichen Akkumulation von Ammoniak führt. Die acetylierte PPT ist inaktiv. | *Brassica napus* (Argentinischer Canola-Raps) |
| A-12 | MS1, RF1 =>PGS1 | Aventis CropScience (formerly Plant Genetic Systems) | Pollensterifitäts/FertilitätsrestorationsBestäubungskontrollsystem mit Toleranz für das Herbizid Glufosinate. Die MS -Linien enthielten das Barnase Gen aus Bacillus amyloliquefaciens, die RF-Linien enthielten das Barstar-Gen aus demselben Bakterium, und beide Linien enthielten das Gen für die Phosphinothricin-N-acetyltransferase (PAT) aus Streptomyces hygroscopicus. | *Brassica napus* (Argentinischer Canola-Raps) |
| A-13 | MS1, RF2 =>PGS2 | Aventis CropScience (früher Plant Genetic Systems) | Pollensterifitäts/FertilitätsrestorationsBestäubungskontrollsystem mit Toleranz für das Herbizid Glufosinate. Die MS -Linien enthielten das Barnase Gen aus Bacillus amyloliquefaciens, die RF-Linien enthielten das Barstar-Gen aus demselben Bakterium, und beide Linien enthielten das Gen für die Phosphinothricin-N-acetyltransferase (PAT) aus Streptomyces hygroscopicus. | *Brassica napus* (Argentinischer Canola-Raps) |
| A-14 | MS8xRF3 | Bayer CropScience (Aventis CropScience (AgrEvo)) | Pollensterifitäts/FertilitätsrestorationsBestäubungskontrollsystem mit Toleranz für das Herbizid Glufosinate. Die MS -Linien enthielten das Barnase Gen aus Bacillus amyloliquefaciens, die RF-Linien enthielten das Barstar-Gen aus demselben Bakterium, und beide Linien enthielten das Gen für die Phosphinothricin-N-acetyltransferase (PAT) aus Streptomyces hygroscopicus. | *Brassica napus* (Argentinischer Canola-Raps) |
| A-15 | NS738, NS1471, NS1473 | Pioneer Hi-Bred International Inc. | Selektion von somaclonal Varianten mit veränderten Acetolactatsynthase (ALS) -Enzymen und anschließende chemische Mutagenese. Zwei Linien (P1, P2) mit Modifikationen an verschiedenen, nicht gekoppelten Loci wurden ursprünglich selektiert. NS738 enthält nur die P2 Mutation. | *Brassica napus* (Argentinischer Canola-Raps) |
| A-16 | OXY-235 | Aventis CropScience (formerly Rhöne Poulenc Inc.) | Toleranz für die Herbizide Bromoxynil und loxynil durch Einbau des Nitrilase-Gens aus Klebsiella pneumoniae. | *Brassica napus* (Argentinischer Canola-Raps) |
| A-17 | PHY14, PHY35 | Aventis CropScience (früher Plant Genetic Systems) | Erzeugung der Pollensterilität mittels Insertion des Barnase-Ribonucleasegens aus Bacillus amyloliquefaciens; Restoration Fertilität durch Insertieren des Barstar-RNase-Hemmers; PPT-Resistenz durch PPT-Acetyltransferase (PAT) aus Streptomyces hygroscopicus. | *Brassica napus* (Argentinischer Canola-Raps) |
| A-18 | PHY36 | Aventis CropScience (früher Plant Genetic Systems) | Erzeugung der Pollensterilität mittels Insertion des Barnase-Ribonucleasegens aus Bacillus amyloliquefaciens; Restoration Fertilität durch Insertieren des Barstar-RNase-Hemmers; PPT-Acetyltransferase (PAT) aus Streptomyces hygroscopicus. | *Brassica napus* (Argentinischer Canola-Raps) |
| A-19 | T45 (HCN28) | Bayer Crop-Science (Aventis CropScience (AgrEvo)) | Einführen des für die PPT-Acetyltransferase (PAT) codierenden Gens aus Streptomyces viridochromogenes, einem aeroben Bodenbakterium. Die Wirkung der PPT besteht normalerweise darin, die Glutaminsynthetase zu hemmen, was zu einer tödlichen Akkumulation von Ammoniak führt. Die acetylierte PPT ist inaktiv. | *Brassica napus* (Argentinischer Canola-Raps) |
| A-20 | HCR-1 | Bayer Crop Science (Aventis CropScience (AgrEvo)) | Einführung des Merkmals Toleranz für das Herbizid Glufosinate-Ammonium aus der transgenen B. napus-Linie T45. Dieses Merkmal wird von dem Gen für die Phosphinothricinacetyltransferase (PAT) aus S. viridochromogenes vermittelt. | *Brassica rapa* (Polnischer Canola-Raps) |
| A-21 | ZSR500/502 | Monsanto Company | Einführung einer modifizierten 5-Enolpyruvylshikimat-3-phosphatsynthase (EPSPS) und eines Gens aus Achromobacter sp., das Glyphosate durch Umwandlung in Aminomethylphosphonsäure (AMPA) und Glyoxylate abbaut, mittels Artkreuzung mit GT73. | *Brassica rapa* (Polnischer Canola-Raps) |
| A-22 | 55-1/63-1 | Cornell University | Gegen das Papaya-Ringspot-Virus (PRSV) resistente Papaya, die durch Insertion der für das Hüllprotein (CP) codierenden Sequenzen von diesem Pflanzen-Potyvirus erzeugt wurde. | *Carica papaya* (Papaya) |
| A-23 | RM3-3, RM3-4, RM3-6 | Bejo Zaden BV | Erzeugung der Pollensterilität mittels Insertion des Barnase-Ribonucleasegens aus Bacillus amyloliquefaciens; die PPT-Resistenz mittels dem bar-Gen aus S. hygroscopicus, das für das PAT-Enzym codiert. | *Cichorium intybus* (Chicoree) |
| A-24 | A, B | Agritope Inc. | Verringerte Akkumulation von S-Adenosylmethionin (SAM), und daher verringerte Ethylensynthese, durch Einführung des für die S-Adenosylmethioninhydrolase codierenden Gens. | *Cucumis melo* (Melone) |
| A-25 | CZW-3 | Asgrow (USA); Seminis Vegetable Inc. (Canada) | Gegen das Gurkenmosaikvirus (CMV), das Zucchini-Yellows Mosaic-Virus (ZYMV) und das Wassermelonenmosaikvirus (WMV) 2 resistenter Kürbis ( Curcurbita pepo); Erzeugung durch Insertieren der für das Hüllprotein (CP) codierenden Sequenzen von jedem dieser Pflanzenviren in das Wirtsgenom. | *Cucurbita pepo* (Kürbis) |
| A-26 | ZW20 | Upjohn (USA); Seminis Vegetable Inc. (Canada) | Gegen das Zucchini-Yellows Mosaic-Virus (ZYMV) und das Wassermelonenmosaik-Virus (WMV) 2 resistenter Kürbis ( Curcurbita pepo); Erzeugung durch Insertieren der für das Hüllprotein (CP) codierenden Sequenzen von jedem dieser Pflanzenpotyviren in das Wirtsgenom. | *Cucurbita pepo* (Kürbis) |
| A-27 | 66 | Florigene Pty Ltd. | Gegen Sulfonylharnstoffherbizide tolerante Nelken mit verzögerter Seneszenz; Erzeugung durch Insertieren einer verkürzten Kopie des Gens für die Aminocyclopropancyclase (ACC)-Synthase aus der Nelke zwecks Unterdrückung der Expression des endogenen nichtmodifizierten Gens, das für die normale Ethylenbiosynthese erforderlich ist. Die Toleranz für Sulfonylharnstoffherbizide wurde durch Einführung einer Chlorsulfuron-toleranten Version des Gens für die Acetolactatsynthase (ALS) aus Tabak erzeugt. | *Dianthus caryophyllus* (Nelke) |
| A-28 | 4, 11, 15, 16 | Florigene Pty Ltd. | Gegen Sulfonylharnstoffherbizide tolerante Nelken mit modifizierter Farbe, die dadurch erzeugt wurden, dass zwei Anthocyaninbiosynthesegene insertiert wurden, deren Expression zu einer violett/malvenfarbenen Färbung führt. Die Toleranz für Sulfonylharnstoffherbizide wurde durch Einführung einer Chlorsulfuron-toleranten Version des Gens für die Acetolactatsynthase (ALS) aus Tabak erzeugt. | *Dianthus caryophyllus* (Nelke) |
| A-29 | 959A, 988A, 1226A, 1351A, 1363A, 1400A | Florigene Pty Ltd. | Einführung von zwei Anthocyaninbiosynthesegenen, die zu einer violett/malvenfarbenen Färbung führt; Einführung einer Variante der Acetolactatsynthase (ALS). | *Dianthus caryophyllus* (Nelke) |
| A-30 | A2704-12, A2704-21, A5547-35 | Aventis CropScience | Sojabohne mit Toleranz für Glufosinate-Ammonium-Herbizide; Erzeugung durch Insertieren eines modifizierten Gens für die Phosphinothricinacetyltransferase (PAT) aus dem Bodenbakterium Streptomyces viridochromogenes. | *Glycins max* L. (Sojabohne) |
| A-31 | A5547-127 | Bayer CropScience (Aventis CropScience (AgrEvo)) | Sojabohne mit Toleranz für Glufosinate-Ammonium-Herbizide; Erzeugung durch Insertieren eines modifizierten Gens für die Phosphinothricinacetyltransferase (PAT) aus dem Bodenbakterium Streptomyces viridochromogenes. | *Glycine max* L. (Sojabohne) |
| A-32 | DP356043 | Pioneer Hi-Bred International Inc. | Sojabohnen-Event mit zwei Herbizidtoleranzgenen: Glyphosate-N-acetyltransferase, die Glyphosate entgiftet, sowie eine modifizierte Acetolactatsynthase (A | *Glycine max L.* (Sojabohne) |
| A-33 | G94-1, G94-19, G168 | DuPont Canada Agricultural Products | Sojabohne mit hohem Ölsäuregehalt; Erzeugung durch Insertieren einer zweiten Kopie des Gens für eine Fettsäuredesaturase (GmFad2-1) aus der Sojabohne, was zu einem "Abschalten" des endogenen Wirtsgens führte. | *Glycine max L.* (Sojabohne) |
| A-34 | GTS 40-3-2 | Monsanto Company | Glyphosate-tolerante Sojabohnensorte; Erzeugung durch Insertieren eines modifizierten Gens für die 5-Enolpyruvylshikimat-3-phosphatsynthase (EPSPS) aus dem Bodenbakterium Agrobacterium tumefaciens. | *Glycine max L.* (Sojabohne) |
| A-35 | GU262 | Bayer CropScience (Aventis CropScience (AgrEvo)) | Sojabohne mit Toleranz für Glufosinate-Ammonium-Herbizide; Erzeugung durch Insertieren eines modifizierten Gens für die Phosphinothricinacetyltransferase (PAT) aus dem Bodenbakterium Streptomyces viridochromogenes. | *Glycins max* L. (Sojabohne) |
| A-36 | MON89788 | Monsanto | Glynhosate-tolerante Sojahohnensorte; Erzeugung durch Insertieren eines modifizierten aroA (epsps)-Gens für die 5-Enolpyruvylshikimat-3-phosphatsynthase (EPSPS) aus dem Agrobacterium tumefaciens CP4. | *Glycine max* L. (Sojabohne) |
| A-37 | OT96-15 | Agriculture & Agri-Food Canada | Sojabohne mit niedrigem Linolensäuregehalt; Erzeugung durch traditionelle Kreuzung zwecks Einbau des neuen Merkmals aus einer natürlich vorkommenden fan1-Genmutante, die auf niedrigen Linolensäuregehalt selektriert worden war. | *Glycins max L.* (Sojabohne) |
| A-38 | W62, W98 | Bayer CropScience (Aventis CropScience (AgrEvo)) | Sojabohne mit Toleranz für Glufosinate-Ammonium-Herbizide; Erzeugung durch Insertieren eines modifizierten Gens für die Phosphinothricinacetyltransferase (PAT) aus dem Bodenbakterium Streptomyces hygroscopicus. | *Glycins max* L. (Sojabohne) |
| A-39 | 15985 | Monsanto Company | Insektenresistente Baumwolle; Ableitung durch Transformation der Elternsorte DP50B, die Event 531 (mit Expression des CrylAc Proteins) enthielt, mit aufgereinigter Plasmid-DNA, die das cry2Ab-Gen aus B. thuringiensis subsp. Kurstaki enthielt. | *Gossypium hirsutum L.* (Baumwolle) |
| A-40 | 19-51A | DuPont Canada Agricultural Products | Einführung einer Acetolactatsynthase (ALS)-Variante. | *Gossypium hirsutum L.* (Baumwolle) |
| A-41 | 281-24-236 | DOW AgroSciences LLC | Insektenresistente Baumwolle; Erzeugung durch Insertieren des cry1F-Gens aus Bacillus thuringiensisvar. aizawai. Das Gen für die PAT aus Streptomyces viridochromogenes wurde als Selektionsmarker eingeführt. | *Gossypium hirsutum L.* (Baumwolle) |
| A-42 | 3006-210-23 | DOW AgroSciences LLC | Insektenresistente Baumwolle; Erzeugung durch Insertieren des cry1Ac-Gens aus Bacillus thuringiensissubsp. kurstaki. Das Gen für die PAT aus Streptomyces viridochromogenes wurde als Selektionsmarker eingeführt. | *Gossypium hirsutum L.* (Baumwolle) |
| A-43 | 31807/31808 | Calgene Inc. | Insektenresistente Baumwolle mit Toleranz für das Herbizid Bromoxynil; Erzeugung durch Insertion des cry1Ac-Gens aus Bacillus thuringiensis und eines Gens für Nitrilase aus Klebsiella pneumoniae. | *Gossypium hirsutum L.* (Baumwolle) |
| A-44 | BXN | Calgene Inc. | Baumwolle mit Toleranz für das Herbizid Bromoxynil; Erzeugung durch Insertion eines Gens für Nitrilase aus Klebsiella pneumoniae. | *Gossypium hirsutum L.* (Baumwolle) |
| A-45 | COT102 | Syngenta Seeds, Inc. | Insektenresistente Baumwolle; Erzeugung durch Insertion des vip3A(a) Gens aus Bacillus thuringiensis AB88. Das für APH4 codierende Gen aus E. coli wurde als Selektionsmarker eingeführt. | *Gossypium hirsutum* L. (Baumwolle) |
| A-46 | DAS-21023-5 x DAS-24236-5 | DOW AgroSciences LLC | WideStrike™, eine Baumwolle mit Insektenresistenzkombination; Ableitung durch traditionelles Kreuzen der Elternlinien 3006-210-23 (OECD-Bezeichnung: DAS-21023-5) und 281-24-236 (OECD-Bezeichung: DAS-24236-5). | *Gossypium hirsutum L.* (Baumwolle) |
| A-47 | DAS-21023-5 x DAS-24236-5 x MON88913 | DOW AgroSciences LLC und Pioneer Hi-Bred International Inc. | Baumwolle mit einer Kombination von Insektenresistenz und Glyphosate-Toleranz; Erzeugung durch traditionelles Kreuzen von WideStrike-Baumwolle (OECD-Bezeichnung: DAS-21∅23-5 x DAS-24236-5) mit MON88913, bekannt unter der Bezeichnung RoundupReady Flex (OECD-Bezeichnung: MON-88913-8). | *Gossypium hirsutum L.* (Baumwolle) |
| A-48 | DAS-21023-5 x DAS-24236-5 x MON-∅1445-2 | DOW AgroSciences LLC | WideStrike™/Roundup Ready^{®}-Baumwolle, eine Baumwolle mit einer Kombination von Insektenresistenz und Glyphosate-Toleranz; Ableitung durch traditionelles Kreuzen von WideStrike-Baumwolle (OECD-Bezeichnung: DAS-21∅23-5 x DAS-24236-5) mit MON1445 (OECD-Bezeichnung: MON-∅1445-2). | *Gossypium hirsutum L.* (Baumwolle) |
| A-49 | LLCotton25 | Bayer CropScience (Aventis CropScience (AgrEvo)) | Baumwolle mit Toleranz gegen das Herbizid Glufosinate-Ammonium; Erzeugung durch Insertieren eines modifizierten Gens für die Phosphinothricinacetyltransferase (PAT) aus dem Bodenbakterium Streptomyces hygroscopicus. | *Gossypium hirsutum L.* (Baumwolle) |
| A-50 | LLCotton25 x MON15985 | Bayer CropScience (Aventis CropScience (AgrEvo)) | Baumwolle mit einer Kombination von Herbizidtoleranz und Insektenresistenz, bei der die Toleranz für das Herbizid Glufosinate-Ammonium aus LLCotton25 (OECD-Bezeichnung: ACS-GH∅∅1-3) mit Resistenz gegen Insekten aus MON15985 (OECD-Bezeichnung: MON-15985-7) kombiniert ist. | *Gossypium hirsutum L.* (Baumwolle) |
| A-51 | GBH614 | Bayer CropScience (Aventis CropScience (AgrEvo)) | Baumwolle mit Toleranz für das Herbizid Glyphosate; Erzeugung durch Insertieren des 2MEPSPS-Gens in die Sorte Coker312 mittels Agrobacterium unter der Kontrolle von Ph4a748At und TpotpC. | *Gossypium hirsutum* L. (Baumwolle) |
| A-52 | MON1445/16 98 | Monsanto Company | Baumwolle mit Toleranz für das Herbizid Glyphosate; Erzeugung durch Insertieren einer natürlichen Glyphosat-toleranten Form des Enzyms 5-Enolpyruvylshikimat-3-phosphatsynthase (EPSPS) aus dem A. tumefaciens-Stamm CP4. | *Gossypium hirsutum* L. (Baumwolle) |
| A-53 | MON15985 x MON88913 | Monsanto Company | Baumwolle mit einer Kombination von Insektenresistenz und Glyphosate-Toleranz; Erzeugung durch traditionelles Kreuzen der Elternlinien MON88913 (OECD-Bezeichnung: MON-88913-8) und 15985 (OECD-Bezeichnung: MON-15985-7). Glyphosate-Toleranz stammt von der Linie MON88913, die zwei Gene enthält, die für das Enzym 5-Enolypyruvylshikimat-3-phosphatsynthase (EPSPS) aus dem Agrobacterium tumefaciens-Stamm CP4 codieren. Die Insektenresistenz stammt von der Linie MON15985, die durch Transformation der Elternsorte DP50B, die Event 531 (Expression des Cry1Ac-Proteins) enthielt, mit aufgereinigter Plasmid-DNA, die das cry2Ab-Gen aus B. thuringiensis subsp. kurstaki enthielt, erzeugt wurde. | *Gossypium hirsutum L.* (Baumwolle) |
| A-54 | MON-15985-7 x MON-∅1445-2 | Monsanto Company | Baumwolle mit einer Kombination von Insektenresistenz und Herbizidtoleranz; Erzeugung durch traditionelles Kreuzen der Elternlinien 15985 (OECD-Bezeichnung: MON-15985-7) und MON-1445 (OECD-Bezeichnung: MON-∅1445-2). | *Gossypium hirsutum L.* (Baumwolle) |
| A-55 | MON531/757 /1076 | Monsanto Company | Insektenresistente Baumwolle; Erzeugung durch Insertieren des cry1Ac-Gens aus Bacillus thuringiensis subsp. kurstaki HD-73 (B.t.k.). | *Gossypium hirsutum L.* (Baumwolle) |
| A-56 | MON88913 | Monsanto | Baumwolle mit Toleranz für das Herbizid Glyphosate; Erzeugung durch Insertieren von zwei Genen für das Enzym 5-Enolypyruvylshikimat-3-phosphatsynthase (EPSPS) aus dem Agrobacterium tumefaciens-Stamm CP4. | *Gossypium hirsutum* L. (Baumwolle) |
| A-57 | MON-∅∅531-6 x MON-∅1445-2 | Monsanto Company | Baumwolle mit einer Kombination von Insektenresistenz und Herbizidtoleranz; Erzeugung durch traditionelles Kreuzen der Elternlinien MON531 (OECD-Bezeichnung: MON-∅∅531-6) und MON-1445 (OECD-Bezeichnung: MON-∅∅1445-2). | *Gossypium hirsutum* L. (Baumwolle) |
| A-58 | X81359 | BASF Inc. | Toleranz für Imidazolinonherbizide durch Selektieren auf eine natürlich vorkommende Mutante. | *Helianthus annuus* (Sonnenblume) |
| A-59 | RH44 | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. | *Lens culinaris* (Linse) |
| A-60 | FP967 | University of Saskatchewan, Crop Dev. Centre | Eine Acetolactatsynthase (ALS)-Variante wurde von einer Chlorsulfuron-toleranten Linie von A. thaliana erhalten und zur Transformation von Flachs eingesetzt. | *Linum usitatissimum* L. (Flachs, Lein) |
| A-61 | 5345 | Monsanto Company | Resistenz gegen Schadlepidopteren durch Einführen des cry1Ac-Gens aus Bacillus thuringiensis subsp. Kurstaki. | *Lycopersicon esculentum* (Tomate) |
| A-62 | 8338 | Monsanto Company | Einführung einer Gensequenz, die für das Enzym 1-Aminocyclopropan-1-carbonsäuredeaminase (ACCd) codiert, das die Vorstufe des Fruchtreifungshormons Ethylen metabolisiert. | *Lycopersicon esculentum* (Tomate) |
| A-63 | 1345-4 | DNA Plant Technology Corporation | Tomaten mit verzögerter Reife wurden dadurch erzeugt, dass man eine zusätzliche Kopie eines verkürzten Gens für die 1-Aminocyclopropan-1-carbonsäure (ACC) -Synthase insertierte, was zur Herunterregulation der endogenen ACC-Synthase und zu einer verringerten Ethylenakkumulation führte. | *Lycopersicon esculentum* (Tomate) |
| A-64 | 35 1 N | Agritope Inc. | Einführung einer Gensequenz, die für das Enzym S-Adenosylmethioninhydrolase codiert, das die Vorstufe des Fruchtreifungshormons Ethylen metabolisiert. | *Lycopersicon esculentum* (Tomate) |
| A-65 | B, Da, F | Zeneca Seeds | Tomaten mit verzögertem Weichwerden wurden dadurch erzeugt, dass man eine verkürzte Version des Gens für die Polygalacturonase (PG) in sense- oder antisense-Orientierung insertierte, um die Expression des endogenen PG-Gens zu reduzieren und so den Pektinabbau zu reduzieren. | *Lycopersicon esculentum* (Tomate) |
| A-66 | FLAVR SAVR | Calgene Inc. | Tomaten mit verzögertem Weichwerden wurden dadurch erzeugt, dass man eine zusätzliche Kopie des Gens für die Polygalacturonase (PG) in antisense-Orientierung insertierte, um die Expression des endogenen PG-Gens zu reduzieren und so den Pektinabbau zu reduzieren. | *Lycopersicon esculentum* (Tomate) |
| A-67 | J101,J163 | Monsanto Company und Forage Genetics International | Eine für das Herbizid Glyphosate tolerante Luzerne wurde dadurch erzeugt, dass man ein Gen für das Enzym 5-Enolypyruvylshikimat-3-phosphatsynthase (EPSPS) aus dem Agrobacterium tumefaciens-Stamm CP4 insertierte. | *Medicago sativa* (Luzerne) |
| A-68 | C/F/93/308-02 | Societe National d'Exploitation des Tabacs et Allumettes | Toleranz für die Herbizide Bromoxynil und Ioxynil durch Einbau des Nitrilasegens aus Klebsiella pneumoniae. | *Nicotiana tabacum* L. (Tabak) |
| A-69 | Vector 21-41 | Vector Tobacco Inc. | Reduzierter Nikotingehalt durch Einführung einer zweiten Kopie der Chinolinsäurephosphoribosyltransferase (QTPase) aus dem Tabak in antisense-Orientierung. Das für NPTII codierende Gen aus E. coli wurde als Selektionsmarker eingeführt, um Transformanten zu identifizieren. | *Nicotiana tabacum* L. (Tabak) |
| A-70 | CL121, CL141, CFX51 | BASF Inc. | Toleranz für das Iimidazolinonherbizid Imazethapyr wurde durch chemische Mutagenese des Enzyms Acetolactatsynthase (ALS) mittels Ethylmethansulfonat (EMS) induziert. | *Oryza sativa* (Reis) |
| A-71 | IMINTA-1, IMINTA-4 | BASF Inc. | Toleranz für Imidazolinonherbizide wurde durch chemische Mutagenese des Enzyms Acetolactatsynthase (ALS) mittels Natriumazid induziert. | *Oryza sativa* (Reis) |
| A-72 | LLRICE06, LLRICE62 | Aventis CropScience | Für das Herbizid Glufosinate-Ammonium toleranter Reis; Erzeugung durch Insertieren eines modifizierten Gens für die Phosphinothricinacetyltransferase (PAT) aus dem Bodenbakterium Streptomyces hygroscopicus). | *Oryza sativa* (Reis) |
| A-73 | LLRICE601 | Bayer Crop-Science (Aventis CropScience (AgrEvo)) | Für das Herbizid Glufosinate-Ammonium toleranter Reis; Erzeugung durch Insertieren eines modifizierten Gens für die Phosphinothricinacetyltransferase (PAT) aus dem Bodenbakterium Streptomyces hygroscopicus). | *Oryza sativa* (Reis) |
| A-74 | C5 | United States Department of Agriculture-Agricultural Research Service | Pflaumenbaum mit Resistenz gegen das Plum-Pox-Virus (PPV), Herstellung durch Agrobacteriumvermittelte Transformation mit einem Hüllproteingen (CP) des Virus. | *Prunus domestica* (Pflaume) |
| A-75 | PWC16 | BASF Inc. | Toleranz für das Imidazolinon-Herbizid Imazethapyr wurde durch chemische Mutagenese des Enzyms Acetolactatsynthase (ALS) mittels Ethylmethansulfonat (EMS) induziert. | *Oryza sativa* (Reis) |
| A-76 | ATBT04-6, ATBT04-27, ATBT04-30, ATBT04-31, ATBT04-36, SPBT02-5, SPBT02-7 | Monsanto Company | Kartoffelkäferresistente Kartoffeln, Erzeugung durch Insertieren des cry3A-Gens aus Bacillus thuringiensis (subsp. tenebrionis). | *Solanum tuberosum* L. (Kartoffel) |
| A-77 | BT6, BT10, BT12, BT16, BT17, BT18, BT23 | Monsanto Company | Kartoffelkäferresistente Kartoffeln, Erzeugung durch Insertieren des cry3A-Gens aus Bacillus thuringiensis (subsp. tenebrionis). | *Solanum tuberosum* L. (Kartoffel) |
| A-78 | RBMT15-101, SEMT15-02, SEMT15-15 | Monsanto Company | Kartoffeln mit Resistenz gegen den Kartoffelkäfer und das Y-Virus der Kartoffel (PVY); Erzeugung durch Insertieren des cry3A-Gens aus Bacillus thuringiensis (subsp. tenebrionis) und des PVY-Gens für das Hüllprotein. | *Solanum tuberosum* L. (Kartoffel) |
| A-79 | RBMT21-129, RBMT21-350, | Monsanto Company | Kartoffeln mit Resistenz gegen den Kartoffelkäfer und das Kartoffel-Blattrollvirus (PLRV); Erzeugung durch Insertieren des cry3A-Gens aus Bacillus thuringiensis (subsp. tenebrionis und des PLRV-Gens für Replikase. | *Solanum tuberosum* L. (Kartoffel) |
| A-80 | AP205CL | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. | *Triticum aestivum* (Weizen) |
| A-81 | AP602CL | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. | *Triticum aestivum* (Weizen) |
| A-82 | BW255-2, BW238-3 | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. | *Triticum aestivum* (Weizen) |
| A-83 | BW7 | BASF Inc. | Toleranz gegenüber Imidazolinonherbiziden, induziert durch chemische Mutagenese des Gens für die Acetohydroxysäuresynthase (AHAS) unter Verwendung von Natriumazid. | *Triticum aestivum* (Weizen) |
| A-84 | MON71800 | Monsanto Company | Glyphosatetolerante Weizensorte; Erzeugung durch Insertieren eines modifizierten Gens für die 5-Enolpyruvylshikimat-3-phosphatsynthase (EPSPS) aus dem Bodenbakterium Agrobacterium tumefaciens Stamm CP4. | *Triticum aestivum* (Weizen) |
| A-85 | SWP965001 | Cyanamid Crop Protection | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. | *Triticum aestivum* (Weizen) |
| A-86 | Teal 11A | BASF Inc. | Selektion auf eine mutagenisierte Version des Enzyms Acetohydroxysäuresynthase (AHAS), auch unter der Bezeichnung Acetolactatsynthase (ALS) oder Acetolactatpyruvatlyase bekannt. | *Triticum aestivum* (Weizen) |
| A-87 | 176 | Syngenta Seeds, Inc. | Insektenresistenter Mais; Erzeugung durch Insertieren des cry1Ab-Gens aus Bacillus thuringiensis subsp. kurstaki. Die genetische Modifikation vermittelt eine Resistenz gegen Schädigung durch den Maiszünsler. | *Zea mays* L. (Mais) |
| A-88 | 3751IR | Pioneer Hi-Bred International Inc. | Selektion von somaklonalen Varianten durch Embryokultur auf Imidazolinon-haltigen Medien. | *Zea mays* L. (Mais) |
| A-89 | 676, 678, 680 | Pioneer Hi-Bred International Inc. | Pollensteriler Mais mit Toleranz für das Herbizid Glufosinate-Ammonium; Erzeugung durch Insertieren von Genen für die DNA-Adeninmethylase und die Phosphinothricinacetyltransferase (PAT) aus Escherichia coli bzw. Streptomyces viridochromogenes. | *Zea mays* L. (Mais) |
| A-90 | ACS-ZM∅∅3-2 x MON-∅∅81∅-6 | Bayer Crop-Science (Aventis CropScience (AgrEvo)) | Maishybrid mit einer Kombination aus Insektenresistenz und Herbizidtoleranz; Ableitung durch traditionelles Kreuzen der Elternlinien T25 (OECD-Bezeichnung: ACS-ZM∅∅3-2) und MON810 (OECD-Bezeichnung: MON-∅∅81∅-6). | *Zea mays* L. (Mais) |
| A-91 | B16 (DLL25) | Dekalb Genetics Corporation | Mais mit Toleranz für das Herbizid Glufosinate-Ammonium; Erzeugung durch Insertieren des Gens für die Phosphinothricinacetyltransferase (PAT) aus Streptomyces hygroscopicus. | *Zea mays* L. (Mais) |
| A-92 | BT11 (X4334CBR, X4734CBR) | Syngenta Seeds, Inc. | Insektenresistenter und herbizidtoleranter Mais; Erzeugung durch Insertieren des cry1Ab-Gens aus Bacillus thuringiensis subsp. kurstaki, und des Gens für die Phosphinothricin-N-acetyltransferase (PAT) aus S. viridochromogenes. | *Zea mays* L. (Mais) |
| A-93 | BT11 x MIR604 | Syngenta Seeds, Inc. | Mais mit einer Kombination von Insektenresistenz und Herbizidtoleranz; Erzeugung durch traditionelles Kreuzen der Elternlinien BT11 (nur für die OECD gültige Bezeichnung: SYN-BT∅11-1) und MIR604 (nur für die OECD gültige Bezeichnung: SYN-IR6∅5-5). Die Resistenz gegen den Maiszünsler und die Toleranz für das Herbizid Glufosinate-Ammonium (Liberty) stammt von BT11, die das cry1Ab-Gen aus Bacillus thuringiensis subsp. kurstaki enthält, und das Gen für die Phosphinothricin-N-acetyltransferase (PAT) aus S. viridochromogenes. Die Resistenz gegen den Maiswurzelbohrer stammt von MIR604, die das mcry3A-Gen aus Bacillus thuringiensis enthält. | *Zea mays* L. (Mais) |
| A-94 | BT11 x MIR604 x GA21 | Syngenta Seeds, Inc. | Mais mit einer Kombination von Insektenresistenz und Herbizidtoleranz; Erzeugung durch traditionelles Kreuzen der Elternlinien BT11 (nur für die OECD gültige Bezeichnung: SYN-BT∅011-1), MIR604 (nur für die OECD gültige Bezeichnung: SYN-IR6∅5-5) und GA21 (nur für die OECD gültige Bezeichnung: MON- ∅ ∅ ∅21-9). Die Resistenz gegen den Maiszünsler und die Toleranz für das Herbizid Glufosinate-Ammonium (Liberty) stammt von BT11, die das cry1Ab-Gen aus Bacillus thuringiensis subsp. kurstaki enthält, und das Gen für die Phosphinothricin-N-acetyltransferase (PAT) aus S. viridochromogenes. Die Resistenz gegen den Maiswurzelbohrer stammt von MIR604, die das mcry3A-Gen aus Bacillus thuringiensis enthält. Die Toleranz für das Herbizid Glyphosate stammt von GA21, die ein modifiziertes EPSPS-Gen aus Mais enthält. | *Zea mays* L. (Mais) |
| A-95 | CBH-351 | Aventis CropScience | Mais mit Insektenresistenz und Toleranz für das Herbizid Glufosinate-Ammonium; Entwicklung durch Insertieren des Gens für das Cry9C-Protein aus Bacillus thuringiensis subsp. tolworthi und des Gens für die Phosphinothricinacetyltransferase (PAT) aus Streptomyces hygroscopicus. | *Zea mays* L. (Mais) |
| A-96 | DAS-06275-8 | DOW AgroSciences LLC | Maissorte mit Resistenz gegen Lepidoptereninsekten und Toleranz für das Herbizid Glufosinate-Ammonium; Erzeugung durch Insertieren des cry1F-Gens aus Bacillus thuringiensis var. aizawai und der Phosphinothricinacetyltransferase (PAT) aus Streptomyces hygroscopicus. | *Zea mays* L. (Mais) |
| A-97 | DAS-59122-7 | DOW AgroSciences LLC und Pioneer Hi-Bred International Inc. | Mais mit Resistenz gegen den Maiswurzelbohrer; Erzeugung durch Insertieren des cry34Ab1- und des cry35Ab1-Gens aus dem Bacillus thuringiensis-Stamm PS149B1. Das für PAT codierende Gen aus Streptomyces viridochromogenes wurde als Selektionsmarker eingeführt. | *Zea mays* L. (Mais) |
| A-98 | DAS-59122-7 x NK603 | DOW AgroSciences LLC und Pioneer Hi-Bred International Inc. | Mais mit einer Kombination von Insektenresistenz und Herbizidtoleranz; Erzeugung durch traditionelles Kreuzen der Elternfinien DAS-59122-7 (nur für die OECD gültige Bezeichnung: DAS-59122-7) mit NK603 (nur für die OECD gültige Bezeichnung: MON-∅∅6∅3-6). Die Resistenz gegen den Maiswurzelbohrer stammt von der Linie DAS-59122-7, die das cry34Ab1- und das cry35Ab1-Gen aus dem Bacillus thuringiensis-Stamm PS149B1 enthält. Die Toleranz für das Herbizid Glyphosate stammt von NK603. | *Zea mays* L. (Mais) |
| A-99 | DAS-59122-7 x TC1507 x NK603 | DOW AgroSciences LLC und Pioneer Hi-Bred International Inc. | Mais mit einer Kombination von Insektenresistenz und Herbizidtoleranz; Erzeugung durch traditionelles Kreuzen der Elternlinien DAS-59122-7 (nur für die OECD gültige Bezeichnung: DAS-59122-7) und TC1507 (nur für die OECD gültige Bezeichnung: DAS-01507-1) mit NK603 (nur für die OECD gültige Bezeichnung: MON-∅∅6∅3-6). Die Resistenz gegen den Maiswurzelbohrer stammt von der Linie DAS-59122-7, die das cry34Ab1- und das cry35Ab1-Gen aus dem Bacillus thuringiensis-Stamm PS149B1 enthält. Die Lepidopterenresistenz und die Toleranz für das Herbizid Glufosinate-Ammonium stammen von TC1507. Die Toleranz für das Herbizid Glyphosate stammt von NK603. | *Zea mays* L. (Mais) |
| A-100 | DAS-01507-1 x MON-00603-6 | DOW AgroSciences LLC | Mais mit einer Kombination von Insektenresistenz und Herbizidtoleranz; Erzeugung durch traditionelles Kreuzen der Elternlinien 1507 (OECD-Bezeichnung: DAS-01507-1) und NK603 (OECD-Bezeichnung: MON-∅∅6∅3-6). | *Zea mays* L. (Mais) |
| A-101 | DBT418 | Dekalb Genetics Corporation | Mais mit Insektenresistenz und Toleranz für das Herbizid Glufosinate-Ammonium; Entwicklung durch Insertieren von Genen für das Cry1AC-Protein aus Bacillus thuringiensis subsp kurstaki und der Phosphinothricinacetyltransferase (PAT) aus Streptomyces hygroscopicus. | *Zea mays* L. (Mais) |
| A-102 | DK404SR | BASF Inc. | Somaklonale Varianten mit einer modifizierten Acetyl-CoA-Carboxylase (ACCase) wurden durch Embryokultur auf mit Sethoxydim angereichertem Medium selektiert. | *Zea mays* L. (Mais) |
| A-103 | Event 3272 | Syngenta Seeds, Inc. | Maislinie, die ein hitzestabiles Alpha-Amylasegen amy797E für die Ethanolproduktion mit dem Trockenvermahlungsverfahren exprimiert. Das Phosphomannoseisomerase-Gen aus E. coli wurde als Selektionsmarker eingesetzt. | *Zea mays* L. (Mais) |
| A-104 | EXP1910IT | Syngenta Seeds, Inc. (früher Zeneca Seeds) | Eine Toleranz für das Imidazolinonherbizid Imazethapyr wurde durch chemische Mutagenese des Enzyms Acetolactatsynthase (ALS) mit Hilfe von Ethylmethansulfonat (EMS) induziert. | *Zea mays* L. (Mais) |
| A-105 | GA21 | Monsanto Company | Eine modifizierte 5-Enolpyruvylshikimat-3-phosphatsynthase (EPSPS), ein Enzym, das am Shikimat-Biosyntheseweg für die Bildung der aromatischen Aminosäuren beteiligt ist, wurde durch Beschuß mit der Genkanone induziert. | *Zea mays* L. (Mais) |
| A-106 | IT | Pioneer Hi-Bred International Inc. | Eine Toleranz für das Imidazolinonherbizid Imazethapyr wurde durch in-vitro-Selektion von somaklonalen Varianten erhalten. | *Zea mays* L. (Mais) |
| A-107 | LY038 | Monsanto Company | Veränderte Aminosäurezusammensetzung, insbesondere erhöhte Lysingehalte, durch Einführung des cordapA-Gens aus Corynebacterium glutamicum, das für das Enzym Dihydrodipicolinatsynthase (cDHDPS) codiert. | *Zea mays* L. (Mais) |
| A-108 | MIR604 | Syngenta Seeds, Inc. | Ein gegen den Maiswurzelbohrer resistenter Mais wurde durch Transformation mit einem modifizierten cry3A-Gen erzeugt. Das Phosphomannoseisomerase-Gen aus E.coli wurde als Selektionsmarker eingesetzt. | *Zea mays* L. (Mais) |
| A-109 | MIR604 x GA21 | Syngenta Seeds, Inc. | Mais mit einer Kombination von Insektenresistenz und Herbizidtoleranz; Erzeugen durch traditionelles Kreuzen der Elternlinien MIR604 (nur für die OECD gültige Bezeichnung: SYN-IR6∅5-5) und GA21 (nur für die OECD gültige Bezeichnung: MON- 00021-9). Die Resistenz gegen den Maiswurzelbohrer stammt von MIR604, die mcry3A-Gen aus Bacillus thuringiensis enthält. Die Toleranz für das Herbizid Glyphosate stammt von GA21. | *Zea mays* L. (Mais) |
| A-110 | MON80100 | Monsanto Company | Insektenresistenter Mais; Erzeugung durch Insertieren des cry1Ab-Gens aus Bacillus thuringiensis subsp. kurstaki. Die genetische Modifikation vermittelt Resistenz gegen Befall durch den Maiszünsler. | *Zea mays* L. (Mais) |
| A-111 | MON802 | Monsanto Company | Mais mit Insektenresistenz und Toleranz für das Herbizid Glyphosate; Erzeugung durch Insertieren der Gene für das Cry1Ab-Protein aus Bacillus thuringiensis und die 5-Enolpyruvylshikimat-3-posphatsynthase (EPSPS) aus dem A. tumefaciens-Stamm CP4. | *Zea mays* L. (Mais) |
| A-112 | MON809 | Pioneer Hi-Bred International Inc. | Resistenz gegen den Maiszünsler (Ostrinia nubilalis) durch Einführen eines synthetischen cry1Ab-Gens. Glyphosate-Resistenz durch Einführen der bakteriellen Version eines pflanzlichen Enzyms, der 5-Enolpyruvylshikimat-3-phosphatsynthase (EPSPS). | *Zea mays* L. (Mais) |
| A-113 | MON810 | Monsanto Company | Insektenresistenter Mais; Erzeugung durch Insertieren einer verkürzten Form des cry1Ab-Gens aus Bacillus thuringiensis subsp. kurstaki HD-1. Die genetische Modifikation vermittelt eine Resistenz gegen Befall durch den Maiszünsler. | *Zea mays* L. (Mais) |
| A-114 | MON810 x MON88017 | Monsanto Company | Mais mit einer Kombination von Insektenresistenz und Glyphosate-Toleranz; Erzeugung durch traditionelles Kreuzen der Elternlinien MON810 (OECD-Bezeichnung: MON-∅∅81∅-6) und MON88017 (OECD-Bezeichnung: MON-88∅17-3). Die Resistenz gegen den Maiszünsler stammt von einer verkürzten Form des cry1Ab-Gens aus Bacillus thuringiensis subsp. kurstaki HD-1, die in MON810 vorliegt. Die Resistenz gegen den Maiswurzelbohrer stammt vom cry3Bb1-Gen aus Bacillus thuringiensis subspecies kumamotoensis, Stamm EG4691, das in MON88017 vorliegt. Die Toleranz für Glyphosate stammt von einem Gen für die 5-Enolpyruvylshikimat-3-phosphatsynthase (EPSPS) aus dem Agrobacterium tumefaciens-Stamm CP4, das in MON88017 vorliegt. | *Zea mays* L. (Mais) |
| A-115 | MON832 | Monsanto Company | Einführung der Glyphosate-Oxidase (GOX) und einer modifizierten 5-Enolpyruvylshikimat-3-phosphatsynthase (EPSPS), eines Enzyms, das am Shikimat-Biosyntheseweg für die Bildung der aromatischen Aminosäuren beteiligt ist, durch Beschuß mit der Genkanone. | *Zea mays* L. (Mais) |
| A-116 | MON863 | Monsanto Company | Mais mit Resistenz gegen den Maiswurzelbohrer; Erzeugung durch Insertieren des cry3Bb1-Gens aus Bacillus thuringiensis subsp. kumamotoensis. | *Zea mays* L. (Mais) |
| A-117 | MON88017 | Monsanto Company | Mais mit Resistenz gegen den Maiswurzelbohrer; Erzeugung durch Insertieren des cry3Bb1-Gens aus Bacillus thuringiensis subsp. Kumamotoensis, Stamm EG4691. Eine Toleranz für Glyphosate wurde dadurch erhalten, dass man ein Gen für die 5-Enolpyruvylshikimat-3-Phosphatsynthase (EPSPS) aus dem Agrobacterium tumefaciens-Stamm CP4 insertierte. | *Zea mays* L. (Mais) |
| A-118 | MON89034 | Monsanto Company | Mais-Event, das zwei unterschiedliche insektizide Proteine aus Bacillus thuringiensis, die Resistenz gegen verschiedene Schadlepigopteren vermittelt, exprimiert. | *Zea mays* L. (Mais) |
| A-119 | MON89034 x MON88017 | Monsanto Company | Mais mit einer Kombination von Insektenresistenz und Glyphosate-Toleranz; Erzeugung durch traditionelles Kreuzen der Elternlinien MON89034 (OECD-Bezeichnung: MON-89 034-3) und MON88017 (OECD-Bezeichnung: MON-88∅17-3). Die Lepiopterenrresistenz stammt von zwei cry-Genen, die in MON89043 vorliegen. Die Resistenz gegen den Maiswurzelbohrer stammt von einem einzelnen cry-Gen, und die Toleranz für Glyphosate stammt von einem Gen für die 5-Enolpyruvylshikimat-3-phosphatsynthase (EPSPS) aus dem Agrobacterium tumefaciens, das in MON88017 vorliegt. | *Zea mays* L. (Mais) |
| A-120 | MON-00603-6 x MON-00810-6 | Monsanto Company | Maishybrid mit einer Kombination von Insektenresistenz und Herbizidtoleranz, Erzeugung durch traditionelles Kreuzen der Elternlinien NK603 (OECD-Bezeichnung: MON-∅∅6∅3-6) und MON810 (OECD-Bezeichnung: MON-∅∅81∅-6). | *Zea mays* L. (Mais) |
| A-121 | MON-00810-6 x LY038 | Monsanto Company | Mais mit einer Kombination von Insektenresistenz und erhöhtem Lysingehalt, Erzeugung durch traditionelles Kreuzen der Elternlinien MON810 (OECD-Bezeichnung: MON-∅∅81∅-6) und LY038 (OEC-Bezeichnung: REN-∅∅∅38-3). | *Zea mays* L. (Mais) |
| A-122 | MON-00863-5 x MON-00603-6 | Monsanto Company | Maishybrid mit einer Kombination von Insektenresistenz und Herbizidtoleranz, Erzeugung durch traditionelles Kreuzen der Elternlinien MON863 (OECD-Bezeichnung: MON-∅∅863-5) und NK603 (OECD-Bezeichnung: MON-∅∅6∅3-6). | *Zea mays* L. (Mais) |
| A-123 | MON-00863-5 x MON-∅∅81∅-6 | Monsanto Company | Maishybrid mit einer Insektenresistenzkombination; Erzeugung durch traditionelles Kreuzen der Elternlinien MON863 (OECD-Bezeichnung: MON-∅∅863-5) und MON810 (OECD-Bezeichnung: MON-∅∅81∅-6) | *Zea mays* L. (Mais) |
| A-124 | MON-∅∅863-5 x MON-∅∅81∅-6 x MON-∅∅6∅3-6 | Monsanto Company | Maishybrid mit einer Kombination von Insektenresistenz und Herbizidtoleranz, Erzeugung durch traditionelles Kreuzen des kombinationshaltigen Hybriden MON-∅∅863-5 x MON-∅∅81∅-6 und NK603 (OECD-Bezeichnung: MON-∅∅6∅3-6). | *Zea mays* L. (Mais) |
| A-125 | MON-∅∅∅21-9 x MON-∅∅81∅-6 | Monsanto Company | Maishybrid mit einer Kombination von Insektenresistenz und Herbizidtoleranz, Ableitung durch traditionelles Kreuzen der Elternlinien GA21 (OECD-Bezeichnung: MON-∅∅∅21-9) und MON810 (OECD-Bezeichnung: MON-∅∅81∅-6). | *Zea mays* L. (Mais) |
| A-126 | MS3 | Bayer Crop-Science (Aventis CropScience (AgrEvo)) | Pollen sterilität durch Expression des Barnase-Ribonuklease-Gens aus Bacillus amyloliquefaciens; die PPT-Resistenz wurde über die PPT-Acetyltransferase (PAT) erzielt. | *Zea mays* L. (Mais) |
| A-127 | MS6 | Bayer Crop-Science (Aventis CropScience (AgrEvo)) | Pollen sterilität durch Expression des Barnase-Ribonuklease-Gens aus Bacillus amyloliquefaciens; die PPT-Resistenz wurde über die PPT-Acetyltransferase (PAT) erzielt. | *Zea mays* L. (Mais) |
| A-128 | NK603 | Monsanto Company | Einführung einer modifizierten *5-*Enolpyruvylshikimat-3-phosphatsynthase (EPSPS), eines Enzyms, das am Shikimat-Biosyntheseweg für die Bildung der aromatischen Aminosäuren beteiligt ist, durch Beschuß mit der Genkanone. | *Zea mays* L. (Mais) |
| A-129 | SYN-BT∅11-1 x MON-∅∅∅21-9 | Syngenta Seeds, Inc. | Mais mit einer Kombination von Insektenresistenz und Herbizidtoleranz, Erzeugung durch traditionelles Kreuzen der Elternlinien BT11 (nur für die OECD gültige Bezeichnung: SYN-BT∅11-1) und GA21 (nur für die OECD gültige Bezeichnung: MON-∅∅∅21-9). | *Zea mays* L. (Mais) |
| A-130 | T14, T25 | Bayer CropScience (Aventis CropScience (AgrEvo)) | Mais mit Toleranz für das Herbizid Glufosinate; Erzeugung durch Insertieren des Gens für die Phosphinothricin-N-acetyltransferase (PAT) des aeroben Actinomyceten Streptomyces viridochromogenes. | *Zea mays* L. (Mais) |
| A-131 | TC1507 | Mycogen (c/o Dow AgroSciences); Pioneer (c/o Dupont) | Mais mit Insektenresistenz und Toleranz für das Herbizid Glufosinate-Ammonium; Erzeugung durch Insertieren des crylF-Gens aus Bacillus thuringiensis var. aizawai und des Gens für die Phosphinothricin-N-acetyltransferase aus Streptomyces viridochromogenes. | *Zea mays* L. (Mais) |
| A-132 | TC1507 x DAS-59122-7 | DOW AgroSciences LLC und Pioneer Hi-Bred International Inc. | Mais mit einer Kombination aus Insektenresistenz und Herbizidtoleranz; Herstellung durch traditionelles Kreuzen der Elternlinien TC1507 (nur für die OECD gültige Bezeichnung: DAS-01507-1) mit DAS-59122-7 (nur für die OECD gültige Bezeichnung: DAS-59122-7). Die Resistenz gegen Lepidopteren-Insekten stammt von TC1507 aufgrund des Vorhandenseins des crylF-Gens aus Bacillus thuringiensis var. aizawai. Die Resistenz gegen den Maiswurzelbohrer stammt von der Linie DAS-59122-7, die das cry34Ab1- und das cry35Ab1-Gen aus dem Bacillus thuringiensis-Stamm PS149B1 enthält. Die Toleranz für das Herbizid Glufosinate-Ammonium stammt von TC1507 von dem Gen für die Phosphinothricin-N-acetyltransferase aus Streptomyces viridochromogenes. | *Zea mays* L. (Mais) |
| A-133 | DP-∅9814∅-6 (Event 98140) | Pioneer Hi-Bred International Inc. | Die Maislinie 98140 wurde genetisch modifiziert, das GAT4621-Protein (Glyphosateacetyltransferase) und ZM-HRA-Protein (modifizierte Mais-Version einer Acetolactatsynthase) zu exprimieren. Das GAT4621-Protein, das von dem gat4621-Gen codiert wird, vermittelt Toleranz für Glyphosate-enthaltende Herbizide durch Acetylierung von Glyphosate, wodurch dieses nichtphytotoxisch wird. Das ZM- HRA-Protein, das von dem zm-hra-Gen codiert wird, vermittelt eine Toleranz für die Herbizidklasse der ALS-Hemmer. | *Zea mays* L. (Mais) |

In einer Ausführungsform der Erfindung werden die Pflanzen A-1 bis A-133 von Tabelle A ganz oder teilweise bzw. wird Vermehrungsmaterial dieser Pflanzen mit einer Verbindung der Formel (I) allein oder in Form von Zusammensetzungen, die eine Verbindung der Formel (I) umfassen, behandelt oder in Kontakt gebracht.

### Tabelle B

Nicht allumfassende Liste von transgenen Pflanzen für die Durchführung der Erfindung aus der APHIS-Datenbank des United States Department of Agriculture (USDA). Die Datenbank findet sich unter: http://www.aphis.usda.gov/animal_welfare/efoia/index.shtml.

In dieser Tabelle verwendete Abkürzungen:
CMV-Gurkenmosaikvirus
CPB-Kartoffelkäfer
PLRV- Kartoffel-Blattrollvirus
PRSV-Papaya-Ringspot-Virus
PVY-Kartoffel-Y-Virus
WMV2- Wassermelonenmosaikvirus 2
ZYMV-Zucchini-Gelbmosaikvirus

| **Nr.** | **Antrag** | **Antragserweiterung Nummer** | **Institution** | **Pflanze** | **Merkmal** | **Transformations-Event oder Linie** | **EA-Abschlußbeurteilung & Bestimmung** |
|---|---|---|---|---|---|---|---|
| B-1 | 08-315-01p | | Florigene | Rose | Veränderte Blütenfarbe | Rosa X hybrida | |
| B-2 | 07-253-01p | | Syngenta | Mais | Lepidopterenresistenz | MIR-162 Mais | |
| B-3 | 07-152-01p | | Pioneer | Mais | Glyphosate- & Imidazolinontoleranz | HT-98140 | |
| B-4 | 07-108-01p | | Syngenta | Baumwolle | Lepidopterenresistenz | COT67B | |
| B-5 | 06-354-01p | | Pioneer | Sojabohne | Hoher Ölsäuregehalt | DP-3∅5423-1 | |
| B-6 | 06-332-01p | | Bayer Crop Science | Baumwolle | Glyphosatetoleranz | GHB614 | |
| B-7 | OS-280-01p | | Syngenta | Mais | Hitzestabile Alpha-Amylase | 3272 | |
| B-8 | 04-337-01p | | University of Florida | Papaya | Resistenz gegen Papaya-Ringspot- Virus | X17-2 | |
| B-9 | 04-110-01p | | Monsanto & Forage Genetics | Alfalfa | Glyphosatetoleranz | J101, J163 | 04-110-01p com |
| B-10 | 03-104-01p | | Monsanto & Scotts | Weißes Straußgras | Glyphosatetoleranz | ASR368 | |
| B-11 | 06-298-01p | | Monsanto | Mais | Maiszünslerresistenz | MON 89034 | 06-298-01p com |
| B-12 | 06-271-01p | | Pioneer | Sojabohne | Glyphosate- & Acetolactatsynthasetoleranz | 356043 (DP-356∅43-5) | 06-271-01p com |
| B-13 | 06-234-01p | 98-329-01p | Bayer Crop Science | Reis | Phosphinothricintoleranz | LLRICE601 | 06-234-01p com |
| B-14 | 06-178-01p | | Monsanto | Sojabohne | Glyphosatetoleranz | MON 89788 | 06-178-01p com |
| B-15 | 04-362-01p | | Syngenta | Mais | Schutz gegen den Maiswurzelbohrer | MIR604 | 04-362-01p com |
| B-16 | 04-264-01p | | ARS | Pflaume | Resistenz gegen das Plum-Pox-Virus | C5 | 04-264-01p com |
| B-17 | 04-229-01p | | Monsanto | Mais | Hoher Lysingehalt | LY038 | 04-229-01p com |
| B-18 | 04-125-01p | | Monsanto | Mais | Maiswurzelbohrerresistenz | MON 88017 | 04-125-01p com |
| B-19 | 04-086-01p | | Monsanto | Baumwolle | Glyphosate-Toleranz | MON 88913 | 04-086-01p com |
| B-20 | 03-353-01p | | Dow | Mais | Maiswurzelbohrerresistenz | 59122 | 03-353-01p com |
| B-21 | 03-323-01p | | Monsanto | Zuckerrübe | Glyphosate-Toleranz | H7-1 | 03-323-01p com |
| B-22 | 03-181-01p | 00-136-01p | Dow | Mais | Lepidopteren-Resistenz & Phosphinothricintoleranz | TC-6275 | 03-181-01p com |
| B-23 | 03-155-01p | | Syngenta | Baumwolle | Lepidopterenresistenz | COT 102 | 03-155-01p com |
| B-24 | 03-036-01p | | Mycogen/ Dow | Baumwolle | Lepidopterenresistenz | 281-24-236 | 03-036-01p com |
| B-25 | 03-036-02p | | Mycogen/ Dow | Baumwolle | Lepidopterenresistenz | 3006-210-23 | 03-036-02p com |
| B-26 | 02-042-01p | | Aventis | Baumwolle | Phosphinothricintoleranz | LLCotton25 | 02-042-01p com |
| B-27 | 01-324-01p | 98-216-01p | Monsanto | Raps | Glyphosate-Toleranz | RT200 | 01-324-01p com |
| B-28 | 01-206-01p | 98-278-01p | Aventis | Raps | Phosphinothricin- toleranz & Bestäubungskontrolle | MS1 & RF1/RF2 | 01-206-01p com |
| B-29 | 01-206-02p | 97-205-01p | Aventis | Raps | Phosphinothricintoleranz | Topas 19/2 | 01-206-02p com |
| B-30 | 01-137-01p | | Monsanto | Meis | Maiswurzelbohrerresistenz | MON 863 | 01-137-01p com |
| B-31 | 01-121-01p | | Vector | Tabak | Verringerter Nikotingehalt | Vector 21-41 | 01-121-01p com |
| B-32 | 00-342-01p | | Monsanto | Baumwolle | Lepidopterenresistenz | Cotton Event 15985 | 00-342-01p com |
| B-33 | 00-136-01p | | Mycogen c/o Dow & Pioneer | Mais | Lepidopteren-Resistenz & Phosphinothricintoleranz | Line 1507 | 00-136-01p com |
| B-34 | 00-011-01p | 97-099-01p | Monsanto | Mais | Glyphosate-Toleranz | NK603 | 00-011-01p com |
| B-35 | 99-173-01p | 97-204-01p | Monsanto | Kartoffel | PLRV- & CPB-Resistenz | RBMT22-82 | 99-173-01p com |
| B-36 | 98-349-01p | 95-228-01p | AgrEvo | Mais | Phosphinothricintoleranz und Pollensterilität | MS6 | 98-349-01p com |
| B-37 | 98-335-01p | | U. of Saskatchew an | Flachs | Toleranz für Sulfonylharnstoffherbizidrückstände im Boden | CDC Triffid | 98-335-01p com |
| B-38 | 98-329-01p | | AgrEvo | Reis | Phosphinothricintoleranz | LLRICE06, LLRICE62 | 98-329-01p com |
| B-39 | 98-278-01p | | AgrEvo | Raps | Phosphinothricintoleranz & Bestäubungskontrolle | MS8 & RF3 | 98-278-01p com |
| B-40 | 98-238-01p | | AgrEvo | Sojabohne | Phosphinothricintoleranz | GU262 | 98-238-01p com |
| B-41 | 98-216-01p | | Monsanto | Raps | Glyphosate-Toleranz | RT73 | 98-216-01p com |
| B-42 | 98-173-01p | | Novartis Seeds & Monsanto | Rübe | Glyphosate-Toleranz | GTSB77 | 98-173-01p com |
| B-43 | 98-014-01p | 96-068-01p | AgrEvo | Sojabohne | Phosphinothricintoleranz | A5547-127 | 98-014-01p com |
| B-44 | 97-342-01p | | Pioneer | Mais | Pollensterilität & Phosphinothricintoleranz | 676,678,680 | 97-342-01p com |
| B-45 | 97-339-01p | | Monsanto | Kartoffel | CPB- & PVY-Resistenz | RBMT15-101, SEMT15-02, SEMT15-15 | 97-339-01p com |
| B-46 | 97-336-01p | | AgrEvo | Rübe | Phosphinothricintoleranz | T-120-7 | 97-336-01p com |
| B-47 | 97-287-01p | | Monsanto | Tomate | Lepidopterenresistenz | 5345 | 97-287-01p com |
| B-48 | 97-265-01p | | AgrEvo | Mais | Phosphinothricintoleranz & Lepidopterenresistenz | CBH-351 | 97-265-01p com |
| B-49 | 97-205-01p | | AgrEvo | Raps | Phosphinothricintoleranz | T45 | 97-205-01p com |
| B-50 | 97-204-01p | | Monsanto | Kartoffel | CPB- & PLRV-Resistenz | RBMT21-129 & RBMT21-350 | 97-204-01p com |
| B-51 | 97-148-01p | | Bejo | Cichorium intybus | Pollensterilität | RM3-3, RM3-4, RM3-6 | 97-148-01p com |
| B-52 | 97-099-01p | | Monsanto | Mais | Glyphosate-Toleranz | GA21 | 97-099-01p com |
| B-53 | 97-013-01p | | Calgene | Baumwolle | Bromoxyniltoleranz & Lepidopterenresistenz | Events 31807 & 31808 | 97-013-01p com |
| B-54 | 97-008-01p | | Du Pont | Sojabohne | Verändertes Ölprofil | G94-1, G94-19, G-168 | 97-008-01p com |
| B-55 | 96-317-01p | | Monsanto | Mais | Glyphosatetoleranz & ECB-Resistenz | MON802 | 96-317-01p com |
| B-56 | 96-291-01p | | DeKalb | Mais | Maiszünslerresistenz | DBT418 | 96-291-01p com |
| B-57 | 96-248-01p | 92-196-01p | Calgene | Tomate | Veränderte Fruchtabreifung | 1 zusätzliche FLAVRSAV R Linie | 96-248-01p com |
| B-58 | 96-068-01p | | AgrEvo | Sojabohne | Phosphinothricintoleranz | W62, W98, A2704- 12, A2704-21, A5547-35 | 96-068-01p com |
| B-59 | 96-051-01p | | Cornell U | Papaya | PRSV-Resistenz | 55-1,63-1 | 96-051-01p com |
| B-60 | 96-017-01p | 95-093-01p | Monsanto | Mais | Maiszünslerresistenz | MON809 & MON810 | 96-017-01p com |
| B-61 | 95-352-01p | | Asgrow | Sommerkürbis | CMV, ZYMV, WMV2-Resistenz | CZW-3 | 95-352-01p com |
| B-62 | 95-338-01p | | Monsanto | Kartoffel | CPB-Resistenz | SBT02-5 & -7, ATBT04-6 &-27, -30, -31,-36 | 95-338-01p com |
| B-63 | 95-324-01p | | Agritope | Tomate | Veränderte Fruchtabreifung | 35 1 N | 95-324-01p com |
| B-64 | 95-256-01p | | Du Pont | Baumwolle | Sulfonylharnstoffresistenz | 19-51a | 95-256-01p com |
| B-65 | 95-228-01p | | Plant Genetic Systems | Mais | Pollensteril | MS3 | 95-228-01p com |
| B-66 | 95-195-01p | | Northrup King | Mais | Maiszünslerresistenz | Bt11 | 95-195-01p com |
| B-67 | 95-179-01p | 92-196-01p | Calgene | Tomate | Veränderte Fruchtabreifung | 2 zusätzliche FLAVRSAV R-Linien | 95-179-01p com |
| B-68 | 95-145-01p | | DeKalb | Mais | Phosphinothricintoleranz | B16 | 95-145-01p com |
| B-69 | 95-093-01p | | Monsanto | Mais | Lepidopterenresistenz | MON 80100 | 95-093-01p com |
| B-70 | 95-053-01p | | Monsanto | Tomate | Veränderte Fruchtabreifung | 8338 | 95-053-01p com |
| B-71 | 95-045-01p | | Monsanto | Baumwolle | Glyphosatetoleranz | 1445, 1698 | 95-045-01p com |
| B-72 | 95-030-01p | 92-196-01p | Calgene | Tomate | Veränderte Fruchtabreifung | 20 zusätzliche FLAVRSAV R-Linien | 95-030-01p com |
| B-73 | 94-357-01p | | AgrEvo | Mais | Phosphinothricintoleranz | T14, T25 | 94-357-01p com |
| B-74 | 94-319-01p | | Ciba Seeds | Mais | Lepidopterenresistenz | Event 176 | 94-319-01p com |
| B-75 | 94-308-01p | | Monsanto | Baumwolle | Lepidopterenresistenz | 531, 757, 1076 | 94-308-01p com |
| B-76 | 94-290-01p | | Zeneca & Petoseed | Tomate | Verringerter Polygalacturonasegehalt in der Frucht | B, Da, F | 94-290-01p com |
| B-77 | 94-257-01p | | Monsanto | Kartoffel | Coleopterenresistenz | BT6, BT10, BT12, BT16, BT17, BT18, BT23 | 94-257-01p com |
| B-78 | 94-230-01p | 92-196-01p | Calgene | Tomate | Veränderte Fruchtabreifung | 9 zusätzliche FLAVRSAV R-Linien | 94-230-01p com |
| B-79 | 94-228-01p | | DNA Plant Tech | Tomate | Veränderte Fruchtabreifung | 1345-4 | 94-228-01p com |
| B-80 | 94-227-01p | 92-196-01p | Calgene | Tomate | Veränderte Fruchtabreifung | Linie N73 1436-111 | 94-227-01p com |
| B-81 | 94-090-01p | | Calgene | Raps | Verändertes Ölprofil | pCGN3828--212/86- 18 & 23 | 94-090-01p com |
| B-82 | 93-258-01p | | Monsanto | Sojabohne | Glyphosatetoleranz | 40-3-2 | 93-258-01p com |
| B-83 | 93-196-01p | | Calgene | Baumwolle | Bromoxyniltoleranz | BXN | 93-196-01p com |
| B-84 | 92-204-01p | | Upjohn | Sommerkürbis | WMV2- & ZYMV-Resistenz | ZW-20 | 92-204-01p com |
| B-85 | 92-196-01p | | Calgene | Tomate | Veränderte Fruchtabreifung | FLAVR SAVR | 92-196-01p com |

In einer Ausführungsform der Erfindung werden die Pflanzen B-1 bis B-85 von Tabelle B ganz oder teilweise bzw. wird Vermehrungsmaterial dieser Pflanzen mit einer Verbindung der Formel (I) allein oder in Form von Zusammensetzungen, die eine Verbindung der Formel (I) umfassen, behandelt oder in Kontakt gebracht.

### Tabelle C

Nicht allumfassende Liste von Merkmalen für die Nacharbeitung der Erfindung mit Bezugnahme auf Schriften, in denen sie beschrieben sind.

| **Nr.** | **Merkmal** | **Literaturstelle** |
|---|---|---|
| C-1 | Wasserverwertungseffizienz | WO 2000/073475 |
| C-2 | Stickstoffverwertungseffizienz | WO 1995/009911 |
| | | WO 1997/030163 |
| | | WO 2007/092704 |
| | | WO 2007/076115 |
| | | WO 2005/103270 |
| | | WO 2002/002776 |
| C-3 | Verbesserte Photosynthese | WO 2008/056915 |
| | | WO 2004/101751 |
| C-4 | Nematodenresistenz | WO 1995/020669 |
| | | WO 2001/051627 |
| | | WO 2008/139334 |
| | | WO 2008/095972 |
| | | WO 2006/085966 |
| | | WO 2003/033651 |
| | | WO 1999/060141 |
| | | WO 1998/012335 |
| | | WO 1996/030517 |
| | | WO 1993/018170 |
| C-5 | Verringertes Schotenplatzen | WO 2006/009649 |
| | | WO 2004/113542 |
| | | WO 1999/015680 |
| | | WO 1999/000502 |
| | | WO 1997/013865 |
| | | WO 1996/030529 |
| | | WO 1994/023043 |
| C-6 | Blattlausresistenz | WO 2006/125065 |
| | | WO 1997/046080 |
| | | WO 2008/067043 |
| | | WO 2004/072109 |
| C-7 | Sclerotinia-Resistenz | WO 2006/135717 |
| | | WO 2006/055851 |
| | | WO 2005/090578 |
| | | WO 2005/000007 |
| | | WO 2002/099385 |
| | | WO 2002/061043 |
| C-8 | Botrytis-Resistenz | WO 2006/046861 |
| | | WO 2002/085105 |
| C-9 | Bremia-Resistenz | US 20070022496 |
| | | WO 2000/063432 |
| | | WO 2004/049786 |
| C-10 | Erwinia-Resistenz | WO 2004/049786 |
| C-11 | Closterovirus-Resistenz | WO 2007/073167 |
| | | WO 2007/053015 |
| | | WO 2002/022836 |
| C-12 | Tobamovirus-Resistenz | WO 2006/038794 |

In einer Ausführungsform der Erfindung werden die Pflanzen, die Merkmale gemäß C-1 bis C-12 von Tabelle C umfassen oder exprimieren, ganz oder teilweise bzw. wird Vermehrungsmaterial dieser Pflanzen mit einer Verbindung der Formel (I) allein oder in Form von Zusammensetzungen, die eine Verbindung der Formel (I) umfassen, behandelt oder in Kontakt gebracht.

### Tabelle D

Nicht allumfassende Liste von transgenen Events und Merkmalen, auf die die Erfindung angewandt werden kann, unter Bezugnahme auf Patentanmeldungen.

| **Nr.** | **Pflanzenart** | **Transgenes Event** | **Merkmal** | **Patentbezeichnung** |
|---|---|---|---|---|
| D-1 | Mais | PV-ZMGT32 (NK603) | Glyphosate-Toleranz | US 2007-056056 |
| D-2 | Mais | MIR604 | Insektenresistenz (Cry3a055) | EP-A 1 737 290 |
| D-3 | Mais | LY038 | Hoher Lysingehalt | US 7,157,281 |
| D-4 | Mais | 3272 | Selbstverarbeitender Mais (Alpha-Amylase) | US 2006-230473 |
| D-5 | Mais | PV-ZMIR13 (MON863) | Insektenresistenz (Cry3Bb) | US 2006-095986 |
| D-6 | Mais | DAS-59122-7 | Insektenresistenz (Cry34Ab1/Cry35Ab1) | US 2006-070139 |
| D-7 | Mais | TC1507 | Insektenresistenz (Cry1F) | US 7,435,807 |
| D-8 | Mais | MON810 | Insektenresistenz (Cry1Ab) | US 2004-180373 |
| D-9 | Mais | VIP1034 | Insektenresistenz | WO 03/052073 |
| D-10 | Mais | B16 | Glufosinate-Resistenz | US 2003-126634 |
| D-11 | Mais | GA21 | Glyphosate-Resistenz | US 6,040,497 |
| D-12 | Mais | GG25 | Glyphosate-Resistenz | US 6,040,497 |
| D-13 | Mais | GJ11 | Glyphosate-Resistenz | US 6,040,497 |
| D-14 | Mais | FI117 | Glyphosate-Resistenz | US 6,040,497 |
| D-15 | Mais | GAT-ZM1 | Glufosinate-Toleranz | WO 01/51654 |
| D-16 | Mais | DP-098140-6 | Glyphosate-Toleranz / ALS-Hemmer-Toleranz | WO 2008/112019 |
| D-17 | Weizen | Event 1 | Fusarium-Resistenz (Trichothecen- 3-O-acetyltransferase) | CA 2561992 |
| D-18 | Zuckerrübe | T227-1 | Glyphosate-Toleranz | US 2004-117870 |
| D-19 | Zuckerrübe | H7-1 | Glyphosate-Toleranz | WO 2004-074492 |
| D-20 | Sojabohne | MON89788 | Glyphosate-Toleranz | US 2006-282915 |
| D-21 | Sojabohne | A2704-12 | Glufosinate-Toleranz | WO 2006/108674 |
| D-22 | Sojabohne | A5547-35 | Glufosinate-Toleranz | WO 2006/108675 |
| D-23 | Sojabohne | DP-305423-1 | Hoher Ölsäuregehalt / ALS-Hemmer-Toleranz | WO 2008/054747 |
| D-24 | Reis | GAT-OS2 | Glufosinate-Toleranz | WO 01/83818 |
| D-25 | Reis | GAT-OS3 | Glufosinate-Toleranz | US 2008-289060 |
| D-26 | Reis | PE-7 | Insektenresistenz (Cry1Ac) | WO 2008/114282 |
| D-27 | Raps | MS-B2 | Pollensterilität | WO 01/31042 |
| D-28 | Raps | MS-BN1/RF-BN1 | Pollensterilität/-Restoration | WO 01/41558 |
| D-29 | Raps | RT73 | Glyphosate-Resistenz | WO 02/36831 |
| D-30 | Baumwolle | CE43-67B | Insektenresistenz (Cry1Ab) | WO 2006/128573 |
| D-31 | Baumwolle | CE46-02A | Insektenresistenz (Cry1Ab) | WO 2006/128572 |
| D-32 | Baumwolle | CE44-69D | Insektenresistenz (Cry1Ab) | WO 2006/128571 |
| D-33 | Baumwolle | 1143-14A | Insektenresistenz (Cry1Ab) | WO 2006/128569 |
| D-34 | Baumwolle | 1143-51B | Insektenresistenz (Cry1Ab) | WO 2006/128570 |
| D-35 | Baumwolle | T342-142 | Insektenresistenz (Cry1Ab) | WO 2006/128568 |
| D-36 | Baumwolle | event3006-210-23 | Insektenresistenz (Cry1Ac) | WO 2005/103266 |
| D-37 | Baumwolle | PV-GHGT07 (1445) | Glyphosate-Toleranz | US 2004-148666 |
| D-38 | Baumwolle | MON88913 | Glyphosate-Toleranz | WO 2004/072235 |
| D-39 | Baumwolle | EE-GH3 | Glyphosate-Toleranz | WO 2007/017186 |
| D-40 | Baumwolle | T304-40 | Insektenresistenz (Cry1Ab) | WO2008/122406 |
| D-41 | Baumwolle | Cot202 | Insektenresistenz (VIP3) | US 2007-067868 |
| D-42 | Baumwolle | LLcotton25 | Glufosinate-Resistenz | WO 2007/017186 |
| D-43 | Baumwolle | EE-GH5 | Insektenresistenz (Cry1Ab) | WO 2008/122406 |
| D-44 | Baumwolle | event 281-24-236 | Insektenresistenz (Cry1F) | WO 2005/103266 |
| D-45 | Baumwolle | Cot102 | Insektenresistenz (Vip3A) | US 2006-130175 |
| D-46 | Baumwolle | MON 15985 | Insektenresistenz (Cry1A/Cry2Ab) | US 2004-250317 |
| D-47 | Straußgras | Asr-368 | Glyphosate-Toleranz | US 2006-162007 |
| D-48 | Aubergine | EE-1 | Insektenresistenz (Cry1Ac) | WO 2007/091277 |

In einer Ausführungsform werden die Pflanzen, die ein transgenes Event gemäß D-1 bis D-48 von Tabelle D umfassen oder solch ein Merkmal exprimieren ganz oder teilweise, bzw. wird Vermehrungsmaterial dieser Pflanzen, mit einer Verbindung der Formel (I) allein oder in Form von Zusammensetzungen, die eine Verbindung der Formel (I) umfassen, behandelt oder in Kontakt gebracht.

### Tabelle E

Nicht allumfassende Liste von transgenen Events und Merkmalen und deren Handelsnamen.

| **Nr.** | **Handelsname** | **Pflanze** | **Unternehmen** | **genetisch modifizierte Eigenschaften** | **zusätzliche Informationen** |
|---|---|---|---|---|---|
| E-1 | Roundup Ready^{®} | *Beta vulgaris* (Zuckerrübe) | Monsanto Company | Toleranz für Glyphosate | |
| E-2 | InVigor^{®} | *Brassica napus* (Argentinischer Canola-Raps) | Bayer CropScience | Canola-Raps wurde mit folgendem Ergebnis genetisch modifiziert: Ø Expression eines Gens, das Toleranz für das Herbizid Glyfosinate-Ammonium vermittelt; Ø Einführung eines neuen Hybridzüchtungssystems für Canola-Raps, das auf genetisch modifizierten Pollensterilitäts-(MS) und Fertilitätsrestorer-(RF) Linien beruht; Ø Expression eines Gens für Antibiotikaresistenz | |
| E-3 | Liberty Link^{®} | *Brassica napus* (Argentinischer Canola-Raps) | BayerCropScience | Toleranz für Phosphinotricin | |
| E-4 | Roundup Ready^{®} | *Brassica napus* (Canola-Raps) | Monsanto Company | Toleranz für Glyphosate | |
| E-5 | Clearfield^{®} | (Canola-Raps) | BASF Corporation | nicht-GMO, Toleranz für Imazamox | |
| E-6 | Optimum™ GAT™ | *Glycine max* L. (Sojabohne) | Pioneer Hi-Bred International, Inc | Toleranz für Glyphosate und ALS-Herbizide | |
| E-7 | Roundup Ready^{®} | *Glycine max* L. (Sojabohne-) | Monsanto Company | Toleranz für Glyphosate | |
| E-8 | Roundup RReady2Yiel™ | *Glycine max* L. (Sojabohne) | Monsanto Company | Toleranz für Glyphosate | |
| E-9 | STS^{®} | *Glycine max* L. (Sojabohne) | DuPont | Toleranz für Sulfonylharnstoffe | |
| E-10 | YIELD GARD^{®} | *Glycine max* L. (Sojabohne) | Monsanto Company | | |
| E-11 | AFD^{®} | *Gossypium hirsutum* L. (Baumwolle) | Bayer CropScience | Zu den Linien zählen z.B. AFD5062LL, AFD5064F, AFD 5065B2F; AFD-Saatgut ist in verschiedenen Sorten mit integrierter Technologie verfügbar, wie zum Beispiel die Bollgard^{®}-, Bollgard II-, Roundup Ready-, Roundup Ready Flex- und LibertyLink^{®}-Technologien | |
| E-12 | Bollgard II^{®} | *Gossypium hirsutum* L. (Baumwolle) | Monsanto Company | MON 15985-Event: Cry2(A)b1; Cry1A(c) | |
| E-13 | Bollgard^{®} | *Gossypium hirsutum* L. (Baumwolle) | Monsanto Company | Cry 1Ac | |
| E-14 | FiberMax^{®} | *Gossypium hirsutum* L. (Baumwolle) | Bayer CropScience | | |
| E-15 | Liberty Link^{®} | *Gossypium hirsutum* L. (Baumwolle) | Bayer CropScience | Toleranz gegen Phosphinotricin | |
| E-16 | Nucotn 33B | *Gossypium hirsutum* L. (Baumwolle) | Delta Pine and Land | Bt-Toxin in den Linien von Delta Pine: Cry1Ac | |
| E-17 | Nucotn 35B | *Gossypium hirsutum* L. (Baumwolle) | Delta Pine and Land | Bt-Toxin in den Linien von Delta Pine: Cry1Ac | |
| E-18 | Nucotn^{®} | *Gossypium hirsutum* L. (Baumwolle) | Delta Pine and Land | Bt-Toxin in Linien von Delta Pine | |
| E-19 | PhytoGen™ | *Gossypium hirsutum* L. (Baumwolle) | PhytoGen Seed Company, Dow AgroSciences LLC | umfaßt Sorten, die zum Beispiel Roundup Ready flex, Widestrike enthalten | |
| E-20 | Roundup Ready Flex^{®} | *Gossypium hirsutum* L. (Baumwolle) | Monsanto Company | Toleranz für Glyphosate | |
| E-21 | Roundup Ready^{®} | *Gossypium hirsutum* L. (Baumwolle) | Monsanto Company | Toleranz für Glyphosate | |
| E-22 | Widestrike™ | *Gossypium hirsutum* L. (Baumwolle) | Dow AgroSciences LLC | Cry1F und Cry1Ac | Monsanto/Dow |
| E-23 | YIELD GARD^{®} | *Gossypium hirsutum* L. (Baumwolle) | Monsanto Company | | http://www.garstsee d.com/GarstClient/T echnology/agrisure. aspx |
| E-24 | Roundup Ready^{®} | *Medicago sativa* (Luzerne) | Monsanto Company | Toleranz für Glyphosate | |
| E-25 | Clearfield^{®} | *Oryza sativa* (Reis) | BASF Corporation | nicht-GMO, Toleranz für Imazamox | |
| E-26 | NewLeaf^{®} | *Solanum tuberosum* L. (Kartoffel) | Monsanto Company | Resistenz gegen Infektion durch Kartoffel-Blattrollvirus (PLRV) und Fraßschaden durch den Kartoffelkäfer Leptinotarsa decemlineata | |
| E-27 | NewLeaf^{®} plus | *Solanum tuberosum* L. (Kartoffel) | Monsanto Company | Resistenz gegen Infektion durch Kartoffel-Blattrollvirus (PLRV) und Fraßschaden durch den Kartoffelkäfer Leptinotarsa decemlineata | http://www.dowagro .com/phytogenlinde x.htm |
| E-28 | Proteeta^{®} | *Solanum tuberosum* L. (Kartoffel) | | | |
| E-29 | Clearfield^{®} | Sonnenblume | BASF Corporation | nicht-GMO, Toleranz für Imazamox | |
| E-30 | Roundup Ready^{®} | *Triticum aestivum* (Weizen) | Monsanto Company | Toleranz für Glyphosate, NK603 | |
| E-31 | Clearfield^{®} | Weizen | BASF Corporation | nicht-GMO, Toleranz für Imazamox | |
| E-32 | Agrisure^{®} (Familie) | *Zea mays* L. (Mais) | Syngenta Seeds, Inc. | hierzu zählen Agrisure CB/LL (BT 11-Event plus Toleranz für Phosphinotricin durch GA21-Event); Agrisure CB/LL/RW (Bt 11-Event, modifiziertes synthetisches Cry3A-Gen, Toleranz für Phosphinotricin durch GA21-Event); Agrisure GT (Toleranz für Glyphosate) ; Agrisure GT/CB/LL(Toleranz für Glyphosate und für Phosphinotricin durch GA21-Event, Bt 11-Event); Agrisure 3000GT (CB/LL/RW/GT: Toleranz für Glyphosate und gegen Phosphinotricin durch GA21-Event, Bt 11-Event, modifiziertes synthetisches Cry3A-Gen) ; Agrisure GT/RW (Toleranz für Glyphosate, modifiziertes synthetisches Cry3A-Gen) ; Agrisure RW (modifiziertes synthetisches Cry3A-Gen); Zukünftige Merkmale | |
| E-33 | BiteGard^{®} | *Zea mays* L. (Mais) | Novartis Seeds | cry1A(b) -Gen. | |
| E-34 | Bt-Xtra^{®} | *Zea mays* L. (Mais) | DEKALB Genetics Corporation | cry1Ac-Gen. | |
| E-35 | Clearfield^{®} | *Zea mays* L. (Mais) | BASF Corporation | nicht-GMO, Toleranz für Imazamox | |
| E-36 | Herculex^{®} (Familie) | *Zea mays* L. (Mais) | Dow AgroSciences LLC | | |
| E-37 | IMI^{®} | *Zea mays* L. (Mais) | DuPont | Toleranz für Imidazolinone | |
| E-38 | KnockOut^{®} | *Zea mays* L. (Mais) | Syngenta Seeds, Inc. | SYN-EV176-9: cry1A(b)-Gen. | |
| E-39 | Mavera^{®} | *Zea mays* L. (Mais) | Renessen LLC | lysinreich | http://www.dowagro .com/widestrike/ |
| E-40 | NatureGard^{®} | *Zea mays* L. (Mais) | Mycogen | cry1A(b)-Gen. | |
| E-41 | Roundup Ready^{®} | *Zea mays* L. (Mais) | Monsanto Company | Toleranz für Glyphosate | http://www.starlinkc orn.com/starlinkcor n.htm |
| E-42 | Roundup Ready^{®} 2 | *Zea mays* L. (Mais) | Monsanto Company | Toleranz für Glyphosate | |
| E-43 | SmartStax | *Zea mays* L. (Mais) | Monsanto Company | Kombination von acht Genen | |
| E-44 | StarLink^{®} | *Zea mays* L. (Mais) | Aventis CropScience ->Bayer CropScience | Cry9c-Gen. | |
| E-45 | STS^{®} | *Zea mays* L. (Mais) | DuPont | Toleranz für Sulfonylharnstoffe | |
| E-46 | YIELD GARD^{®} | *Zea mays* L. (Mais) | Monsanto Company | Mon810, Cry1Ab1; Resistenz gegen den Maiszünsler | http://www.dowagro .com/herculexlabout /herculexfamily/ |
| E-47 | YieldGard^{®} Plus | *Zea mays* L. (Mais) | Monsanto Company | Mon810xMon863, Zweierkombination, Resistenz gegen Maiszünsler und Maiswurzelbohrer | |
| E-48 | YieldGard^{®} Rootworm | *Zea mays* L. (Mais) | Monsanto Company | Mon863, Cry3Bb1, Resistenz gegen Maiswurzelbohrer | |
| E-49 | YieldGard^{®} VT | *Zea mays* L. (Mais) | Monsanto Company | Merkmalskombination | |
| E-50 | YieldMaker™ | *Zea mays* L. (Mais) | DEKALB Genetics Corporation | enthält Roundup Ready 2-Technologie, YieldGard VT, YieldGard Corn Borer, YieldGard Rootworm und YieldGard Plus | |

In einer Ausführungsform werden die Pflanzen, die ein transgenes Event gemäß E-1 bis E-50 von Tabelle E umfassen oder solch ein Merkmal exprimieren ganz oder teilweise, bzw. wird Vermehrungsmaterial dieser Pflanzen, mit einer Verbindung der Formel (I) allein oder in Form von Zusammensetzungen, die eine Verbindung der Formel (I) umfassen, behandelt oder in Kontakt gebracht.

In einer Ausführungsform enthalten die Zusammensetzungen, die eine Verbindung der Formel (I) umfassen, einen weiteren Wirkstoff. Insbesondere kann es sich hierbei um ein Fungizid oder ein Acarizid, ein Nematizid oder ein Insektizid oder um einen Herbizid-Safener handeln.

Typischerweise beträgt das Gewichtsverhältnis zwischen der Verbindung der Formel (I) und dem anderem Wirkstoff zwischen 1000 zu 1 und 1 zu 125, vorzugsweise zwischen 125 zu 1 und 1 zu 50 und besonders bevorzugt zwischen 25 zu 1 und 1 zu 5.

Bevorzugt sind die folgenden Fungizide, die ausgewählt sind aus der Gruppe bestehend aus:
F1) Verbindung, die fähig ist, die Nukleinsäuresynthese zu hemmen, wie Benalaxyl, Benalaxyl-M, Bupirimat, Clozylacon, Dimethirimol, Ethirimol, Furalaxyl, Hymexazol, Mefenoxam, Metalaxyl, Metalaxyl-M, Ofurace, Oxadixyl, Oxolinsäure;
F2) Verbindung, die fähig ist, die Mitrose und Zellteilung zu hemmen, wie Benomyl, Carbendazim, Diethofencarb, Ethaboxam, Fuberidazol, Pencycuron, Thiabendazol, Thiophanat-methyl, Zoxamid;
F3) Verbindung, die fähig ist, die Atmung zu hemmen, zum Beispiel
ein CI-Atmungshemmer wie Diflumetorim;
ein CII-Atmungshemmer wie Boscalid, Carboxin, Fenfuram, Flutolanil, Furametpyr, Furmecyclox, Mepronil, Oxycarboxin, Penthiopyrad, Thifluzamid;
ein CIII-Atmungshemmer wie Amisulbrom, Azoxystrobin, Cyazofamid, Dimoxystrobin, Enestrobin, Famoxadon, Fenamidon, Fluoxastrobin, Kresoxim-methyl, Metominostrobin, Orysastrobin, Picoxystrobin, Pyraclostrobin, Trifloxystrobin;
F4) Verbindung, die fähig ist, als Entkoppler zu wirken, wie Dinocap, Fluazinam, Meptyldinocap;
F5) Verbindung, die fähig ist, die ATP-Produktion zu hemmen, wie Fentin-acetat, Fentin-chlorid, Fentin-hydroxid, Silthiofam;
F6) Verbindung, die fähig ist, AA und die Proteinbiosynthese zu hemmen, wie Andoprim, Blasticidin-S, Cyprodinil, Kasugamycin, Kasugamycin-hydrochlorid-hydrat, Mepanipyrim, Pyrimethanil;
F7) Verbindung, die fähig ist, die Signalleitung zu hemmen, wie Fenpiclonil, Fludioxonil, Quinoxyfen;
F8) Verbindung, die fähig ist, die Lipid- und Membransynthese zu hemmen, wie Biphenyl, Chlozolinat, Edifenphos, Etridiazol, Iodocarb, Iprobenfos, Iprodion, Isoprothiolan, Procymidon, Propamocarb, Propamocarb-hydrochlorid, Pyrazophos, Tolclofos-methyl, Vinclozolin;
F9) Verbindung, die fähig ist, die Ergosterolbiosynthese zu hemmen, wie Aldimorph, Azaconazol, Bitertanol, Bromuconazol, Cyproconazol, Diclobutrazol, Difenoconazol, Diniconazol, Diniconazol-M, Dodemorph, Dodemorph-acetat, Epoxiconazol, Etaconazol, Fenarimol, Fenbuconazol, Fenhexamid, Fenpropidin, Fenpropimorph, Fluquinconazol, Flurprimidol, Flusilazol, Flutriafol, Furconazol, Furconazol-cis, Hexaconazol, Imazalil, Imazalil-sulfat, Imibenconazol, Ipconazol, Metconazol, Myclobutanil, Naftifin, Nuarimol, Oxpoconazol, Paclobutrazol, Pefurazoat, Penconazol, Prochloraz, Propiconazol, Prothioconazol, Pyributicarb, Pyrifenox, Simeconazol, Spiroxamin, Tebuconazol, Terbinafin, Tetraconazol, Triadimefon, Triadimenol, Tridemorph, Triflumizol, Triforin, Triticonazol, Uniconazol, Viniconazol, Voriconazol;
F10) Verbindung, die fähig ist, die Zellwandsynthese zu hemmen, wie Benthiavalicarb, Dimethomorph, Flumorph, Iprovalicarb, Mandipropamid, Polyoxine, Polyoxorim, Validamycin A;
F11) Verbindung, die fähig ist, die Melaninbiosynthese zu hemmen, wie Carpropamid, Diclocymet, Fenoxanil, Phthalid, Pyroquilon, Tricyclazol;
F12) Verbindung, die fähig ist, eine Wirtsabwehr zu induzieren, wie Acibenzolar-S-methyl, Probenazol, Tiadinil;
F13) Verbindung, die fähig ist, eine Multisite-Wirkung auszuüben, wie Bordeaux-Brühe, Captafol, Captan, Chlorthalonil, Kupfernaphthenat, Kupferoxid, Kupferoxychlorid, Kupferpräparate wie Kupferhydroxid, Kupfersulfat, Dichlorfluanid, Dithianon, Dodin, Dodin (freie Base), Ferbam, Fluorfolpet, Folpet, Guazatin, Guazatin-acetat, Iminoctadin, Iminoctadin-albesilat, Iminoctadintriacetat, Mancopper, Mancozeb, Maneb, Metiram, Metiram-zink, Oxin-kupfer, Propineb, Schwefel und Schwefelpräparate darunter Calciumpolysulfid, Thiram, Tolylfluanid, Zineb, Ziram;
F14) Verbindung aus der folgenden Aufzählung: (2E)-2-(2-{[6-(3-Chlor-2-methylphenoxy)-5-fluorpyrimidin-4-yl]oxy}phenyl)-2-(methoxyimino)-N-methylacetamid, (2E)-2-{2-[({[(1E)-1-(3-{[(E)-1-Fluor-2-phenylvinyl]oxy}phenyl)ethyliden]amino}oxy)methyl]phenyl}-2-(methoxyimino)-N-methylacetamid, 1-(4-Chlorphenyl)-2-(1H-1,2,4-triazol-1-yl)cycloheptanol, 1-[(4-Methoxyphenoxy)methyl]-2,2-dimethylpropyl-1H-imidazol-1-carboxylat, 1-Methyl-N-[2-(1,1,2,2-tetrafluorethoxy)phenyl]-3-(trifluormethyl)-1H-pyrazol-4-carboxamid, 2,3,5,6-Tetrachlor-4-(methylsulfonyl)-pyridin, 2-Butoxy-6-iod-3-propyl-4H-chromen-4-on, 2-Chlor-N-(1,1,3-trimethyl-2,3-dihydro-1H-inden-4-yl)nicotinamid, 2-Phenylphenol und Salze, 3-(Difluormethyl)-1-methyl-N-[2-(1,1,2,2-tetrafluorethoxy)phenyl]-1H-pyrazol-4-carboxamid, 3-(Difluormethyl)-N-[(9R)-9-isopropyl-1,2,3,4-tetrahydro-1,4-methanonaphthalin-5-yl]-1-methyl-1H-pyrazol-4-carboxamid, 3-(Difluormethyl)-N-[(9S)-9-isopropyl-1,2,3,4-tetrahydro-1,4-methanonaphthalin-5-yl]-1-methyl-1H-pyrazol-4-carboxamid, 3-(Difluormethyl)-N-[4'-(3,3-dimethylbut-1-in-1-yl)biphenyl-2-yl]-1-methyl-1H-pyrazol-4-carboxamid, 3,4,5-Trichlorpyridin-2,6-dicarbonitril, 3-[5-(4-Chlorphenyl)-2,3-dimethyl-isoxazolidin-3-yl]pyridin, 3-Chlor-5-(4-chlorphenyl)-4-(2,6-difluorphenyl)-6-methylpyridazin, 4-(4-Chlorphenyl)-5-(2,6-difluorphenyl)-3,6-dimethylpyridazin, 5-Chlor-7-(4-methylpiperidin-1-yl)-6-(2,4,6-trifluorphenyl)[1,2,4]triazol[1,5-a]pyrimidin, 8-Hydroxychinolinsulfat, Benthiazol, Bethoxazin, Capsimycin, Carvon, Chinomethionat, Cufraneb, Cyflufenamid, Cymoxanil, Dazomet, Debacarb, Dichlorphen, Diclomezin, Dicloran, Difenzoquat, Difenzoquat-methylsulfat, Diphenylamin, Ecomat, Ferimzon, Flumetover, Fluopicolid, Fluopyram, Fluorimid, Flusulfamid, Flutianil, Fosetyl-aluminium, Fosetyl-calcium, Fosetyl-natrium, Hexachlorbenzol, Irumamycin, Isopyrazam, Isotianil, Methasulfocarb, Methyl-(2E)-2-{2-[({cyclopropyl[(4-methoxyphenyl)imino]methyl}thio)methyl]phenyl}-3-methoxyacrylat, Methyl-1-(2,2-dimethyl-2,3-dihydro-1H-inden-1-yl)-1H-imidazol-5-carboxylat, Methylisothiocyanat, Metrafenon, Mildiomycin, N-(3',4'-Dichlor-5-fluorbiphenyl-2-yl)-3-(difluormethyl)-1-methyl-1H-pyrazol-4-carboxamid, N-(3-Ethyl-3,5,5-trimethylcyclohexyl)-3-(formylamino)-2-hydroxybenzamid, N-(4-Chlor-2-nitrophenyl)-N-ethyl-4-methylbenzolsulfonamid, N-(4-Chlorbenzyl)-3-[3-methoxy-4-(prop-2-in-1-yloxy)phenyl]propanamid, N-[(4-Chlorphenyl)(cyano)methyl]-3-[3-methoxy-4-(prop-2-in-1-yloxy)phenyl]propanamid, N-[(5-Brom-3-chlorpyridin-2-yl)methyl]-2,4-dichlornicotinamid, N-[1-(5-Brom-3-chlorpyridin-2-yl)ethyl]-2,4-dichlornicotinamid, N-[1-(5-Brom-3-chlorpyridin-2-yl)ethyl]-2-fluor-4-iodnicotinamid, N-[2-(1,3-Dimethylbutyl)phenyl]-5-fluor-1,3-dimethyl-1H-pyrazol-4-carboxamid, N-{(Z)-[(Cyclopropylmethoxy)imino][6-(difluormethoxy)-2,3-difluorphenyl]methyl}-2-phenylacetamid, N-{2-[1,1'-Bi(cyclopropyl)-2-yl]phenyl}-3-(difluormethyl)-1-methyl-1H-pyrazol-4-carboxamid, N-{2-[3-Chlor-5-(trifluormethyl)pyridin-2-yl]ethyl}-2-(trifluormethyl)benzamid, Natamycin, N-Ethyl-N-methyl-N'-{2-methyl-5-(trifluormethyl)-4-[3-(trimethylsilyl)propoxy]phenyl}imidoformamid, N-Ethyl-N-methyl-N'-{2-methyl-5-(difluormethyl)-4-[3-(trimethylsilyl)propoxy]phenyl}imidoformamid, Nickeldimethyldithiocarbamat, Nitrothalisopropyl, O-{11-[(4-Methoxyphenoxy)methyl]-2,2-dimethylpropyl1H-imidazol-1-carbothioat, Octhilinon, Oxamocarb, Oxyfenthiin, Pentachlorphenol und Salze, phosphorige Säure und ihre Salze, Piperalin, Propamocarb-fosetylat, Propanosin-natrium, Proquinazid, Pyribencarb, Pyrrolnitrin, Quintozen, S-Allyl-5-amino-2-isopropyl-4-(2-methylphenyl)-3-oxo-2,3-dihydro-1H-pyrazol-1-carbothioat, Sedaxane, Tecloftalam, Tecnazen, Triazoxid, Trichlamid, Valiphenal, Zarilamid.

Besonders bevorzugte Fungizide als zusätzliche Wirkstoffe sind die folgenden Fungizide, ausgewählt aus der Gruppe bestehend aus: Azoxystrobin, Dimoxystrobin, Kresoxim-methyl, Orysastrobin, Pyraclostrobin, Trifloxystrobin, Bixafen, Boscalid, Isopyrazam, Metalaxyl, Penthiopyrad, 3-Difluormethyl-1-methyl-1H-pyrazol-4-carbonsäure-(2',4',5'-trifluorbiphenyl-2-yl)-amid, N-(2-Bicyclopropyl-2-yl-phenyl)-3-difluormethyl-1-methyl-1H-pyrazol-4-carbonsäureamid, Dimethomorph, Fluopicolid, Difenoconazol, Ipconazol, Epoxiconazol, Fluquinconazol, Flusilazol, Flutriafol, Metconazol, Myclobutanil, Propiconazol, Prothioconazol, Tebuconazol, Tetraconazol, Triticonazol, Prochloraz, Carbendazim, Fluazinam, Cyprodinil, Pyrimethanil, Fludioxonil, Dodemorph, Fenpropimorph, Tridemorph, Fenpropidin, Iprodion, Vinclozolin, Famoxadon, Probenazol, Captan, Folpet, 5-Ethyl-6-octyl-[1,2,4]triazolo[1,5-a]pyrimidin-7-ylamin, Mancozeb, Maneb, Metiram, Thiram, Dithianon, Fosetyl, Fosetyl-aluminium, Chlorthalonil, Thiophanat-methyl, Cymoxanil, Metrafenon, Spiroxamin, Fluopyram, Flutianil, Isopyrazam, Sedaxane, N-(3',4',5'-Trifluorbiphenyl-2-yl)- 3-difluormethyl-1-methyl-1H-pyrazol-4-carboxamid, N-[2-(4'-Trifluormethylthio)biphenyl]-3-difluormethyl-1-methyl-1H-pyrazol-4-carboxamid, N-[2-(1,3-Dimethylbutyl)phenyl]-1,3-dimethyl-5-fluor-1H-pyrazol-4-carboxamid, N-(2-Bicyclopropyl-2-ylphenyl)-3-difluormethyl-1-methyl-1H-pyrazol-4-carboxamid, N-(cis-2-Bicyclopropyl-2-ylphenyl)-3-difluormethyl-1-methyl-1H-pyrazol-4-carboxamid, N-(trans-2-Bicyclopropyl-2-ylphenyl)-3-difluormethyl-1-methyl-1H-pyrazol-4-carboxamid, N-[1,2,3,4-Tetrahydro-9-(1-methylethyl)-1,4-methanonaphthalin-5-yl]-3-(difluormethyl)-1-methyl-1H-pyrazol-4-carboxamid.

Bevorzugt sind die folgenden Insektizide/Acarizide/Nematizide, ausgewählt aus der Gruppe:
(1) Acetylcholinesterase (AChE)-Hemmer, zum Beispiel
   Carbamate, z.B. Alanycarb, Aldicarb, Aldoxycarb, Allyxycarb, Aminocarb, Bendiocarb, Benfuracarb, Bufencarb, Butacarb, Butocarboxim, Butoxycarboxim, Carbaryl, Carbofuran, Carbosulfan, Cloethocarb, Dimetilan, Ethiofencarb, Fenobucarb, Fenothiocarb, Formetanat, Furathiocarb, Isoprocarb, Metam-natrium, Methiocarb, Methomyl, Metolcarb, Oxamyl, Pirimicarb, Promecarb, Propoxur, Thiodicarb, Thiofanox, Trimethacarb, XMC, und Xylylcarb; oder
   Organophosphate, z.B. Acephat, Azamethiphos, Azinphos(-methyl, -ethyl), Bromophos-ethyl, Bromfenvinfos(-methyl), Butathiofos, Cadusafos, Carbophenothion, Chlorethoxyfos, Chlorfenvinphos, Chlormephos, Chlorpyrifos(-methyl/-ethyl), Coumaphos, Cyanofenphos, Cyanophos, Chlorfenvinphos, Demeton-S-methyl, Demeton-S-methylsulfon, Dialifos, Diazinon, Dichlofenthion, Dichlorvos/DDVP, Dicrotophos, Dimethoat, Dimethylvinphos, Dioxabenzofos, Disulfoton, EPN, Ethion, Ethoprophos, Etrimfos, Famphur, Fenamiphos, Fenitrothion, Fensulfothion, Fenthion, Flupyrazofos, Fonofos, Formothion, Fosmethilan, Fosthiazat, Heptenophos, Iodofenphos, Iprobenfos, Isazofos, Isofenphos, Isopropyl, O-Salicylat, Isoxathion, Malathion, Mecarbam, Methacrifos, Methamidophos, Methidathion, Mevinphos, Monocrotophos, Naled, Omethoat, Oxydemeton-methyl, Parathion(-methyl/-ethyl), Phenthoat, Phorat, Phosalon, Phosmet, Phosphamidon, Phosphocarb, Phoxim, Pirimiphos(-methyl/-ethyl), Profenofos, Propaphos, Propetamphos, Prothiofos, Prothoat, Pyraclofos, Pyridaphenthion, Pyridathion, Quinalphos, Sebufos, Sulfotep, Sulprofos, Tebupirimfos, Temephos, Terbufos, Tetrachlorvinphos, Thiometon, Triazophos, Triclorfon, Vamidothion und Imicyafos.
(2) GABA-gesteuerte Chloridkanalantagonisten, zum Beispiel
   Organochlorverbindungen, z.B. Camphechlor, Chlordan, Endosulfan, Gamma-HCH, HCH, Heptachlor, Lindan und Methoxychlor; oder
   Fiprole (Phenylpyrazole), z.B. Acetoprol, Ethiprol, Fipronil, Pyrafluprol, Pyriprol und Vaniliprol.
(3) Natriumkanalmodulatoren/spannungsabhängige Natriumkanalblocker, zum Beispiel
   Pyrethroide, z.B. Acrinathrin, Allethrin (d-cis-trans, d-trans), Beta-cyfluthrin, Bifenthrin, Bioallethrin, Bioallethrin S-Cyclopentylisomer, Bioethanomethrin, Biopermethrin, Bioresmethrin, Chlovaporthrin, cis-Cypermethrin, cis-Resmethrin, cis-Permethrin, Clocythrin, Cycloprothrin, Cyfluthrin, Cyhalothrin, Cypermethrin (alpha-, beta-, theta-, zeta-), Cyphenothrin, Deltamethrin, Empenthrin (1R-Isomer), Esfenvalerat, Etofenprox, Fenfluthrin, Fenpropathrin, Fenpyrithrin, Fenvalerat, Flubrocythrinat, Flucythrinat, Flufenprox, Flumethrin, Fuvalinat, Fubfenprox, gamma-Cyhalothrin, Imiprothrin, Kadethrin, lambda-Cyhalothrin, Metofluthrin, Permethrin (cis-, trans-), Phenothrin (1R-trans-Isomer), Prallethrin, Profluthrin, Protrifenbut, Pyresmethrin, Resmethrin, RU 15525, Silafluofen, tau-Fluvalinat, Tefluthrin, Terallethrin, Tetramethrin (-1R-Isomer), Tralomethrin, Transfluthrin, ZXI 8901, Pyrethrin (Pyrethrum), Eflusilanat;
   DDT; oder Methoxychlor.
(4) Nicotinerge Acetylchofinrezeptoragonisten/-antagonisten, zum Beispiel
   Chlornicotinyle, z.B. Acetamiprid, Clothianidin, Dinotefuran, Imidacloprid, Imidaclothiz, Nitenpyram, Nithiazin, Thiacloprid, Thiamethoxam, AKD-1022,
   Nicotin, Bensultap, Cartap, Thiosultap-natrium und Thiocylam.
(5) Allostere Acetylcholinrezeptormodulatoren (Agonisten), zum Beispiel
   Spinosyne, z.B. Spinosad und Spinetoram.
(6) Chloridkanalaktivatoren, zum Beispiel
   Mectine/Macrolide, z.B. Abamectin, Emamectin, Emamectin-benzoat, Ivermectin, Lepimectin und Milbemectin; oder
   Juvenilhormonanaloge, z.B. Hydropren, Kinopren, Methopren, Epofenonan, Tripren, Fenoxycarb, Pyriproxifen und Diofenolan.
(7) Wirkstoffe mit unbekannten oder unspezifischen Wirkmechanismen, zum Beispiel
   Vergasungsmittel, z.B. Methylbromid, Chlorpicrin und Sulfurylfluorid;
   Selektive Frashemmer, z.B. Cryolit, Pymetrozin, Pyrifluquinazon und Flonicamid; oder
   Milbenwachstumshemmer, z.B. Clofentezin, Hexythiazox, Etoxazol.
(8) Hemmer der oxidativen Phosphorylation, ATP-Disruptoren, zum Beispiel
   Diafenthiuron;
   Organotinverbindungen, z.B. Azocyclotin, Cyhexatin und Fenbutatin-oxid; oder
   Propargit, Tetradifon.
(9) Entkoppler der oxidativen Phoshorylierung durch Unterbrechung des H-Protonen-Gradienten, zum Beispiel Chlorfenapyr, Binapacryl, Dinobuton, Dinocap und DNOC.
(10) Mikrobielle Disruptoren der Insektendarmmembran, zum Beispiel *Bacillus thuringiensis-*Stämme.
(11) Chitinbiosynthesehemmer, zum Beispiel Benzoylharnstoffe, z.B. Bistrifluron, Chlorfluazuron, Diflubenzuron, Fluazuron, Flucycloxuron, Flufenoxuron, Hexaflumuron, Lufenuron, Novaluron, Noviflumuron, Penfluron, Teflubenzuron oder Triflumuron.
(12) Buprofezin.
(13) Verbindungen, die die Häutung unterbrechen, zum Beispiel Cyromazin.
(14) Ecdysonagonisten/Disruptoren, zum Beispiel
   Diacylhydrazine, z.B. Chromafenozid, Halofenozid, Methoxyfenozid, Tebufenozid und Fufenozid (JS118); oder
   Azadirachtin.
(15) Octopaminerge Agonisten, zum Beispiel Amitraz.
(16) Site-III-Elektronentransporthemmer/Site-II-Elektronentransporthemmer, zum Beispiel Hydramethylnon; Acequinocyl; Fluacrypyrim; oder Cyflumetofen und Cyenopyrafen.
(17) Elektronentransporthemmer, zum Beispiel
   Site-I-Elektronentransporthemmer aus der Gruppe der METI-Acarizide, z.B. Fenazaquin, Fenpyroximat, Pyrimidifen, Pyridaben, Tebufenpyrad, Tolfenpyrad und Rotenon; oder
   Spannungsabhängige Natriumkanalblocker, z.B. Indoxacarb und Metaflumizon.
(18) Fettsäurebiosynthesehemmer, zum Beispiel Tetronsäurederivative, z.B. Spirodiclofen und Spiromesifen; oder
   Tetramsäurederivative, z.B. Spirotetramat.
(19) Neuronalhemmer mit unbekanntem Wirkmechanismus, z.B. Bifenazat.
(20) Ryanodinrezeptoreffektoren, zum Beispiel Diamide, z.B. Flubendiamid, (R),(S)-3-Chlor-N¹-{2-methyl-4-[1,2,2,2-tetrafluor-1-(trifluormethyl)ethyl]phenyl}-N²-(1-methyl-2-methylsulfonylethyl)phthalamid, Chlorantraniliprol (Rynaxypyr) oder Cyantraniliprol (Cyazypyr).
(21) Weitere Wirkstoffe mit unbekanntem Wirkmechanimus, zum Beispiel Amidoflumet, Benclothiaz, Benzoximat, Bromopropylat, Buprofezin, Chinomethionat, Chlordimeform, Chlorbenzilat, Clothiazoben, Cyclopren, Dicofol, Dicyclanil, Fenoxacrim, Fentrifanil, Flubenzimin, Flufenerim, Flutenzin, Gossyplure, Japonilure, Metoxadiazon, Petroleum, Kaliumoleat, Pyridalyl, Sulfluramid, Tetrasul, Triarathen oder Verbutin; oder einer der folgenden Wirkstoffe: [(6-Chlorpyridin-3-yl)methyl](methyl)oxido-λ⁴-sulfanylidencyanamid (bekannt aus WO 2007/149134), [1-(6-Chlorpyridin-3-yl)ethyl](methyl)oxido-λ⁴-sulfanylidencyanamid (bekannt aus WO 2007/149134) und seine Diastereomere (A) und (B) 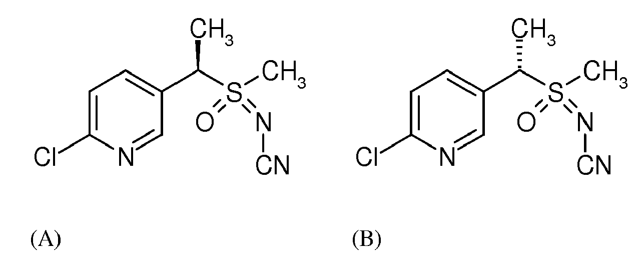 (ebenfalls bekannt us WO 2007/149134), [(6-Trifluormethylpyridin-3-yl)methyl](methyl)oxido-λ⁴-sulfanylidencyanamid (bekannt aus WO 2007/095229) oder [1-(6-Trifluormethylpyridin-3-yl)ethyl](methyl)oxido-λ⁴-sulfanylidencyanamid (bekannt aus WO 2007/149134) und seine Diastereomere (C) und (D), nämlich Sulfoxaflor

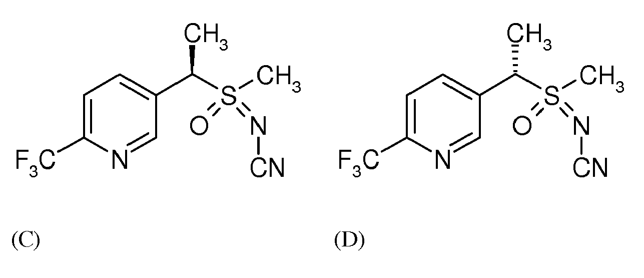

Besonders bevorzugte Acarizide, Nematizide oder Insektizide als Wirkstoff zusätzlich zu der Verbindung der Formel (I) sind ausgewählt aus der Gruppe bestehend aus Acephat, Chlorpyrifos, Diazinon, Dichlorvos, Dimethoat, Fenitrothion, Methamidophos, Methidathion, Methyl-parathion, Monocrotophos, Phorat, Profenofos, Terbufos, Aldicarb, Carbaryl, Carbofuran, Carbosulfan, Methomyl, Thiodicarb, Bifenthrin, Cyfluthrin, Cypermethrin, alpha-Cypermethrin, zeta-Cypermethrin, Deltamethrin, Esfenvalerat, lambda-Cyhalothrin, Permethrin, Tefluthrin, Transfluthrin, Diflubenzuron, Flufenoxuron, Lufenuron, Teflubenzuron, Spirotetramat; Clothianidin, Dinotefuran, Imidacloprid, Thiamethoxam, Acetamiprid, Thiacloprid; Endosulfan, Fipronil, Abamectin, Emamectin, Spinosad, Spinetoram, Hydramethylnon; Chlorfenapyr; Fenbutatin-oxid, Indoxacarb, Metaflumizon, Flonicamid, Flubendiamid, Chlorantraniliprol, Cyazypyr (HGW86), Cyflumetofen und Sulfoxaflor.

Ganz besonders bevorzugte Acarizide, Nematizide oder Insektizide als Wirkstoffe zusätzlich zu der Verbindung der Formel (I) sind ausgewählt aus der Gruppe bestehend aus Thiodicarb, Cyfluthrin, Tefluthrin, Transfluthrin, Clothianidin, Imidacloprid, Thiamethoxam, Acetamiprid, Thiacloprid; Fipronil, Abamectin, Flubendiamid, Chlorantraniliprol, Cyazypyr und Sulfoxaflor.

Die erfindungsgemäßen Methoden und Zusammensetzungen können für die Bekämpfung der folgdenden tierischen Schädlinge eingesetzt werden.

Aus der Ordnung der Anoplura (Phthiraptera), zum Beispiel Damalinia spp., Haematopinus spp., Linognathus spp., Pediculus spp., Trichodectes spp.

Aus der Klasse der Arachnida, zum Beispiel Acarus siro, Aceria sheldoni, Aculops spp., Aculus spp., Amblyomma spp., Argas spp., Boophilus spp., Brevipalpus spp., Bryobia praetiosa, Chorioptes spp., Dermanyssus gallinae, Eotetranychus spp., Epitrimerus pyri, Eutetranychus spp., Eriophyes spp., Hemitarsonemus spp., Hyalomma spp., Ixodes spp., Latrodectus mactans, Metatetranychus spp., Oligonychus spp., Ornithodoros spp., Panonychus spp., Phyllocoptruta oleivora, Polyphagotarsonemus latus, Psoroptes spp., Rhipicephalus spp., Rhizoglyphus spp., Sarcoptes spp., Scorpio maurus, Stenotarsonemus spp., Tarsonemus spp., Tetranychus spp., Vasates lycopersici.

Aus der Klasse der Bivalva, zum Beispiel Dreissena spp.

Aus der Ordnung Chilopoda, zum Beispiel Geophilus spp., Scutigera spp.

Aus der Ordnung der Coleoptera, zum Beispiel Acanthoscelides obtectus, Adoretus spp., Agelastica alni, Agriotes spp., Amphimallon solstitialis, Anobium punctatum, Anoplophora spp., Anthonomus spp., Anthrenus spp., Apogonia spp., Atomaria spp., Attagenus spp., Bruchidius obtectus, Bruchus spp., Ceuthorhynchus spp., Cleonus mendicus, Conoderus spp., Cosmopolites spp., Costelytra zealandica, Curculio spp., Cryptorhynchus lapathi, Dermestes spp., Diabrotica spp., Epilachna spp., Faustinus cubae, Gibbium psylloides, Heteronychus arator, Hylamorpha elegans, Hylotrupes bajulus, Hypera postica, Hypothenemus spp., Lachnosterna consanguinea, Leptinotarsa decemlineata, Lissorhoptrus oryzophilus, Lixus spp., Lyctus spp., Meligethes aeneus, Melolontha melolontha, Migdolus spp., Monochamus spp., Naupactus xanthographus, Niptus hololeucus, Oryctes rhinoceros, Oryzaephilus surinamensis, Otiorrhynchus sulcatus, Oxycetonia jucunda, Phaedon cochleariae, Phyllophaga spp., Popillia japonica, Premnotrypes spp., Psylliodes chrysocephala, Ptinus spp., Rhizobius ventralis, Rhizopertha dominica, Sitophilus spp., Sphenophorus spp., Sternechus spp., Symphyletes spp., Tenebrio molitor, Tribolium spp., Trogoderma spp., Tychius spp., Xylotrechus spp., Zabrus spp.

Aus der Ordnung der Collembola, zum Beispiel Onychiurus armatus.

Aus der Ordnung der the Dermaptera, zum Beispiel Forficula auricularia.

Aus der Ordnung der Diplopoda, zum Beispiel Blaniulus guttulatus.

Aus der Ordnung der Diptera, zum Beispiel Aedes spp., Anopheles spp., Bibio hortulanus, Calliphora erythrocephala, Ceratitis capitata, Chrysomyia spp., Cochliomyia spp., Cordylobia anthropophaga, Culex spp., Cuterebra spp., Dacus oleae, Dermatobia hominis, Drosophila spp., Fannia spp., Gastrophilus spp., Hylemyia spp., Hyppobosca spp., Hypoderma spp., Liriomyza spp., Lucilia spp., Musca spp., Nezara spp., Oestrus spp., Oscinella frit, Pegomyia hyoscyami, Phorbia spp., Stomoxys spp., Tabanus spp., Tannia spp., Tipula paludosa, Wohlfahrtia spp.

Aus der Klasse der Gastropoda, zum Beispiel Arion spp., Biomphalaria spp., Bulinus spp., Deroceras spp., Galba spp., Lymnaea spp., Oncomelania spp., Succinea spp.

Aus der Klasse der Helminthen, zum Beispiel Ancylostoma duodenale, Ancylostoma ceylanicum, Acylostoma braziliensis, Ancylostoma spp., Ascaris lubricoides, Ascaris spp., Brugia malayi, Brugia timori, Bunostomum spp., Chabertia spp., Clonorchis spp., Cooperia spp., Dicrocoelium spp, Dictyocaulus filaria, Diphyllobothrium latum, Dracunculus medinensis, Echinococcus granulosus, Echinococcus multilocularis, Enterobius vermicularis, Faciola spp., Haemonchus spp., Heterakis spp., Hymenolepis nana, Hyostrongulus spp., Loa Loa, Nematodirus spp., Oesophagostomum spp., Opisthorchis spp., Onchocerca volvulus, Ostertagia spp., Paragonimus spp., Schistosomen spp., Strongyloides fuelleborni, Strongyloides stercoralis, Stronyloides spp., Taenia saginata, Taenia solium, Trichinella spiralis, Trichinella nativa, Trichinella britovi, Trichinella nelsoni, Trichinella pseudopsiralis, Trichostrongulus spp., Trichuris trichuria, Wuchereria bancrofti.

Weiterhin können Protozoen wie Eimeria bekämpft werden.

Aus der Ordnung der Heteroptera, zum Beispiel Anasa tristis, Antestiopsis spp., Blissus spp., Calocoris spp., Campylomma livida, Cavelerius spp., Cimex spp., Creontiades dilutus, Dasynus piperis, Dichelops furcatus, Diconocoris hewetti, Dysdercus spp., Euschistus spp., Eurygaster spp., Heliopeltis spp., Horcias nobilellus, Leptocorisa spp., Leptoglossus phyllopus, Lygus spp., Macropes excavatus, Miridae, Nezara spp., Oebalus spp., Pentomidae, Piesma quadrata, Piezodorus spp., Psallus seriatus, Pseudacysta persea, Rhodnius spp., Sahlbergella singularis, Scotinophora spp., Stephanitis nashi, Tibraca spp., Triatoma spp.

Aus der Ordnung der Homoptera, zum Beispiel Acyrthosipon spp., Aeneolamia spp., Agonoscena spp., Aleurodes spp., Aleurolobus barodensis, Aleurothrixus spp., Amrasca spp., Anuraphis cardui, Aonidiella spp., Aphanostigma piri, Aphis spp., Arboridia apicalis, Aspidiella spp., Aspidiotus spp., Atanus spp., Aulacorthum solani, Bemisia spp., Brachycaudus helichrysii, Brachycolus spp., Brevicoryne brassicae, Calligypona marginata, Carneocephala fulgida, Ceratovacuna lanigera, Cercopidae, Ceroplastes spp., Chaetosiphon fragaefolii, Chionaspis tegalensis, Chlorita onukii, Chromaphis juglandicola, Chrysomphalus ficus, Cicadulina mbila, Coccomytilus halli, Coccus spp., Cryptomyzus ribis, Dalbulus spp., Dialeurodes spp., Diaphorina spp., Diaspis spp., Doralis spp., Drosicha spp., Dysaphis spp., Dysmicoccus spp., Empoasca spp., Eriosoma spp., Erythroneura spp., Euscelis bilobatus, Geococcus coffeae, Homalodisca coagulata, Hyalopterus arundinis, Icerya spp., Idiocerus spp., Idioscopus spp., Laodelphax striatellus, Lecanium spp., Lepidosaphes spp., Lipaphis erysimi, Macrosiphum spp., Mahanarva fimbriolata, Melanaphis sacchari, Metcalfiella spp., Metopolophium dirhodum, Monellia costalis, Monelliopsis pecanis, Myzus spp., Nasonovia ribisnigri, Nephotettix spp., Nilaparvata lugens, Oncometopia spp., Orthezia praelonga, Parabemisia myricae, Paratrioza spp., Parlatoria spp., Pemphigus spp., Peregrinus maidis, Phenacoccus spp., Phloeomyzus passerinii, Phorodon humuli, Phylloxera spp., Pinnaspis aspidistrae, Planococcus spp., Protopulvinaria pyriformis, Pseudaulacaspis pentagona, Pseudococcus spp., Psylla spp., Pteromalus spp., Pyrilla spp., Quadraspidiotus spp., Quesada gigas, Rastrococcus spp., Rhopalosiphum spp., Saissetia spp., Scaphoides titanus, Schizaphis graminum, Selenaspidus articulatus, Sogata spp., Sogatella furcifera, Sogatodes spp., Stictocephala festina, Tenalaphara malayensis, Tinocallis caryaefoliae, Tomaspis spp., Toxoptera spp., Trialeurodes vaporariorum, Trioza spp., Typhlocyba spp., Unaspis spp., Viteus vitifolii.

Aus der Ordnung der Hymenoptera, zum Beispiel Diprion spp., Hoplocampa spp., Lasius spp., Monomorium pharaonis, Vespa spp.

Aus der Ordnung der Isopoda, zum Beispiel Armadillidium vulgare, Oniscus asellus, Porcellio scaber.

Aus der Ordnung der Isoptera, zum Beispiel Reticulitermes spp., Odontotermes spp.

Aus der Ordnung der Lepidoptera, zum Beispiel Acronicta major, Aedia leucomelas, Agrotis spp., Alabama argillacea, Anticarsia spp., Barathra brassicae, Bucculatrix thurberiella, Bupalus piniarius, Cacoecia podana, Capua reticulana, Carpocapsa pomonella, Cheimatobia brumata, Chilo spp., Choristoneura fumiferana, Clysia ambiguella, Cnaphalocerus spp., Earias insulana, Ephestia kuehniella, Euproctis chrysorrhoea, Euxoa spp., Feltia spp., Galleria mellonella, Helicoverpa spp., Heliothis spp., Hofmannophila pseudospretella, Homona magnanima, Hyponomeuta padella, Laphygma spp., Leucoptera spp., Lithocolletis blancardella, Lithophane antennata, Loxagrotis albicosta, Lymantria spp., Malacosoma neustria, Mamestra brassicae, Mocis repanda, Mythimna separata, Oria spp., Oulema oryzae, Panolis flammea, Pectinophora gossypiella, Phyllocnistis citrella, Pieris spp., Plutella xylostella, Prodenia spp., Pseudaletia spp., Pseudoplusia includens, Pyrausta nubilalis, Rachiplusia ni, Spodoptera spp., Thermesia gemmatalis, Tinea pellionella, Tineola bisselliella, Tortrix viridana, Trichoplusia spp., Tuta spp.

Aus der Ordnung der Orthoptera, zum Beispiel Acheta domesticus, Blatta orientalis, Blattella germanica, Gryllotalpa spp., Leucophaea maderae, Locusta spp., Melanoplus spp., Periplaneta americana, Schistocerca gregaria.

Aus der Ordnung der Siphonaptera, zum Beispiel Ceratophyllus spp., Xenopsylla cheopis.

Aus der Ordnung der Symphyla, zum Beispiel Scutigerella immaculata.

Aus der Ordnung der Thysanoptera, zum Beispiel Baliothrips biformis, Enneothrips flavens, Frankliniella spp., Heliothrips spp., Hercinothrips femoralis, Kakothrips spp., Rhipiphorothrips cruentatus, Scirtothrips spp., Taeniothrips cardamoni, Thrips spp.

Aus der Ordnung der Thysanura, zum Beispiel Lepisma saccharina.

Zu den pflanzenparasitären Nematoden zählen zum Beispiel Anguina spp., Aphelenchoides spp., Belonoaimus spp., Bursaphelenchus spp., Ditylenchus dipsaci, Globodera spp., Heliocotylenchus spp., Heterodera spp., Longidorus spp., Meloidogyne spp., Pratylenchus spp., Radopholus similis, Rotylenchus spp., Trichodorus spp., Tylenchorhynchus spp., Tylenchulus spp., Tylenchulus semipenetrans, Xiphinema spp.

Die erfindungsgemäßen Verbindungen können gegebenenfalls in bestimmten Konzentrationen bzw. Aufwandmengen auch als Herbizide, Safener, Wachstumsregulatoren oder Mittel zur Verbesserung der Pflanzeneigenschaften, oder als Mikrobizide, beispielsweise als Fungizide, Antimykotika, Bakterizide, Viruzide (einschließlich Mittel gegen Viroide) oder als Mittel gegen MLO (Mycoplasma-like-organism) und RLO (Rickettsia-like-organism) verwendet werden. Gegebenenfalls können sie auch als Zwischenprodukte oder Vorstufen für die Synthese von anderen Wirkstoffen verwendet werden.

Die Wirkstoffe können in die üblichen Formulierungen überführt werden, wie Lösungen, Emulsionen, Spritzpulver, wasser- und ölbasierte Suspensionen, Pulver, Stäubemittel, Pasten, lösliche Pulver, lösliche Granulate, Streugranulate, Suspensions-Emulsions-Konzentrate, Wirkstoff-imprägnierte Naturstoffe, Wirkstoff-imprägnierte synthetische Stoffe, Düngemittel sowie Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder Schaumbildnern. Die Herstellung der Formulierungen erfolgt entweder in geeigneten Anlagen oder auch vor oder während der Anwendung.

Als Hilfsstoffe können solche Stoffe Verwendung finden, die geeignet sind, dem Mittel selbst oder und/oder davon abgeleitete Zubereitungen (z.B. Spritzbrühen, Saatgutbeizen) besondere Eigenschaften zu verleihen, wie bestimmte technische Eigenschaften und/oder auch besondere biologische Eigenschaften. Als typische Hilfsmittel kommen in Frage: Streckmittel, Lösungsmittel und Trägerstoffe.

Als Streckmittel eignen sich z.B. Wasser, polare und unpolare organische chemische Flüssigkeiten z.B. aus den Klassen der aromatischen und nicht-aromatischen Kohlenwasserstoffe (wie Paraffine, Alkylbenzole, Alkylnaphthaline, Chlorbenzole), der Alkohole und Polyole (die ggf. auch substituiert, verethert und/oder verestert sein können), der Ketone (wie Aceton, Cyclohexanon), Ester (auch Fette und Öle) und (poly-)Ether, der einfachen und substituierten Amine, Amide, Lactame (wie *N-*Alkylpyrrolidone) und Lactone, der Sulfone und Sulfoxide (wie Dimethylsulfoxid).

Im Falle der Benutzung von Wasser als Streckmittel können z.B. auch organische Lösungsmittel als Hilfslösungsmittel verwendet werden. Als flüssige Lösungsmittel kommen im Wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylsulfoxid, sowie Wasser.

Als feste oder flüssige Trägerstoffe kommen in Frage:

z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie feinteilige Kieselsäure, Aluminiumoxid und Silikate, als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Papier, Sägemehl, Kokosnussschalen, Maiskolben und Tabakstängeln; als Emulgiermittel und/oder Schaumbildner kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage nicht-ionische und/oder ionische Stoffe, z.B. aus den Klassen der Alkohol-POE- und/oder -POP-Ether, Säure- und/oder POP-POE-Ester, Alkylaryl- und/oder POP-POE-Ether, Fett- und/oder POP-POE-Addukte, POE- und/oder POP-Polyolderivate, POE- und/oder POP-Sorbitan- oder Zucker-Addukte, Alky- oder Arylsulfate, Alkyl- oder Arylsulfonate und Alkyl- oder Arylphosphate oder die entsprechenden PO-Ether-Addukte. Ferner geeignete Oligo- oder Polymere, z.B. ausgehend von vinylischen Monomeren, von Acrylsäure, aus EO und/oder PO allein oder in Verbindung mit z.B. (poly-) Alkoholen oder (poly-) Aminen. Ferner können Einsatz finden Lignin und seine Sulfonsäurederivate, einfache und modifizierte Cellulosen, aromatische und/oder aliphatische Sulfonsäuren sowie deren Addukte mit Formaldehyd.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Weitere Additive können Duftstoffe, mineralische oder vegetabile gegebenenfalls modifizierte Öle, Wachse und Nährstoffe (auch Spurennährstoffe), wie Salze von Eisen, Mangan, Bor, Kupfer, Kobalt, Molybdän und Zink sein.

Weiterhin enthalten sein können Stabilisatoren wie Kältestabilisatoren, Konservierungsmittel, Oxidationsschutzmittel, Lichtschutzmittel oder andere die chemische und/oder physikalische Stabilität verbessernde Mittel.

Die Formulierungen umfassen im Allgemeinen zwischen 0,01 und 98 Gew.-% Wirkstoff, vorzugsweise zwischen 0,5 und 90%.

Dem Fachman wird natürlich klar sein, dass die Formulierung und Ausbringungsart eines Pestizids die Wirksamkeit des Materials bei einer bestimmten Ausbringung beinflussen kann. Für die Verwendung gegen landwirtschaftliche Schädlinge und allgemeine Haushaltsschädlinge können die vorliegenden insektiziden Verbindungen daher als Granulat mit einer relativ großen Teilchengröße (zum Beispiel 8/16 oder 4/8 US Mesh), als wasserlösliches oder wasserdispergierbares Granulat, als pulverförmige Stäubemittel, als Spritzpulver, als emulgierbare Konzentrate, als wässrige Emulsionen, als Lösungen oder als einer der anderen bekannten nützlichen Formulierungstypen formuliert werden, ganz nachdem, welche Ausbringungsart gewünscht wird. Es ist klar, dass die im vorliegenden Text angegebenen Mengen nur als ungefähre Angaben gelten, so als ob das Wort "ungefähr" vor den angegebenen Mengen stünde.

Diese insektiziden Zusammensetzungen können entweder als wasserverdünnbare Sprays oder als Stäubemittel oder als Granulate auf die Flächen ausgebracht werden, auf denen Insekten eingedämmt werden sollen. Diese Formulierungen können von nur 0,1 Gew.-%, 0,2 Gew.-% oder 0,5 Gew.-% bis 95 Gew.-% oder mehr Wirkstoff enthalten.

Stäubemittel sind freifließende Mischungen des Wirkstoffs mit feinteiligen Feststoffen wie Talk, natürlichen Tonen, Kieselgur, Mehlen wie Walnussschalen- und Baumwollsamenmehl sowie anderen organischen und anorganischen Feststoffen, die als Dispergiermittel und Träger für das Pestizid dienen; diese feinteiligen Feststoffe weisen eine durchschnittliche Teilchengröße von weniger als ungefähr 50 Mikrometer auf. Eine typische Stäubemittelformulierung, die sich im vorliegenden Zusammenhang eignet, enthält 0,1 Teil oder weniger an insektizider Verbindung und 99,0 Teile Talk.

Spritzpulver, die ebenfalls nützliche Formulierungen für Insektizide darstellen, liegen in Form von feinteiligen Partikeln, die sich rasch in Wasser oder einem anderen Dispergiermittel dispergieren, vor. Das Spritzmittel wird schlussendlich auf den Ort, wo Insekten bekämpft werden sollen, entweder als trockener Staub oder als Emulsion in Wasser oder einer anderen Flüssigkeit ausgebracht. Typische Träger für Spritzpulver beinhalten, Fuller-Erde, Kaolintone, Siliciumdioxide sowie sonstige stark absorbierende leicht zu benetzende anorganische Streckmittel. Spritzpulver werden normalerweise so hergestellt, dass sie ungefähr 5-80% Wirkstoff enthalten, je nach der Absorptionsfähigkeit des Trägers, und sie enthalten üblicherweise auch eine kleine Menge an Netzmittel, Dispergiermittel oder Emulgator, um das Dispergieren zu erleichtern. So enthält zum Beispiel eine nützliche Spritzpulverformulierung 80,0 Teile insektizide Verbindung, 17,9 Teile Palmetto-Ton und 1,0 Teil Natriumlignosulfonat und 0,3 Teile sulfonierten aliphatischen Polyester als Netzmittel. Zusätzliche Netzmittel und/oder Öle werden häufig einer Tankmischung zugegeben, um das Dispergieren auf dem Blattwerk der Pflanze zu erleichtern.

Weitere nützliche Formulierungen für insektizide Zwecke sind emulgierbare Konzentrate (ECs), bei denen es sich um homogene flüssige Zusammensetzungen, die in Wasser oder einem anderen Dispergiermittel dispergierbar sind, und die ausschließlich aus der insektiziden Verbindung und einem flüssigen oder festen Emulgator bestehen können, oder die auch einen flüssigen Träger wie Xylol, aromatische Schwerbenzine, Isophoron oder sonstige nichtflüchtige organische Lösungsmittel enthalten können, handelt. Für insektizide Zwecke werden diese Konzentrate in Wasser oder einem anderen flüssigen Träger dispergiert und normal als Spray auf die zu behandelnde Fläche ausgebracht. Der Gewichtsprozentsatz an essentiellem Wirkstoff kann je nach der Ausbringungsart der Zusammensetzung schwanken, umfasst jedoch im Allgemeinen 0,5 bis 95 Gew.-% Wirkstoff der insektiziden Zusammensetzung.

"Flowables" sind den ECs ähnlich, nur dass der Wirkstoff in einem flüssigen Träger, im Allgemeinen Wasser, suspendiert ist. "Flowables", wie ECs, können eine kleine Menge an Tensid beinhalten und enthalten typischerweise Wirkstoffe im Bereich von 0,5 bis 95 Gew.-%, häufig von 10 bis 50 Gew.-%, der Zusammensetzung. Für die Anwendung können "Flowables" mit Wasser oder einem anderen flüssigen Vehikel verdünnt werden und werden üblicherweise als Spray auf die zu behandelnde Fläche ausgebracht.

Zu typischen Netzmitteln, Dispergiermitteln oder Emulgatoren, die in landwirtschaftlichen Formulierungen verwendet werden, zählen die folgenden, sind jedoch nicht auf diese beschränkt: Alkyl- und Alkylarylsulfonate und -sulfate und ihre Natriumsalze; Alkylarylpolyetheralkohole; sulfatierte höhere Alkohole; Polyethylenoxide; sulfierte tierische und pflanzliche Öle; sulfierte Mineralöle; Fettsäureester von mehrwertigen Alkoholen und die Ethylenoxidaddukte solcher Ester; sowie das Addukt von langkettigen Mercaptanen und Ethylenoxid. Viele andere Arten von nützlichen Tensiden sind im Handel erhältlich. Werden Tenside verwendet, so umfassen diese üblicherweise 1 bis 15 Gew.-% der Zusammensetzung.

Zu weiteren nützlichen Formulierungen zählen Suspensionen des Wirkstoffs in einem relativ schwerflüchtigen Lösungsmittel wie Wasser, Weizenkeimöl, Kerosin, Propylengykol oder anderen geeigneten Lösungsmitteln.

Zu weiteren nützlichen Formulierungen für insektizide Zwecke zählen auch einfache Lösungen des Wirkstoffs in einem Lösungsmittel, in dem dieses in der gewünschten Konzentration vollständig löslich ist, wie Aceton, alkylierte Naphthalene, Xylol oder sonstige organische Lösungsmittel. Granulatförmige Formulierungen, in denen das Pestizid auf relativ groben Partikeln geträgert ist, eignen sich besonders für die Verteilung auf dem Luftweg oder für das Eindringen in die Bestandesdecke von Deckfrüchten. Sprays unter Druck, typischerweise Aerosole, in denen der Wirkstoff durch Verdampfen eines niedrig siedenden Dispergiermittellösungsmittelträgers in feinteiliger Form dispergiert ist, können ebenfalls verwendet werden. Wasserlösliche oder wasserdispergierbare Granulate sind freifließend, nicht staubend und leicht in Wasser löslich oder mischbar. Bei der Verwendung auf dem Feld durch den Landwirt können die granulatförmigen Formulierungen, emulgierbaren Konzentrate, "Flowables", wässrigen Emulsionen, Lösungen usw. mit Wasser auf eine Wirkstoffkonzentration im Bereich von zirka 0,1% oder 0,2% bis 1,5% oder 2% verdünnt werden.

Die Wirkstoffkombinationen können in ihren handelsüblichen Formulierungen sowie in den aus diesen Formulierungen bereiteten Anwendungsformen in Mischung mit anderen Wirkstoffen wie Insektiziden, Lockstoffen, Sterilantien, Bakteriziden, Akariziden, Nematiziden, Fungiziden, wachstumsregulierenden Stoffen, Herbiziden, Safenern, Düngemitteln oder Semiochemicals verwendet werden.

Die Wirkstoffkombinationen können bei der erfindungsgemäßen Verwendung als Insektizide in ihren handelsüblichen Formulierungen sowie in den aus diesen Formulierungen bereiteten Anwendungsformen ferner in Mischung mit Synergisten vorliegen. Synergisten sind Verbindungen, durch die die Wirkung der Wirkstoffe gesteigert wird, ohne dass der zugesetzte Synergist selbst aktiv wirksam sein muss.

Die erfindungsgemäßen Verwendung der Wirkstoffkombinationen kann beim Einsatz als Insektizide in ihren handelsüblichen Formulierungen sowie in den aus diesen Formulierungen bereiteten Anwendungsformen ferner in Mischungen mit Hemmstoffen erfolgen, die einen Abbau des Wirkstoffes nach Anwendung in der Umgebung der Pflanze, auf der Oberfläche von Pflanzenteilen oder in pflanzlichen Geweben vermindern.

Der Wirkstoffgehalt der aus den handelsüblichen Formulierungen bereiteten Anwendungsformen kann in weiten Bereichen variieren. Die Wirkstoffkonzentration der Anwendungsformen liegt im Bereich von 0,00000001 bis 95 Gew.-% Wirkstoff, vorzugsweise im Bereich von 0,00001 bis 50 Gew.-%.

Die Anwendung geschieht in einer den Anwendungsformen angepassten üblichen Weise.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Saatgut sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen, Injizieren und bei Vermehrungsmaterial, insbesondere bei Saatgut, weiterhin durch ein- oder mehrschichtiges Umhüllen.

Die erfindungsgemäße Behandlung der Pflanzen und Pflanzenteile mit den Wirkstoffkombinationen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Saatgut, weiterhin durch ein- oder mehrschichtiges Umhüllen.

Die erfindungsgemäßen Verfahren und Zusammensetzungen eignen sich nicht nur für die Behandlung von Pflanzen oder Pflanzenteilen, bei denen es sich nicht um Samen handelt, sondern auch besonders zur Behandlung von Saatgut. Ein großer Teil des durch tierische Schädlinge und durch Pathogene an Kultursorten verursachten Schadens entsteht bereits durch den Befall des Saatguts während der Lagerung und nach dem Säen des Saatguts in den Boden sowie während und unmittelbar nach der Keimung der Pflanzen. Diese Phase ist besonders kritisch, da die Wurzeln und Sprosse der wachsenden Pflanze besonders empfindlich sind und bereits ein geringer Schaden zum Absterben der ganzen Pflanze führen kann. Es besteht daher ein insbesondere großes Interesse daran, das Saatgut und die keimende Pflanze durch den Einsatz geeigneter Mittel zu schützen.

Die Bekämpfung von tierischen Schädlingen und/oder von phytopathogenen Pilzen und/oder von Mikroorganismen durch Behandeln des Saatguts von Pflanzen ist seit langem bekannt und ist Gegenstand ständiger Verbesserungen. Dennoch ergeben sich bei der Behandlung von Saatgut eine Reihe von Problemen, die nicht immer zufriedenstellend gelöst werden können. So ist es erstrebenswert, Verfahren zum Schutz des Saatguts und der keimenden Pflanze zu entwickeln, die das zusätzliche Ausbringen von Pflanzenschutzmitteln nach der Saat oder nach dem Keimen der Pflanzen überflüssig machen. Es ist weiterhin erstrebenswert, die Menge des eingesetzten Wirkstoffs dahingehend zu optimieren, dass das Saatgut und die keimende Pflanze vor dem Befall durch tierische Schädlinge bestmöglich geschützt werden, ohne jedoch die Pflanze selbst durch den eingesetzten Wirkstoff zu schädigen. Insbesondere sollten Verfahren zur Behandlung von Saatgut auch die intrinsischen insektiziden und fungiziden Eigenschaften transgener Pflanzen einbeziehen, um einen optimalen Schutz des Saatguts und auch der keimenden Pflanze bei einem minimalen Aufwand an Pflanzenschutzmitteln zu erreichen.

Die vorliegende Erfindung bezieht sich daher insbesondere auch auf ein Verfahren zum Schutz von Saatgut und keimenden Pflanzen vor dem Befall durch tierische Schädlinge und/oder phytopathogenen Pilzen und/oder Mikroorganismen, indem das Saatgut mit einer erfindungsgemäßen Kombination behandelt wird.

Die Erfindung umfasst ein Verfahren, bei dem das Saatgut gleichzeitig mit den Komponenten Verbindung der Formel (I) und gewünschtenfalls weiteren Wirkstoffen behandelt wird. Sie betrifft weiterhin ein Verfahren, bei dem das Saatgut mit der Verbindung der Formel (I) und gewünschtenfalls weiteren Wirkstoffen getrennt behandelt wird.

Die Erfindung umfasst auch ein Saatgut, das mit einer Verbindung der Formel (I) und gewünschtenfalls weiteren Wirkstoffen gleichzeitig oder getrennt behandelt worden ist und das noch eine wirksame Menge an diesen Wirkstoffen enthält. Für dieses letztgenannte Saatgut können die Wirkstoffe in getrennten Schichten aufgetragen werden. Diese Schichten können gewünschtenfalls durch eine zusätzliche Schicht, die gegebenenfalls einen Wirkstoff enthält, getrennt sein.

Das Zeitintervall zwischen der Aufbringung der unterschiedlichen Schichten der unterschiedlichen Verbindungen ist im Allgemeinen nicht kritisch.

Zusätzlich betrifft die Erfindung auch die Verwendung der erfindungsgemäßen Kombination für die Behandlung von Saatgut für den Schutz von Saatgut und von keimenden Pflanzen gegen tierische Schädlinge und/oder phytopathogene Pilze und/oder Mikroorganismen. Weiterhin betrifft die Erfindung Saatgut, das mit einem erfindungsgemäßen Mittel zwecks Schutz gegen tierische Schädlinge und/oder phytopathogene Pilze und/oder Mikroorganismen behandelt worden ist.

Einer der Vorteile der Erfindung ist, dass aufgrund der besonderen systemischen Eigenschaften der erfindungsgemäßen Mittel die Behandlung mit diesen Mitteln nicht nur das Saatgut selbst, sondern auch die daraus nach dem Aufgehen hervorgehenden Pflanzen gegen tierische Schädlinge und/oder phytopathogene Pilze und/oder Mikroorganismen schützt. Auf diese Weise kann die unmittelbare Behandlung der Kultur zum Zeitpunkt der Aussaat oder kurz danach entfallen.

Die erfindungsgemäßen Mittel eignen sich zum Schutz von Saatgut jeglicher Pflanzensorte wie bereits vorstehend genannt, die in der Landwirtschaft, im Gewächshaus, in Forsten, im Gartenbau oder im Weinbau eingesetzt wird. Insbesondere handelt es sich dabei um Saatgut von Mais, Erdnuss, Canola, Raps, Mohn, Kakao, Soja, Baumwolle, Rübe (z.B. Zuckerrübe und Futterrübe), Reis, Hirse, Weizen, Gerste, Hafer, Roggen, Sonnenblume, Zuckerrohr, Gemüsen oder Tabak. Die erfindungsgemäßen Mittel eignen sich ebenfalls zur Behandlung des Saatguts von Gemüse wie bereits vorstehend beschrieben. Besondere Bedeutung kommt der Behandlung des Saatguts von Mais, Soja, Baumwolle, Reis, Weizen und Canola oder Raps zu.

Wie bereits beschrieben ist die Behandlung von transgenem Saatgut mit einem erfindungsgemäßen Mittel von besonderer Bedeutung. Dies betrifft die Saatgüter von Pflanzen, die im Allgemeinen mindestens ein heterologes Gen, das die Expression eines Polypeptids mit speziellen insektiziden Eigenschaften kontrolliert, enthalten. Das heterologe Gen in transgenem Saatgut kann von Mikroorganismen wie Bacillus, Rhizobium, Pseudomonas, Serratia, Trichoderma, Clavibacter, Glomus oder Gliocladium stammen. Die vorliegende Erfindung eignet sich besonders für die Behandlung von transgenem Saatgut, das mindestens ein heterologes Gen enthält, welches aus Bacillus sp. stammt und dessen Genprodukt eine Wirksamkeit gegen den Maiszünsler und/oder den westlichen Maiswurzelbohrer aufweist. Besonders bevorzugt ist ein heterologes Gen, das aus Bacillus thuringiensis stammt.

Im Rahmen der vorliegenden Erfindung wird das erfindungsgemäße Mittel alleine oder in einer geeigneten Formulierung auf das Saatgut aufgebracht. Vorzugsweise wird das Saatgut in einem Zustand gehandhabt, in dem es so stabil ist, dass keine Schäden bei der Behandlung auftreten. Im Allgemeinen kann die Behandlung des Saatguts zu jedem Zeitpunkt zwischen der Ernte und der Aussaat erfolgen. Üblicherweise wird Saatgut verwendet, das von der Pflanze getrennt und von Kolben, Schalen, Stängeln, Schoten, Wolle oder Fruchtfleisch befreit wurde. So kann zum Beispiel Saatgut verwendet werden, das geerntet, gereinigt und bis zu einem Feuchtigkeitsgehalt von unter 15 Gew.-% getrocknet wurde. Alternativ kann auch Saatgut verwendet werden, das nach dem Trocknen z.B. mit Wasser behandelt und dann erneut getrocknet wurde.

Im Allgemeinen muss bei der Behandlung des Saatguts darauf geachtet werden, dass die Menge des auf das Saatgut aufgebrachten erfindungsgemäßen Mittels und/oder weiterer Zusatzstoffe so gewählt wird, dass die Keimung des Saatguts nicht beeinträchtigt bzw. die daraus hervorgehende Pflanze nicht geschädigt wird. Dies ist vor allem bei Wirkstoffen zu beachten, die in bestimmten Aufwandmengen phytotoxische Effekte zeigen können.

Die erfindungsgemäßen Mittel können unmittelbar aufgebracht werden, also ohne weitere Komponenten zu enthalten und ohne verdünnt worden zu sein. In der Regel ist es bevorzugt, die Mittel in Form einer geeigneten Formulierung auf das Saatgut aufzubringen. Geeignete Formulierungen und Verfahren für die Saatgutbehandlung sind dem Fachmann bekannt und werden z.B. in den folgenden Dokumenten beschrieben: US 4,272,417 A, US 4,245,432 A, US 4,808,430 A, US 5,876,739 A, US 2003/0176428 A1, WO 2002/080675 A1, WO 2002/028186 A2.

Zusammensetzungen, die sich für die Saatgutbehandlung besonders eignen, sind zum Beispiel:
A Lösliche Konzentrate (SL, LS)
D Emulsionen (EW, EO, ES)
E Suspensionen (SC, OD, FS)
F Wasserdispergierbare Granulate und wasserlösliche Granulate (WG, SG)
G Wasserdispergierbare Pulver und wasserlösliche Pulver (WP, SP, WS)
H Gel-Formulierungen (GF)
I Stäubemittel (DP, DS)

Zu traditionellen Formulierungen für die Saatgutbehandlung zählen zum Beispiel "Flowables" FS, Lösungen LS, Trockenbeizen DS, Schlammbeizen WS, Nassbeizen SS und Emulsionen ES und EC und Gelformulierungen GF. Diese Formulierungen können auf das Saatgut verdünnt oder unverdünnt ausgebracht werden. Die Ausbringung auf Saatgüter erfolgt vor dem Säen, und zwar entweder direkt auf die Saatgüter oder nach dem Vorkeimen der letzteren. FS-Formulierungen sind bevorzugt.

Bei der Behandlung von Saatgut betragen die Aufwandmengen der erfindungsgemäßen Kombination im Allgemeinen 0,1 bis 10 kg pro 100 kg Saatgut. Die getrennte oder gemeinsame Ausbringung der Verbindung I und II oder der Kombinationen der Verbindungen I und II erfolgt durch Spritz- oder Stäubebehandlung der Saatgüter, Keimpflanzen, Pflanzen oder Böden vor oder nach dem Säen der Pflanzen oder vor oder nach dem Auflaufen der Pflanzen.

Die Erfindung betrifft auch die Vermehrungsprodukte von Pflanzen, insbesondere das Saatgut, das eine wie oben definierte Kombination oder eine Kombination enthaltend die Kombination von zwei oder mehr Wirkstoffen oder eine Kombination von zwei oder mehr Zusammensetzungen, die jeweils einen der Wirkstoffe enthält, umfasst, also damit beschichtet ist und/oder diese enthält. Das Saatgut umfasst die erfindungsgemäßen Kombinationen in einer Menge von 0,1 bis 10 kg pro 100 kg Saatgut.

Die Zusammensetzung, die eine Kombination von Pestiziden umfasst, kann "als solche" ausgebracht werden, d.h. ohne dass Streckmittel oder sonstige Komponenten vorliegen. Typischerweise wird diese Zusammensetzung jedoch auf die Saatgüter in Form einer Pestizidformulierung ausgebracht. Diese Formulierung kann eine oder mehrere sonstige erwünschte Komponenten enthalten, darunter auch, jedoch nicht einschränkend, 50 flüssige Verdünnungsmittel/Streckmittel, Bindemittel, die als Matrix für das Pestizid dienen, Füllstoffe zum Schützen der Saatgüter während Stressbedingungen und Weichmacher zur Verbesserung der Flexibilität, des Haftens und/oder des Spreizens der Beschichtung. Bei öligen Pestizidformulierungen, die wenig oder keinen Füllstoff enthalten, kann es weiterhin wünschenswert sein, 55 zu den Formulierungstrocknungsmitteln zuzugeben, wie Calciumcarbonat, Kaolin oder Bentonitton, Perlit, Diatomeenerde oder ein beliebiges sonstiges Adsorptionsmittel. Die Verwendung von solchen Komponenten bei Saatgutbehandlungen ist fachbekannt; siehe z.B. U.S.-Patent Nr. 5,876,739. Der Fachmann kann leicht wünschenswerte 60 Komponenten für die Verwendung in der Pestizidformulierung auswählen, je nach der Art des zu behandelnden Saatguts und dem jeweiligen gewählten Pestizid. Weiterhin können fertig verfügbare im Handel erhältliche Formulierungen von bekannten Pestiziden verwendet werden, wie in den Beispielen unten gezeigt wird.

Die Saatgüter können auch mit einem oder mehreren der folgenden Bestandteile behandelt werden: sonstige Pestizide, darunter auch Verbindungen, die nur unter der Erde wirken; Fungizide wie Captan, Thiram, Metalxyl, Fludioxonil, Oxadixyl sowie Isomere von jeder dieser Substanzen und dergleichen; Herbizide, darunter Verbindungen ausgewählt aus der Reihe der Acetamide, Triazine, Dinitroaniline, Glycerinether, Pyridazinone, Uracile, Phenoxyverbindungen, Harnstoffe und Benzoesäure; Herbizid-Safener wie Benzoxazin, Benzhydrylderivative, N,N-Diallyl dichloracetamid, verschiedene Dihalogenacyle, Oxazolidinyl- und Thiazolidinylverbindungen, Ethanon, Naphthalinsäureanhydridverbindungen sowie Oximderivative; Düngemittel; und biologische Schädlingsbekämpfungsmittel wie natürlich vorkommende oder rekombinante Bakterien oder Pilze der Gattungen Rhizobium, Bacillus, Pseudomonas, Serratia, Trichoderma, Glomus, Gliociadium und Mycorrhiza-Pilze. Diese Bestandteile können als eigene Schicht auf dem Saatgut zugegeben werden oder auch als Teil der Pestizidzusammensetzung zugegeben werden.

Vorzugsweise sollte die Menge der neuen Zusammensetzung oder der sonstigen bei der Saatgutbehandlung verwendeten Bestandteile nicht die Keimung des Saatguts hemmen oder phytotoxische Schäden an dem Saatgut verursachen.

Die erfindungsgemäße Zusammensetzung kann in Form einer Suspension, einer Emulsion, einer Aufschlämmung von Partikeln in einem wässrigen Medium (z.B. Wasser), einem Spritzpulver, einem Spritzgranulat ("dry flowable") und einem Trockengranulat vorliegen. Bei Formulierung als Suspension oder Aufschlämmung beträgt die Konzentration des Wirkstoffs in der Formulierung vorzugsweise ungefähr 0,5 Gew.-% bis 99 Gew.-% (w/w), vorzugsweise 5-40%.

Wie oben erwähnt können sonstige traditionelle inaktive oder inerte Bestandteile in die Formulierung eingearbeitet werden. Zu solchen inerten Bestandteilen zählen, jedoch nicht einschränkend, traditionelle Haftmittel, Dispergiermittel wie Methylzellulose (Methocel A15LV oder Methocel A15C dienen zum Beispiel als kombiniertes Dispergiermittel/Haftmittel für Saatgutbehandlungen), Polyvinylalkohol (z.B. Elvanol 51-05), Lecithin (z.B. Yelkinol P), polymere Dispergiermittel (z.B. Polyvinylpyrrolidon/Vinylacetat PVP/VA S-630), Verdickungsmittel (z.B. Tonverdickungsmittel wie Van Gel B zur Verbesserung der Viskosität und Verringerung des Absetzens von Partikelsuspensionen), Emulsionsstabilisatoren, Tenside, Frostschutzmittel (z.B. Harnstoff), Farbstoffe, Färbemittel und dergleichen. Weitere inerte Bestandteile, die sich für die vorliegende Erfindung eignen, finden sich in McCutcheon's, Band 1, "Emulsifiers and Detergents" MC Publishing Company, Glen Rock, N.J., U.S.A., 1996. Zusätzliche inerte Bestandteile, die sich für die vorliegende Erfindung eignen, finden sich in McCutcheon's, Band 2, "FunctionalMaterials," MC Publishing Company, Glen Rock, N.J., U.S.A., 1996.

Die erfindungsgemäßen Pestizide, Zusammensetzungen von Pestizidkombinationen und Formulierungen können auf Saatgüter nach einer beliebigen üblichen Saatgutbehandlungsmethode aufgebracht werden, darunter auch, jedoch nicht einschränkend, Mischungen in einem Behältnis (z.B. einer Flasche oder einem Beutel), mechanisches Auftragen, Taumeln, Sprühen und Tauchen. Zum In-Kontakt-Bringen von Saatgütern mit erfindungsgemäßen Pestiziden können traditionelle Aktiv- oder Inertmaterialien verwendet werden, wie traditionelle Filmbildner, darunter auch, jedoch nicht einschränkend, Filmbildner auf Wasserbasis wie Sepiret (Seppic, Inc., Fairfield, N.J.) und Opacoat (Berwind Pharm. Services, Westpoint, Pa.).

*Saatgutbeschichtung:* Die vorliegende Kombination von Pestiziden kann auf Saatgut als Komponente einer Saatgutbeschichtung aufgetragen werden. Es eignen sich fachbekannte Saatgutbeschichtungsmethoden und -zusammensetzungen, wenn sie durch Zusatz von einer der Ausführungsformen der erfindungsgemäßen Kombination von Pestiziden modifiziert werden. Solche Beschichtungsmethoden und -geräte für ihre Aufbringung sind zum Beispiel in den US-Patenten Nr. 5,918,413, 5,891,246, 5,554,445, 5,389,399, 5,107,787, 5,080,925, 4,759,945 und 4,465,017 beschrieben. Saatgutbeschichtungszusammensetzungen sind zum Beispiel unter anderem in den US-Patenten Nr. 5,939,356, 5,882,713, 5,876,739, 5,849,320, 5,834,447, 5,791,084, 5,661,103, 5,622,003, 5,580,544, 5,328,942, 5,300,127, 4,735,015, 4,634,587, 4,383,391, 4,372,080, 4,339,456, 4,272,417 und 4,245,432 beschrieben. Geeignete Saatgutbeschichtungen enthalten ein oder mehrere Bindemittel und mindestens eine der vorliegenden Kombinationen von Pestiziden.

Bindemittel, die sich für die vorliegende Erfindung eignen, umfassen vorzugsweise ein Klebstoffpolymer, das natürlich oder synthetisch sein kann und das auf das zu beschichtende Saatgut keine phytotoxische Wirkung ausübt. Das Bindemittel kann aus der folgenden Reihe ausgewählt sein: Polyvinylacetate, Polyvinylacetatcopolymere, Polyvinylalkohole, Polyvinylalkoholcopolymere, Cellulosen, darunter Ethylcellulosen, Methylcellulosen, Hydroxymethylcellulosen, Hydroxypropylcellulosen und Carboxymethylcellulose, Polyvinylpyrrolidone, Polysaccharide, darunter Stärke, modifizierte Stärke, Dextrine, Maltodextrine, Alginat und Chitosane, Fette, Öle, Proteine, darunter Gelatine und Zeine, Gummi-Arabicum-Arten, Schellack-Arten Vinylidenchlorid und Vinylidenchloridcopolymere, Calciumlignosulfonate, Acrylsäurecopolymere, Polyvinylacrylate, Polyethylenoxid, Acrylamidpolymere und -copolymere, Polyhydroxyethylacrylat, Methylacrylamidmonomere und Polychloropren.

Der Binder wird vorzugsweise so ausgewählt, dass er als Matrix für die vorliegende Kombination von Pestiziden dienen kann. Obwohl sich alle die obengenannten Bindemittel als Matrix eignen können, wird das spezifische Bindemittel von den Eigenschaften der Kombination der Pestizide abhängen. Der Ausdruck "Matrix" bedeutet im vorliegenden Zusammenhang eine kontinuierliche feste Phase von einer oder mehreren Bindemittelverbindungen, in der als diskontinuierliche Phase eine oder mehrere der vorliegenden Kombinationen von Pestiziden verteilt ist. Gegebenenfalls können auch ein Füllstoff und/oder andere Komponenten in der Matrix vorhanden sein. Der Ausdruck Matrix soll auch das beinhalten, was als ein Matrixsystem, ein Reservoirsystem oder ein mikroverkapseltes System angesehen werden kann. Im Allgemeinen besteht ein Matrixsystem aus einer erfindungsgemäßen Kombination von Pestiziden und Füllstoff, die einheitlich innerhalb eines Polymers dispergiert sind, während ein Reservoirsystem aus einer getrennten Phase, die die vorliegende Kombination von Pestiziden umfasst, welche physikalisch innerhalb einer umgebenden, die Abgabegeschwindigkeit begrenzenden polymeren Phase dispergiert ist, besteht. Die Mikroverkapselung beinhaltet die Beschichtung von kleinen Partikeln oder Tröpfchen einer Flüssigkeit, jedoch auch Dispersionen, in einer festen Matrix.

Die Menge an Bindemittel in der Beschichtung kann schwanken, wird jedoch im Bereich von ungefähr 0,01 bis ungefähr 25 Gew.-% des Saatguts, stärker bevorzugt von ungefähr 0,05 bis ungefähr 15%, noch stärker bevorzugt von ungefähr 0,1% bis ungefähr 10%, liegen.

Wie oben erwähnt kann die Matrix gegebenenfalls einen Füllstoff beinhalten. Bei dem Füllstoff kann es sich um einen fachbekannten absorbierenden oder inerten Füllstoff handeln, darunter Holzmehle, Tone, Aktivkohle, Zucker, Diatomeenerde, Getreidemehle, feinteilige anorganische Feststoffe, Calciumcarbonat und dergleichen. Zu Tonen und anorganischen Feststoffen, die verwendet werden können, zählen Calciumbentonit, Kaolin, Porzellanerde, Talk, Perlit, Glimmer, Vermiculit, Siliciumdioxide, Quarzpulver, Montmorillonit und deren Mischungen. Zu Zuckern, die sich eignen können, zählen Dextrin und Maltodextrin. Zu Getreidemehlen zählen Weizenmehl, Hafermehl und Gerstenmehl.

Die Auswahl des Füllstoffs erfolgt so, dass dieser ein geeignetes Mikroklima für das Saatgut bereitstellt, so wird zum Beispiel der Füllstoff dazu verwendet, um die Menge der Beladung mit den Wirkstoffen zu erhöhen und die kontrollierte Freisetzung der Wirkstoffe einzustellen. Der Füllstoff kann als Hilfe bei der Herstellung oder beim Vorgang der Saatgutbeschichtung dienen. Die Füllstoffmenge kann schwanken, das Gewicht der Füllstoffkomponenten wird jedoch im Allgemeinen im Bereich von ungefähr 0,05 bis ungefähr 75 Gew.-% des Saatguts, stärker bevorzugt von ungefähr 0,1 bis ungefähr 50%, noch stärker bevorzugt von ungefähr 0,5% bis 15% liegen.

Die Pestizide, die sich für die Beschichtung eignen, sind die im vorliegenden Text beschriebenen Kombinationen von Pestiziden. Die Pestizidmenge, die in der Beschichtung eingearbeitet ist, wird in Abhängigkeit von der Art des Saatguts und der Art der Wirkstoffe variieren, die Beschichtung wird jedoch eine pestizidwirksame Menge der Kombination von Pestiziden enthalten. Handelt es sich bei den den Angriffspunkt darstellenden tierischen Schädlingen um Insekten, so wird es sich bei der Menge um eine insektizidwirksame Menge der Kombination von Insektiziden handeln. Im vorliegenden Zusammenhang bedeutet eine insektizidwirksame Menge diejenige Menge an Insektizid, die Schadinsekten im Larven- oder Puppenstadium ihres Wachstums abtötet oder die das durch Schadinsekten verursachte Schadensausmaß beträchtlich reduziert oder verzögert. Im Allgemeinen wird die Pestizidmenge in der Beschichtung im Bereich von ungefähr 0,005 bis 50 Gew.-% des Saatguts liegen. Ein stärker bevorzugter Bereich des Pestizids ist ungefähr 0,01 bis ungefähr 40%, stärker bevorzugt ist ungefähr 0,05 bis ungefähr 20%.

Die genaue Menge der Kombination von Pestiziden, die in der Beschichtung eingearbeitet ist, wird vom Fachmann leicht bestimmt und wird von der Größe des zu beschichtenden Saatguts abhängen. Die Pestizide der Beschichtung dürfen die Keimung des Saatguts nicht hemmen und sollten eine Schutzwirkung für das Saatgut und/oder die Pflanze während derjenigen Zeit im Lebenszyklus des als Angriffspunkt dienenden Insekts bereitstellen, während der es Schaden am Saatgut oder an der Pflanze verursacht. Im Allgemeinen wird die Beschichtung ungefähr 0 bis 120 Tage nach dem Säen wirksam sein.

Die Beschichtung ist besonders wirksam für das Aufnehmen von hohen Beladungen mit Pestizid, wie dies für die Bekämpfung von typisch schwer zu bekämpfenden Schädlingen wie dem Maiswurzelbohrer erforderlich sein kann, wobei gleichzeitig eine nichtannehmbare Phytotoxizität aufgrund der erhöhten Beladung mit dem Pestizid vermieden wird.

Gegebenenfalls kann ein Weichmacher in der Beschichtungsformulierung verwendet werden. Weichmacher werden typischerweise dafür verwendet, um den Film, der von der Beschichtungsschicht gebildet wird, flexibler zu gestalten, um die Adhäsion und das Spreiten zu verbessern und um die Verarbeitungsgeschwindigkeit zu erhöhen. Eine verbesserte Filmflexibilität ist für die Minimierung des Abplatzens, Brechens oder Abflockens während der Lagerungs-, Handhabungs- oder Sävorgänge wichtig. Es können viele Weichmacher eingesetzt werden. Zu nützlichen Weichmachern zählen jedoch Polyethylenglykol, Glycerin, Butylbenzylphthalat, Glykolbenzoate und verwandte Verbindungen. Die Menge an Weichmacher in der Beschichtungsschicht wird im Bereich von ungefähr 0,1 bis ungefähr 20 Gew.-% liegen.

Handelt es sich bei der bei der Beschichtung verwendeten Pestizidkombination um eine ölartige Formulierung und ist nur wenig oder kein Füllstoff vorhanden, so kann es sinnvoll sein, den Trocknungsvorgang durch Trocknen der Formulierung zu beschleunigen. Dieser optionale Schritt kann mit im Fachgebiet allgemein bekannten Mitteln erfolgen und kann die Zugabe von Calciumcarbonat, Kaolin- oder Bentonitton, Perlit, Diatomeenerde oder einem beliebigen absorbierenden Material beinhalten, wobei die Zugabe vorzugsweise gleichzeitig mit der Pestizidbeschichtungsschicht zur Absorption des Öls oder überschüssiger Feuchtigkeit erfolgt. Die Menge an Calciumcarbonat oder verwandten Verbindungen, die zur effektiven Bereitstellung einer trockenen Beschichtung notwendig ist, liegt dabei im Bereich von ungefähr 0,5 bis ungefähr 10 Gew.-% des Saatguts.

Die mit der Kombination von Pestiziden gebildeten Beschichtungen eignen sich dafür, eine langsame Freisetzungsgeschwindigkeit des Pestizids durch Diffusion oder Bewegung durch die Matrix an das umgebende Medium zu bewirken.

Die Beschichtung kann auf beinahe alle im vorliegenen Text beschriebenen Kulturpflanzensaatgüter aufgebracht werden, darunter Baumwolle, Mais, Soja, Raps, Reis, Getreide und Gemüse.

Zusätzlich zu der Beschichtungsschicht kann das Saatgut mit einem oder mehreren der folgenden Bestandteile behandelt werden: sonstige Pestizide, darunter Fungizide und Herbizide, Herbizid-Safener, Düngemittel und/oder biologische Schädlingsbekämpfungsmittel. Diese Bestandteile können als getrennte Schicht hinzugefügt werden oder auch in der pestiziden Beschichtungsschicht zugesetzt werden.

Die Pestizidformulierung kann auf die Saatgüter unter Verwendung von traditionellen Beschichtungstechniken und -geräten aufgebracht werden, wie Wirbelbetttechniken, der Weizenmühlenmethode, Rotor/Stator-Beizmaschinen und Trommelbeschichtungsmaschinen. Andere Methoden wie Sprudelbetten können sich ebenfalls eignen. Die Saatgüter können vor der Beschichtung klassiert werden (Größe 5). Nach der Beschichtung werden die Saatgüter typischerweise getrocknet und dann zur Klassierung in eine Klassierungsmaschine gegeben. Solche Vorgehensweisen sind fachbekannt.

Die pestizidbehandelten Saatgüter können auch mit einer Filmabschlussschicht umschlossen werden, um die Pestizidbeschichtung zu schützen. Solche Abschlussschichten sind fachbekannt und können unter Verwendung von traditionellen Wirbelbett- und Trommel-Filmbeschichtungstechniken aufgebracht werden.

In einer weiteren Ausführungsform der vorliegenden Erfindung kann ein Pestizid auf oder in ein Saatgut dadurch eingeführt werden, dass man eine Vorbehandlung mit einer festen Matrix verwendet. So kann zum Beispiel eine gewisse Menge des Pestizids mit einem festen Matrixmaterial vermischt werden und das Saatgut kann dann mit dem festen Matrixmaterial so lange in Kontakt gebracht werden, dass das Pestizid in das Saatgut eingetragen wird. Das Saatgut kann dann gegebenenfalls von dem festen Matrixmaterial abgetrennt und gelagert oder verwendet werden, oder die Mischung aus festem Matrixmaterial und Saatgut kann direkt gelagert oder ausgepflanzt werden. Zu festen Matrixmaterialien, die sich für die vorliegende Erfindung eignen, zählen Polyacrylamid, Stärke, Ton, Siliciumdioxid, Aluminiumdioxid, Erde, Sand, Polyharnstoff, Polyacrylat und jegliches andere Material, das fähig ist, das Pestizid für eine gewisse Zeit zu absorbieren oder adsorbieren und dieses Pestizid in oder auf das Saatgut freizusetzen. Es ist nützlich sicherzustellen, dass das Pestizid und das feste Matrixmaterial miteinander verträglich sind. So sollte das feste Matrixmaterial zum Beispiel so gewählt werden, dass es das Pestizid mit einer adäquaten Geschwindigkeit, zum Beispiel im Verlauf von Minuten, Stunden oder Tagen, freisetzen kann.

Eine weitere Ausführungsform der vorliegenden Erfindung ist das Tränken als weiteres Verfahren zur Behandlung von Saatgut mit dem Pestizid. Zum Beispiel kann pflanzliches Saatgut für einen gewissen Zeitraum mit einer Lösung, die ungefähr 1 Gew.-% bis ungefähr 75 Gew.-% des Pestizids in einem Lösungsmittel wie Wasser umfasst, zusammengegeben werden. Vorzugsweise beträgt die Konzentration der Lösung ungefähr 5 Gew.-% bis ungefähr 50 Gew.-%, stärker bevorzugt ungefähr 10 Gew.-% bis ungefähr 25 Gew.-%. Während des Zeitraums, über den das Saatgut mit der Lösung kombiniert ist, nimmt das Saatgut einen Teil des Pestizids auf (bzw. wird damit getränkt). Gegebenenfalls kann die Mischung aus pflanzlichem Saatgut und Lösung bewegt werden, zum Beispiel durch Schütteln, Rollen, Taumeln oder auf andere Art und Weise. Nach dem Tränken kann das Saatgut von der Lösung abgetrennt und gegebenenfalls getrocknet werden, zum Beispiel durch Trockentupfen oder Trocknen an der Luft.

In einer weiteren Ausführungsform kann ein pulverförmiges Pestizid direkt mit Saatgut vermischt werden. Gegebenenfalls kann ein Klebemittel eingesetzt werden, um das Pulver an der Oberfläche des Saatguts haften zu lassen. So kann zum Beispiel eine gewisse Menge Saatgut mit einem Klebemittel vermischt werden und gegebenenfalls bewegt werden, um eine einheitliche Beschichtung des Saatguts mit dem Klebemittel zu fördern. Das mit dem Klebemittel beschichtete Saatgut kann dann mit dem pulverförmigen Pestizid vermischt werden. Die Mischung kann zum Beispiel durch Taumeln bewegt werden, um den Kontakt zwischen dem Klebemittel und dem pulverförmigen Pestizid zu fördern, was dazu führt, dass das pulverförmige Pestizid an dem Saatgut kleben bleibt.

Die vorliegende Erfindung stellt auch ein Saatgut, das mit dem obenbeschriebenen Verfahren behandelt worden ist, bereit. Die erfindungsgemäßen behandelten Saatgüter können für die Vermehrung von Pflanzen wie traditionelle behandelte Saatgüter eingesetzt werden. Die behandelten Saatgüter können auf gleiche Art und Weise wie irgendwelche anderen mit Pestizid behandelten Saatgüter gelagert, gehandhabt, gesät und angebaut werden. Es sollten entsprechende Sicherheitsmaßnahmen getroffen werden, um den Kontakt des behandelten Saatguts mit dem Menschen, mit Nahrungs- oder Futtermitteln, mit dem Wasser und mit Vögeln und wildlebenden Tieren oder Haustieren einzuschränken.

## Patentansprüche

1. Verfahren zur Verbesserung der Nutzung des Produktionspotentials einer transgenen Pflanze durch Bekämpfung von tierischen Schädlingen und/oder durch Verbesserung der Pflanzengesundheit und/oder durch Verbesserung der abitoischen Stressresistenz, bei dem die transgene Pflanze mit einer wirksamen Menge mindestens einer Verbindung der Formel (I) 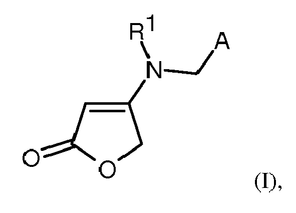 in welcher
A für Pyrid-2-yl oder Pyrid-4-yl steht oder für Pyrid-3-yl, welches gegebenenfalls in 6-Position substituiert ist durch Fluor, Chlor, Brom, Methyl, Trifluormethyl oder Trifluormethoxy oder für Pyridazin-3-yl, welches gegebenenfalls in 6-Position substituiert ist durch Chlor oder Methyl oder für Pyrazin-3-yl oder für 2-Chlor-pyrazin-5-yl oder für 1,3-Thiazol-5-yl, welches gegebenenfalls in 2-Position substituiert ist durch Chlor oder Methyl, oder
A für einen Rest Pyrimidinyl, Pyrazolyl, Thiophenyl, Oxazolyl, Isoxazolyl, 1,2,4-Oxadiazolyl, Isothiazolyl, 1,2,4-Triazolyl oder 1,2,5-Thiadiazolyl steht, welcher gegebenenfalls durch Fluor, Chlor, Brom, Cyano, Nitro, C₁-C₄-Alkyl (welches gegebenenfalls durch Fluor und/oder Chlor substituiert ist), C₁-C₃-Alkylthio (welches gegebenenfalls durch Fluor und/oder Chlor substituiert ist), oder C₁-C₃-Alkylsulfonyl (welches gegebenenfalls durch Fluor und/oder Chlor substituiert ist), substituiert ist,
oder
A für einen Rest 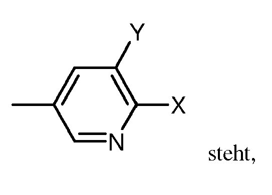 in welchem
X für Halogen, Alkyl oder Halogenalkyl steht
Y für Halogen, Alkyl, Halogenalkyl, Halogenalkoxy, Azido oder Cyan steht und R¹ für Alkyl, Halogenalkyl, Alkenyl, Halogenalkenyl, Alkinyl, Cycloalkyl, Cycloalkylalkyl, Halogencycloalkyl, Alkoxy, Alkoxyalkyl, oder Halogencycloalkylalkyl steht,
behandelt wird.

2. Verfahren nach Anspruch 1, **dadurch gekennzeichnet, dass** die transgene Pflanze
a) aus der Reihe der in Tabelle A: A-1 bis A-133 aufgelisteten Pflanzen stammt oder
b) aus der Reihe der in Tabelle B: B-1 bis B-85 aufgelisteten Pflanzen stammt oder
c) aus der Reihe der in Tabelle E: E-1 bis E-50 aufgelisteten Pflanzen stammt oder
d) ein oder mehrere transgene Event(s) aus der Reihe der in Tabelle A von A-1 bis A-133 oder Tabelle B von B-1 bis B-85 oder Tabelle D von D-1 bis D-48 aufgelisteten transgenen Events umfasst oder
e) ein Merkmal, das auf einem oder mehreren transgenen Event(s) wie in Tabelle C von C-1 bis C-12 aufgelistet basiert, umfasst.

3. Verfahren nach Anspruch 1 oder 2, **dadurch gekennzeichnet, dass** in der Verbindung der Formel (I)
A für den Rest 6-Fluor-pyrid-3-yl, 6-Chlor-pyrid-3-yl, 6-Brom-pyrid-3-yl, 6-Chlor-1,4-pyridazin-3-yl, 2-Chlor-1,3-thiazol-5-yl, 2-Chlor-pyrimidin-5-yl, 5-Fluor-6-chlor-pyrid-3-yl, 5,6-Dichlor-pyrid-3-yl, 5-Brom-6-chlor-pyrid-3-yl, 5-Fluor-6-brom-pyrid-3-yl, 5-Chlor-6-brom-pyrid-3-yl, 5,6-Dibrom-pyrid-3-yl, 5-Methyl-6-chlor-pyrid-3-yl, 5-Chlor-6-iod-pyrid-3-yl oder 5-Difluormethyl-6-chlor-pyrid-3-yl steht und
R¹ für Methyl, Methoxy, Ethyl, Propyl, Vinyl, Allyl, Propargyl, Cyclopropyl, 2-Fluorethyl, 2,2-Difluor-ethyl oder 2-Fluor-cyclopropyl steht.

4. Verfahren nach einem der Ansprüche 1 bis 3, **dadurch gekennzeichnet, dass** in der Verbindung der Formel (I)
A für den Rest 6-Fluor-pyrid-3-yl, 6-Chlor-pyrid-3-yl, 6-Brom-pyrid-3-yl, 5-Fluor-6-chlor-pyrid-3-yl, 2-Chlor-1,3-thiazol-5-yl oder 5,6-Dichlor-pyrid-3-yl steht und
R¹ für Methyl, Cyclopropyl, Methoxy, 2-Fluorethyl oder 2,2-Difluor-ethyl steht.

5. Verfahren nach einem der Ansprüche 1 bis 4, **dadurch gekennzeichnet, dass** die Verbindung der Formel (I) ausgewählt ist aus der Gruppe bestehend aus den Verbindungen der Formeln (I-1), (I-2), (I-3), (I-4), (I-5), (I-6), (I-7), (I-8), (I-9) und (I-10).

6. Verfahren nach einem der Ansprüche 1 bis 5, **dadurch gekennzeichnet, dass** die Verbindung der Formel (I) die Verbindung der Formel (I-5) ist.

7. Verfahren nach einem der Ansprüche 1 bis 6, wobei als Angriffspunkt Stämme der tierischen Schädlinge dienen, die gegenüber den transgenen Events, die der Pflanze eine Resistenz gegen die Wildtyp-Stämme oder sensitiven Stämme des genannten tierischen Schädlings verleihen, zumindest teilweise resistent oder tolerant sind.

8. Verfahren nach einem der Ansprüche 1 bis 7, **dadurch gekennzeichnet, daß** es sich bei der transgenen Pflanze um eine Gemüse-, Mais-, Soja-, Baumwoll-, Tabak-, Reis-, Zuckerrüben-, Raps- oder Kartoffelpflanze handelt.

9. Verfahren nach einem der Ansprüche 1 bis 8, wobei gemeinsam mit der mindestens einen Verbindung der Formel (I) ein zusätzlicher insektizider, akarizider oder nematizider Wirkstoff verwendet wird, wobei dieser Wirkstoff aus der Gruppe bestehend aus Acephat, Chlorpyrifos, Diazinon, Dichlorvos, Dimethoat, Fenitrothion, Methamidophos, Methidathion, Methyl-parathion, Monocrotophos, Phorat, Profenofos, Terbufos, Aldicarb, Carbaryl, Carbofuran, Carbosulfan, Methomyl, Thiodicarb, Bifenthrin, Cyfluthrin, Cypermethrin, alpha-Cypermethrin, zeta-Cypermethrin, Deltamethrin, Esfenvalerat, lambda-Cyhalothrin, Permethrin, Tefluthrin, Transfluthrin, Diflubenzuron, Flufenoxuron, Lufenuron, Teflubenzuron, Spirotetramat, Clothianidin, Dinotefuran, Imidacloprid, Thiamethoxam, Acetamiprid, Thiacloprid, Endosulfan, Fipronil, Abamectin, Emamectin, Spinosad, Spinetoram, Hydramethylnon, Chlorfenapyr, Fenbutatin-oxid, Indoxacarb, Metaflumizon, Flonicamid, Flubendiamid, Chlorantraniliprol, Cyazypyr (HGW86), Cyflumetofen und Sulfoxaflor ausgewählt ist.

10. Verfahren nach einem der Ansprüche 1 bis 8, wobei gemeinsam mit der mindestens einen Verbindung der Formel (I) ein zusätzlicher fungizider Wirkstoff verwendet wird, wobei dieser Wirkstoff aus der Gruppe bestehend aus Azoxystrobin, Dimoxystrobin, Kresoxim-methyl, Orysastrobin, Pyraclostrobin, Trifloxystrobin, Bixafen, Boscalid, Isopyrazam, Metalaxyl, Penthiopyrad, 3-Difluormethyl-1-methyl-1H-pyrazol-4-carbonsäure-(2',4',5'-trifluorbiphenyl-2-yl)-amid, N-(2-Bicyclopropyl-2-yl-phenyl)-3-difluormethyl-1-methyl-1H-pyrazol-4-carbonsäureamid, Dimethomorph, Fluopicolid, Difenoconazol, Ipconazol, Epoxiconazol, Fluquinconazol, Flusilazol, Flutriafol, Metconazol, Myclobutanil, Propiconazol, Prothioconazol, Tebuconazol, Tetraconazol, Triticonazol, Prochloraz, Carbendazim, Fluazinam, Cyprodinil, Pyrimethanil, Fludioxonil, Dodemorph, Fenpropimorph, Tridemorph, Fenpropidin, Iprodion, Vinclozolin, Famoxadon, Probenazol, Captan, Folpet, 5-Ethyl-6-octyl-[1,2,4]triazolo[1,5-a]pyrimidin-7-ylamin, Mancozeb, Maneb, Metiram, Thiram, Dithianon, Fosetyl, Fosetyl-aluminium, Chlorthalonil, Thiophanat-methyl, Cymoxanil, Metrafenon, Spiroxamin, Fluopyram, Flutianil, Isopyrazam, Sedaxane, N-(3',4',5'-Trifluorbiphenyl-2-yl)- 3-difluormethyl-1-methyl-1H-pyrazol-4-carboxamid, N-[2-(4'-Trifluormethylthio)biphenyl]-3-difluormethyl-1-methyl-1H-pyrazol-4-carboxamid, N-[2-(1,3-Dimethylbutyl)phenyl]-1,3-dimethyl-5-fluor-1H-pyrazol-4-carboxamid, N-(2-Bicyclopropyl-2-ylphenyl)-3-difluormethyl-1-methyl-1H-pyrazol-4-carboxamid, N-(cis-2-Bicyclopropyl-2-ylphenyl)-3-difluormethyl-1-methyl-1H-pyrazol-4-carboxamid, N-(trans-2-Bicyclopropyl-2-ylphenyl)-3-difluormethyl-1-methyl-1H-pyrazol-4-carboxamid, und N-[1,2,3,4-Tetrahydro-9-(1-methylethyl)-1,4-methanonaphthalin-5-yl]-3-(difluorinethyl)-1-methyl-1H-pyrazol-4-carboxamid ausgewählt ist.

11. Verfahren nach einem der Ansprüche 1 bis 10, wobei ein Saatgut behandelt wird.

12. Verfahren nach einem der Ansprüche 1 bis 11 zur Verbesserung der Pflanzengesundheit.

13. Verfahren nach einem der Ansprüche 1 bis 12 zur Verbesserung der abiotischen Stressresistenz.
